(19) 

Europäisches
Patentamt
European
Patent Office
Office européen
des brevets

(11) **EP 4 444 006 A1**

(12) **EUROPEAN PATENT APPLICATION**
published in accordance with Art. 153(4) EPC

(43) Date of publication:
**09.10.2024 Bulletin 2024/41**

(21) Application number: **22919028.5**

(22) Date of filing: **07.12.2022**

(51) International Patent Classification (IPC):
***H04W 72/04*** *(2023.01)*

(52) Cooperative Patent Classification (CPC):
**H04W 72/04**

(86) International application number:
**PCT/KR2022/019805**

(87) International publication number:
**WO 2023/132491 (13.07.2023 Gazette 2023/28)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **05.01.2022 KR 20220001667**

(71) Applicant: **Samsung Electronics Co., Ltd
Suwon-si, Gyeonggi-do 16677 (KR)**

(72) Inventors:
• **JANG, Youngrok
  Suwon-si, Gyeonggi-do 16677 (KR)**
• **PARK, Kyoungmin
  Suwon-si, Gyeonggi-do 16677 (KR)**
• **ABEBE, Ameha Tsegaye
  Suwon-si, Gyeonggi-do 16677 (KR)**
• **LIM, Seongmok
  Suwon-si, Gyeonggi-do 16677 (KR)**
• **JI, Hyoungju
  Suwon-si, Gyeonggi-do 16677 (KR)**

(74) Representative: **Nederlandsch Octrooibureau
P.O. Box 29720
2502 LS The Hague (NL)**

(54) **METHOD AND APPARATUS FOR DETERMINING BEAM FOR TRANSMISSION AND
RECEPTION OF DOWNLINK CONTROL INFORMATION IN WIRELESS COMMUNICATION
SYSTEM**

(57) The present disclosure relates to a communication technique for combining an IoT technology with a 5G communication system for supporting a higher data transmission rate than that of a beyond-4G system, and a system therefor. The present disclosure may be applied to intelligent services (for example, smart homes, smart buildings, smart cities, smart cars or connected cars, healthcare, digital education, retail business, security and safety-related services, etc.) on the basis of 5G communication technologies and IoT-related technologies. The present disclosure provides a method and an apparatus for applying a plurality of unified transmission configuration indicators (TCIs) in a wireless communication system.

EP 4 444 006 A1

# FIG. 1

One subframe (110)

$N_{symb}^{subframe,\mu}$ OFDM symbols

1 OFDM symbols (102)

1 subcarrier (103)

$K = N_{RB,x}^{max,\mu} N_{sc}^{RB} - 1$

$N_{RB}^{\mu} N_{sc}^{RB}$ subcarriers

Resource block $N_{sc}^{RB}$ subcarriers (104)

Resource element (k,l) (101)

Frequency

$K = 0$

$\bar{l} = 0$

$\bar{l} = 14 \cdot 2^{\mu} - 1$

Time

**Description**

[Technical Field]

The disclosure relates to the operation of a terminal and a base station in a wireless communication system. Specifically, the disclosure relates to a method for determining a beam for transmission and reception of downlink control information in a wireless communication system and an apparatus capable of performing the same.

[Background Art]

To meet the demand for wireless data traffic having increased since deployment of 4G communication systems, efforts have been made to develop an improved 5G or pre-5G communication system. Therefore, the 5G communication system is also called a "beyond 4G network" communication system or a "post LTE" system. The 5G communication system is considered to be implemented in ultrahigh frequency (mmWave) bands (e.g., 60GHz (80GHz) bands) so as to accomplish higher data rates. To decrease the propagation loss of the radio waves and increase the transmission distance of radio waves in the ultrahigh frequency (mmWave) bands, beamforming, massive multiple-input multiple-output (massive MIMO), full dimensional MIMO (FD-MIMO), array antenna, an analog beam forming, and large scale antenna techniques have been discussed in the 5G communication system. In addition, in the 5G communication system, technical development for system network improvement is under way based on evolved small cells, advanced small cells, cloud radio access networks (cloud RANs), ultra-dense networks, device-to-device (D2D) communication, wireless backhaul, moving network, cooperative communication, coordinated multi-points (CoMPs), reception-end interference cancellation, and the like. In the 5G system, hybrid FSK and QAM modulation (FQAM) and sliding window superposition coding (SWSC) as an advanced coding modulation (ACM) scheme, and filter bank multi carrier (FBMC), non-orthogonal multiple access (NOMA), and sparse code multiple access (SCMA) as an advanced access technology have also been developed.

The Internet, which is a human centered connectivity network where humans generate and consume information, is now evolving to the Internet of things (IoT) where distributed entities, such as things, exchange and process information without human intervention. The Internet of everything (IoE), which is a combination of the IoT technology and the big data processing technology through a connection with a cloud server, etc. has emerged. As technology elements, such as "sensing technology", "wired/wireless communication and network infrastructure", "service interface technology", and "security technology" have been demanded for IoT implementation, a sensor network, a machine-to-machine (M2M) communication, machine type communication (MTC), and so forth have recently been researched. Such an IoT environment may provide intelligent Internet technology (IT) services that create a new value to human life by collecting and analyzing data generated among connected things. IoT may be applied to a variety of fields including smart home, smart building, smart city, smart car or connected cars, smart grid, health care, smart appliances and advanced medical services through convergence and combination between existing information technology (IT) and various industrial applications.

In line with this, various attempts have been made to apply the 5G communication system (5th generation communication systems or new radio (NR)) to IoT networks. For example, technologies such as a sensor network, machine type communication (MTC), and machine-to-machine (M2M) communication are implemented by beamforming, MIMO, and array antenna techniques that are 5G communication technologies. Application of a cloud radio access network (cloud RAN) as the above-described big data processing technology may also be considered an example of convergence of the 5G technology with the IoT technology.

With the advance of wireless communication systems as described above, various services can be provided, and accordingly there is a need for ways to smoothly provide these services.

[Disclosure of Invention]

[Technical Problem]

Disclosed embodiments are to provide an apparatus and a method capable of effectively providing services in a mobile communication system. Specifically, a method and an apparatus for effectively transmitting downlink control information are disclosed.

[Solution to Problem]

In order to solve the above problems, the disclosure provides a method performed by a terminal in a communication system, the method including receiving signaling indicating multiple unified transmission configuration indication (TCI) states from a base station, receiving, from the base station via higher layer signaling, information indicating that one TCI state among the multiple unified TCI states for a control resource set (CORESET) is applied, identifying, based on the information, what unified TCI state is applied to a specific CORESET, receiving a physical downlink control channel (PDCCH) from the specific CORESET based on the applied unified TCI state, and transmitting and receiving data based on downlink control information (DCI), which has been received on the PDCCH based on the applied unified TCI state.

Further, a method performed by a base station in a communication system includes transmitting signaling indicating multiple unified transmission configuration indication (TCI) states to a terminal, and transmitting, to the terminal via higher layer signaling, information indicating that one TCI state among the multiple unified TCI states for a control resource set (CORESET) is applied, wherein, based on the information, what unified TCI state is applied to a specific CORESET is identified, wherein, based on the applied unified TCI state, a physical downlink control channel (PDCCH) is received from the specific CORESET, and wherein data is transmitted and received based on downlink control information (DCI), which has been received on the PDCCH based on the applied unified TCI state.

Furthermore, a terminal in a communication system includes a transceiver, and a controller configured to perform control to receive signaling indicating multiple unified transmission configuration indication (TCI) states from a base station, receive, from the base station via higher layer signaling, information indicating that one TCI state among the multiple unified TCI states for a control resource set (CORESET) is applied, identify, based on the information, what unified TCI state is applied to a specific CORESET, receive a physical downlink control channel (PDCCH) from the specific CORESET based on the applied unified TCI state, and transmit and receive data based on downlink control information (DCI), which has been received on the PDCCH based on the applied unified TCI state.

In addition, a base station in a communication system includes a transceiver, and a controller configured to perform control to transmit signaling indicating multiple unified transmission configuration indication (TCI) states to a terminal, and transmit, to the terminal via higher layer signaling, information indicating that one TCI state among the multiple unified TCI states for a control resource set (CORESET) is applied, wherein, based on the information, what unified TCI state is applied to a specific CORESET is identified, wherein, based on the applied unified TCI state, a physical downlink control channel (PDCCH) is received from the specific CORESET, and wherein data is transmitted and received based on downlink control information (DCI), which has been received on the PDCCH based on the applied unified TCI state.

[Advantageous Effects of Invention]

Disclosed embodiments provide an apparatus and a method capable of effectively providing services in a mobile communication system. Specifically, a method and an apparatus capable of effectively transmitting and receiving downlink control information are provided.

[Brief Description of Drawings]

FIG. 1 is a diagram illustrating a basic structure of a time-frequency domain in a wireless communication system according to an embodiment of the disclosure.

FIG. 2 is a diagram illustrating a structure of a frame, a subframe, and a slot in a wireless communication system according to an embodiment of the disclosure.

FIG. 3 is a diagram illustrating an example of bandwidth part configuration in a wireless communication system according to an embodiment of the disclosure.

FIG. 4 is a diagram illustrating an example of CORESET configuration of a downlink control channel in a wireless communication system according to an embodiment of the disclosure.

FIG. 5 is a diagram illustrating a structure of a downlink control channel in a wireless communication system according to an embodiment of the disclosure.

FIG. 6 is a diagram illustrating an example of base station beam allocation according to TCI state configuration in a wireless communication system according to an embodiment of the disclosure.

FIG. 7 is a diagram illustrating an example of a method for allocating a TCI state to a PDCCH in a wireless communication system according to an embodiment of the disclosure.

FIG. 8 is a diagram illustrating a TCI indication MAC CE signaling structure for a PDCCH DMRS in a wireless communication system according to an embodiment of the disclosure.

FIG. 9 is a diagram illustrating an example of beam configuration with regard to a control resource set and a search space in a wireless communication system according to an embodiment of the disclosure.

FIG. 10 is a diagram illustrating a method in which, upon receiving a downlink control channel, a UE selects a receivable CORESET in view of priority in a wireless communication system according to an embodiment of the disclosure.

FIG. 11 is a diagram illustrating an example of frequency domain resource allocation with regard to a PDSCH in a wireless communication system according to an embodiment of the disclosure.

FIG. 12 is a diagram illustrating an example of time domain resource allocation with regard to a PDSCH in a wireless communication system according to an embodiment of the disclosure.

FIG. 13 is a diagram illustrating an example of time domain resource allocation according to a subcarrier spacing with regard to a data channel and a control channel in a wireless communication system according to an embodiment of the disclosure.

FIG. 14A is a diagram illustrating a process for beam configuration and activation with regard to a PDSCH.

FIG. 14B illustrates an example of a MAC-CE structure for PDSCH TCI state activation/deactivation;

FIG. 15 is a diagram illustrating an example of PUSCH repeated transmission type B in a wireless communication system according to an embodiment of the disclosure.

FIG. 16 is a diagram illustrating radio protocol structures of a base station and a UE in single cell, carrier aggregation, and dual connectivity situations in a wireless communication system according to an embodiment of the disclosure.

FIG. 17 illustrates an example of an antenna port configuration and resource allocation for cooperative communication in a wireless communication system according to an embodiment of the disclosure;

FIG. 18 illustrates an example of configuration of downlink control information (DCI) for cooperative communication in a wireless communication system according to an embodiment of the disclosure;

FIG. 19 illustrates an enhanced PDSCH TCI state activation/deactivation MAC-CE structure;

FIG. 20 illustrates a MAC-CE structure for joint TCI state activation and indication in a wireless communication system according to an embodiment of the disclosure;

FIG. 21 illustrates another MAC-CE structure for joint TCI state activation and indication in a wireless communication system according to an embodiment of the disclosure;

FIG. 22 illustrates yet another MAC-CE structure for joint TCI state activation and indication in a wireless communication system according to an embodiment of the disclosure;

FIG. 23 illustrates a MAC-CE structure for separate TCI state activation and indication in a wireless communication system according to an embodiment of the disclosure;

FIG. 24 illustrates another MAC-CE structure for separate TCI state activation and indication in a wireless communication system according to an embodiment of the disclosure;

FIG. 25 illustrates yet another MAC-CE structure for separate TCI state activation and indication in a wireless communication system according to an embodiment of the disclosure;

FIG. 26 illustrates still another MAC-CE structure for separate TCI state activation and indication in a wireless communication system according to an embodiment of the disclosure;

FIG. 27 illustrates a MAC-CE structure for joint and separate TCI state activation and indication in a wireless communication system according to an embodiment of the disclosure;

FIG. 28 illustrates another MAC-CE structure for joint and separate TCI state activation and indication in a wireless communication system according to an embodiment of the disclosure;

FIG. 29 illustrates a beam application time which may be considered when using a unified TCI scheme in a wireless communication system according to an embodiment of the disclosure;

FIG. 30 illustrates a MAC-CE structure for activating and indicating a plurality of joint TCI states in a wireless communication system according to an embodiment of the disclosure;

FIG. 31 illustrates a MAC-CE structure for activating and indicating a plurality of separate TCI states in a wireless communication system according to an embodiment of the disclosure;

FIG. 32 illustrates another MAC-CE structure for activating and indicating a plurality of separate TCI states in a wireless communication system according to an embodiment of the disclosure;

FIG. 33 illustrates a method of determining a TCI state of a downlink control channel to minimize the number of beam changes in a slot in a wireless communication system according to an embodiment of the disclosure;

FIG. 34 illustrates an enhanced PDCCH TCI state activation MAC-CE according to an embodiment of the disclosure;

FIG. 35 is a diagram illustrating a structure of a UE in a wireless communication system according to an embodiment of the disclosure.

FIG. 36 is a diagram illustrating a structure of a base station in a wireless communication system according to an embodiment of the disclosure.

[Mode for the Invention]

Hereinafter, embodiments of the disclosure will be described in detail with reference to the accompanying drawings.

In describing the embodiments, descriptions related to technical contents well-known in the relevant art and not associated directly with the disclosure will be omitted. Such an omission of unnecessary descriptions is intended to prevent obscuring of the main idea of the disclosure and more clearly transfer the main idea.

For the same reason, in the accompanying drawings, some elements may be exaggerated, omitted, or schematically illustrated. Furthermore, the size of each element does not completely reflect the actual size. In the respective drawings, identical or corresponding elements are provided with identical reference numerals.

The advantages and features of the disclosure and ways to achieve them will be apparent by making reference to embodiments as described below in detail in conjunction with the accompanying drawings. However, the disclosure is not limited to the embodiments set forth below, but may be implemented in various different forms. The following embodiments are provided only to completely disclose the disclosure and inform those skilled in the art of the scope of the disclosure, and the disclosure is defined only by the scope of the appended claims. Throughout the specification, the same or like reference signs indicate the same or like elements. Furthermore, in describing the disclosure, a detailed description of known functions or configurations incorporated herein will be omitted when it is determined that the description may make the subject matter of the disclosure unnecessarily unclear. The terms which will be described below are terms defined in consideration of the functions in the disclosure, and may be different according to users, intentions of the users, or customs. Therefore, the definitions of the terms should be made based on the contents throughout the specification.

In the following description, a base station is an entity that allocates resources to terminals, and may be at least one of a gNode B, an eNode B, a Node B, a base station (BS), a wireless access unit, a base station controller, and a node on a network. A terminal may include a user equipment (UE), a mobile station (MS), a cellular phone, a smartphone, a computer, or a multimedia system capable of performing a communication function. In the disclosure, a "downlink (DL)" refers to a radio link via which a base station transmits a signal to a terminal, and an "uplink (UL)" refers to a radio link via which a terminal transmits a signal to a base station. Furthermore, in the following description, LTE or LTE-A systems may be described by way of example, but the embodiments of the disclosure may also be applied to other communication systems having similar technical backgrounds or channel types to the embodiments of the disclosure. Examples of such communication systems may include 5th generation mobile communication technologies (5G, new radio, and NR) developed beyond LTE-A, and in the following description, the "5G" may be the concept that covers the exiting LTE, LTE-A, and other similar services. In addition, based on determinations by those skilled in the art, the disclosure may be applied to other communication systems through some modifications without significantly departing from the scope of the disclosure.

Herein, it will be understood that each block of the flowchart illustrations, and combinations of blocks in the flowchart illustrations, can be implemented by computer program instructions. These computer program instructions can be provided to a processor of a general-purpose computer, special purpose computer, or other programmable data processing apparatus to produce a machine, such that the instructions, which execute via the processor of the computer or other programmable data processing apparatus, create means for implementing the functions specified in the flowchart block or blocks. These computer program instructions may also be stored in a computer usable or computer-readable memory that can direct a computer or other programmable data processing apparatus to function in a particular manner, such that the instructions stored in the computer usable or computer-readable memory produce an article of manufacture including instruction means that implement the function specified in the flowchart block or blocks. The computer program instructions may also be loaded onto a computer or other programmable data processing apparatus to cause a series of operational steps to be performed on the computer or other programmable apparatus to produce a computer implemented process such that the instructions that execute on the computer or other programmable apparatus provide steps for implementing the functions specified in the flowchart block or blocks.

Furthermore, each block in the flowchart illustrations may represent a module, segment, or portion of code, which includes one or more executable instructions for implementing the specified logical function(s). It should also be noted that in some alternative implementations, the functions noted in the blocks may occur out of the order. For example, two blocks shown in succession may in fact be executed substantially concurrently or the blocks may sometimes be executed in the reverse order, depending upon the functionality involved.

As used in embodiments of the disclosure, the "unit" refers to a software element or a hardware element, such as a Field Programmable Gate Array (FPGA) or an Application Specific Integrated Circuit (ASIC), which performs a predetermined function. However, the "unit" does not always have a meaning limited to software or hardware. The "unit" may be constructed either to be stored in an addressable storage medium or to execute one or more processors. Therefore, the "unit" includes, for example, software elements, object-oriented software elements, class elements or task elements, processes, functions, properties, procedures, sub-routines, segments of a program code, drivers, firmware, micro-codes, circuits, data, database, data structures, tables, arrays, and parameters. The elements and functions provided by the "unit" may be either combined into a smaller number of elements, or a "unit", or divided into a larger number of elements, or a "unit". Moreover, the elements and "units" or may be implemented to reproduce one or more CPUs within a device or a security multimedia card. Furthermore, the "unit" in the embodiments may include one or more processors.

A wireless communication system is advancing to a broadband wireless communication system for providing high-speed and high-quality packet data services using communication standards, such as high-speed packet access (HSPA) of 3GPP, LTE (long-term evolution or evolved universal terrestrial radio access (E-UTRA)), LTE-Advanced (LTE-A), LTE-Pro, high-rate packet data (HRPD) of 3GPP2, ultramobile broadband (UMB), IEEE 802.16e, and the like, as well as typical voice-based services.

As a typical example of the broadband wireless communication system, an LTE system employs an orthogonal frequency division multiplexing (OFDM) scheme in a downlink (DL) and employs a single carrier frequency division multiple access (SC-FDMA) scheme in an uplink (UL). The uplink refers to a radio link via which a user equipment (UE) or a mobile station (MS) transmits data or control signals to a base station (BS) or eNode B, and the downlink refers to a radio link via which the base station transmits data or control signals to the UE. The above multiple access scheme may separate data or control information of respective users by allocating and operating time-frequency resources for transmitting the data or control information for each user so as to avoid overlapping each other, that is, so as to establish orthogonality.

Since a 5G communication system, which is a post-LTE communication system, must freely reflect various requirements of users, service providers, and the like, services satisfying various requirements must be supported. The services considered in the 5G communication system include enhanced mobile broadband (eMBB) communication, massive machine-type communication (mMTC), ultrareliability low-latency communication (URLLC), and the like.

eMBB aims at providing a data rate higher than that supported by existing LTE, LTE-A, or LTE-Pro. For example, in the 5G communication system, eMBB must provide a peak data rate of 20 Gbps in the downlink and a peak data rate of 10 Gbps in the uplink for a single base station. Furthermore, the 5G communication system must provide an increased user-perceived data rate to the UE, as well as the maximum data rate. In order to satisfy such requirements, transmission/reception technologies including a further enhanced multi-input multi-output (MIMO) transmission technique are required to be improved. In addition, the data rate required for the 5G communication system may be obtained using a frequency bandwidth more than 20 MHz in a frequency band of 3 to 6 GHz or 6 GHz or more, instead of transmitting signals using a transmission bandwidth up to 20 MHz in a band of 2 GHz used in LTE.

In addition, mMTC is being considered to support application services such as the Internet of Things (IoT) in the 5G communication system. mMTC has requirements, such as support of connection of a large number of UEs in a cell, enhancement coverage of UEs, improved battery time, a reduction in the cost of a UE, and the like, in order to effectively provide the Internet of Things. Since the Internet of Things provides communication functions while being provided to various sensors and various devices, it must support a large number of UEs (e.g., 1,000,000 UEs/km$^2$) in a cell. In addition, the UEs supporting mMTC may require wider coverage than those of other services provided by the 5G communication system because the UEs are likely to be located in a shadow area, such as a basement of a building, which is not covered by the cell due to the nature of the service. The UE supporting mMTC must be configured to be inexpensive, and may require a very long battery life-time such as 10 to 15 years because it is difficult to frequently replace the battery of the UE.

Lastly, URLLC is a cellular-based mission-critical wireless communication service. For example, URLLC may be used for services such as remote control for robots or machines, industrial automation, unmanned aerial vehicles, remote health care, and emergency alert. Thus, URLLC must provide communication with ultralow latency and ultra-high reliability. For example, a service supporting URLLC must satisfy an air interface latency of less than 0.5 ms, and also requires a packet error rate of $10^{-5}$ or less. Therefore, for the services supporting URLLC, a 5G system must provide a transmit time interval (TTI) shorter than those of other services, and also may require a design for assigning a large number of resources in a frequency band in order to secure reliability of a communication link.

The three services in 5G, that is, eMBB, URLLC, and mMTC, may be multiplexed and transmitted in a single system. In this case, different transmission/reception techniques and transmission/reception parameters may be used between services in order to satisfy different requirements of the respective services. Of course, 5G is not limited to the three services described above.

[NR time-frequency resources]

Hereinafter, a frame structure of a 5G system will be described in more detail with reference to the accompanying drawings.

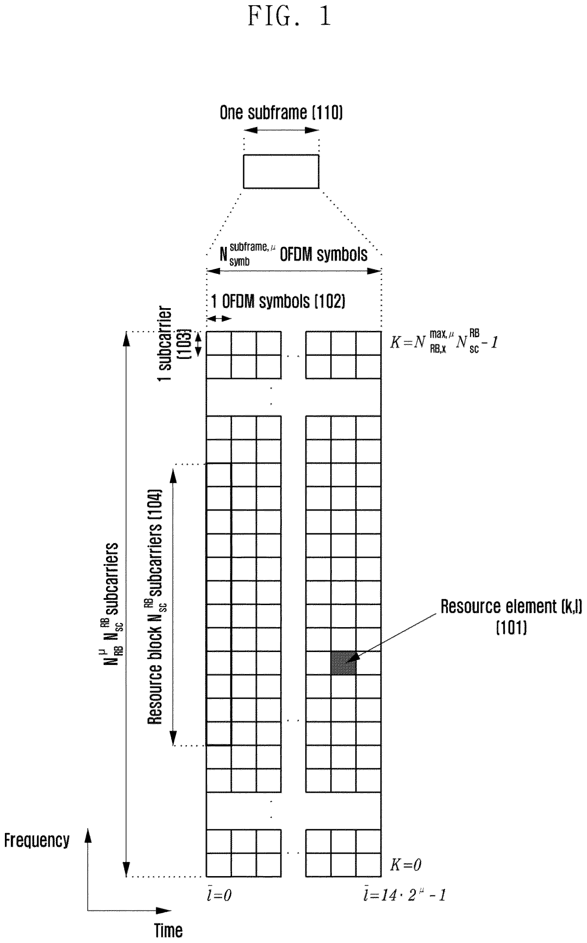

FIG. 1 illustrates a basic structure of a time-frequency domain, which is a radio resource domain used to transmit data or control channels, in a 5G system.

In FIG. 1, the horizontal axis denotes a time domain, and the vertical axis denotes a frequency domain. The basic unit of resources in the time-frequency domain is a resource element (RE) 101, which may be defined as one orthogonal frequency division multiplexing (OFDM) symbol 102 on the time axis and one subcarrier 103 on the frequency axis. In the time domain, one subframe 110 may include $Nsymb_{symb}^{subframe}$ OFDM symbols.

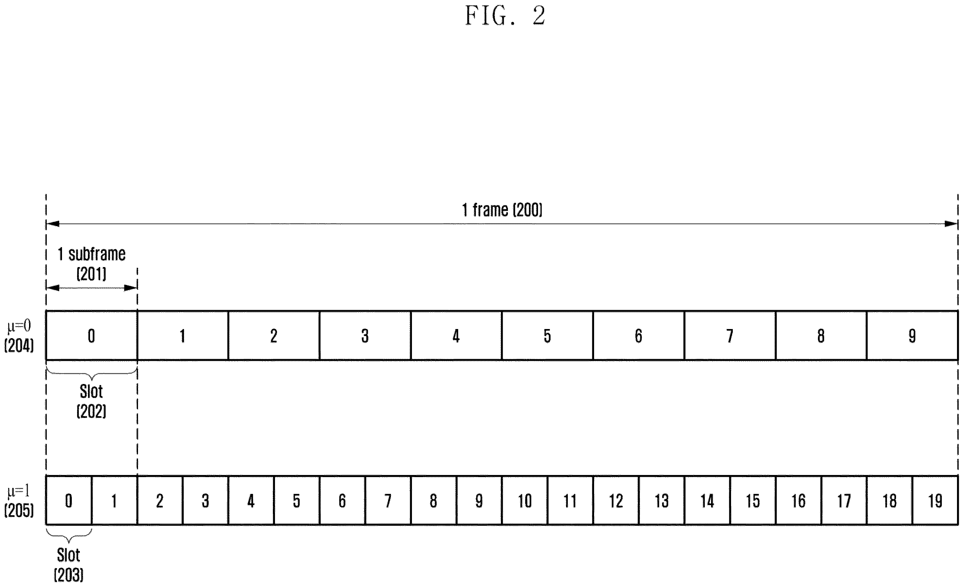

FIG. 2 illustrates a structure of frames, subframes, and slots in a wireless communication system according to an embodiment of the disclosure.

FIG. 2 illustrates an example of a structure of a frame 200, a subframe 201, and a slot 202. One frame 200 may be defined as 10ms. One subframe 201 may be defined as 1ms, and thus one frame 200 may include a total of ten subframes 201. One slot 202 or 203 may be defined as 14 OFDM symbols (that is, the number of symbols per one slot $N_{symb}^{slot}=14$). One subframe 201 may include one slot or multiple slots 202 and 203, and the number of slots 202 and 203 per one subframe 201 may differ depending on configuration values μ 204 and 205 regarding the subcarrier spacing. The example in FIG. 2 illustrates a case in which the subcarrier spacing configuration value is μ=0 (204), and a case in which μ=1 (205). In the case of μ=0 (204), one subframe 201 may include one slot 202. I, and in the case of μ=1 (205), one subframe 201 may include two slots 203. That is, the number of slots per one subframe $N_{slot}^{sunframe,\mu}$ may differ depending on the subcarrier spacing configuration value μ, and the number of slots per one frame $N_{slot}^{frame,\mu}$ may differ accordingly. $N_{slot}^{sunframe,\mu}$ and $N_{slot}^{frame,\mu}$ may be defined according to each subcarrier spacing configuration μ as in Table 1 below.

[Table 1]

| μ | $N_{symb}^{slot}$ | $N_{slot}^{frame,\mu}$ | $N_{slot}^{sunframe,\mu}$ |
|---|---|---|---|
| 0 | 14 | 10 | 1 |
| 1 | 14 | 20 | 2 |
| 2 | 14 | 40 | 4 |
| 3 | 14 | 80 | 8 |
| 4 | 14 | 160 | 16 |
| 5 | 14 | 320 | 32 |

[Bandwidth part (BWP)]

Next, bandwidth part (BWP) configuration in a 5G communication system will be described in detail with reference to the accompanying drawings.

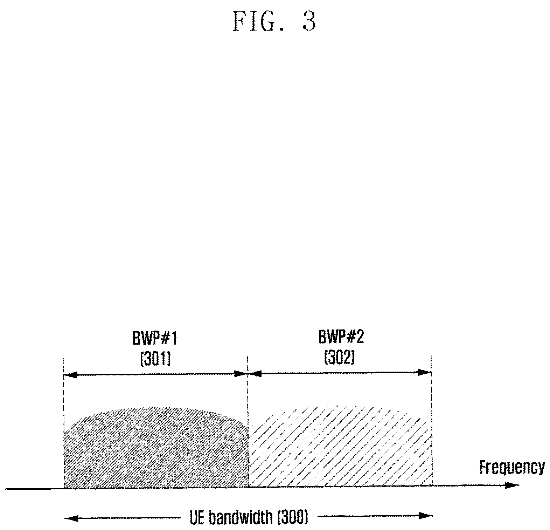

FIG. 3 illustrates an example of bandwidth part configuration in a wireless communication system according to an embodiment of the disclosure.

FIG. 3 illustrates an example in which a UE bandwidth 300 is configured to include two bandwidth parts, that is bandwidth part #1 (BWP#1) 301 and bandwidth part #2 (BWP#2) 302. A base station may configure one or multiple bandwidth parts for a UE, and may configure the following pieces of information with regard to each bandwidth part.

[Table 2]

```
BWP ::=                          SEQUENCE {
    bwp-Id                           BWP-Id,
    (bandwidth part identifier)
    locationAndBandwidth             INTEGER (1..65536),
    (bandwidth part location)
    subcarrierSpacing                ENUMERATED {n0, n1, n2, n3, n4, n5},
    (subcarrier spacing)
    cyclicPrefix                     ENUMERATED { extended }
    (cyclic prefix)
}
```

Obviously, the above example is not limiting, and various parameters related to the bandwidth part may be configured for the UE, in addition to the above configuration information. The above pieces of information in Table 2 may be transferred from the base station to the UE through upper layer signaling, for example, radio resource control (RRC) signaling. One configured bandwidth part or at least one bandwidth part among multiple configured bandwidth parts may be activated. Whether or not to activate a configured bandwidth part may be transferred from the base station to the UE semi-statically through RRC signaling, or dynamically through downlink control information (DCI).

According to some embodiment, the UE, prior to RRC connection, may have an initial BWP for initial access configured by the base station through a master information block (MIB). To be more specific, the UE may receive configuration information regarding a control resource set (CORESET) and a search space which may be used to transmit a PDCCH for receiving system information (which may correspond to remaining system information (RMSI) or system information block 1 (SIB1) necessary for initial access through the MIB in the initial access step. Each of the control resource set and the search space configured by the MIB may be considered as identity (ID) 0. The base station may notify the UE of configuration information, such as frequency allocation information, time allocation information, and numerology, regarding CORESET #0 through the MIB. In addition, the base station may notify the UE of configuration information regarding the monitoring cycle and occasion regarding CORESET #0, that is, configuration information regarding control resource set #0, through the MIB. The UE may consider that a frequency domain configured by CORESET #0 acquired from the MIB is an initial bandwidth part for initial access. The ID of the initial bandwidth part may be considered to be 0. The initial bandwidth part may be used not only for the purpose of receiving the SIB, but also for other system information (OSI), paging, random access, or the like.

The bandwidth part-related configuration supported by 5G may be used for various purposes.

According to some embodiments, if the bandwidth supported by the UE is smaller than the system bandwidth, this may be supported through the bandwidth part configuration. For example, the base station may configure the frequency location of the bandwidth part for the UE, so that the UE can transmit/receive data at a specific frequency location within the system bandwidth.

In addition, according to some embodiments, the base station may configure multiple bandwidth parts for the UE for the purpose of supporting different numerologies. For example, in order to support a UE's data transmission/reception using both a subcarrier spacing of 15kHz and a subcarrier spacing of 30kHz, two bandwidth parts may be configured as subcarrier spacings of 15kHz and 30kHz, respectively. Different bandwidth parts may be subjected to frequency division multiplexing (FDM), and when data is to be transmitted/received at a specific subcarrier spacing, the bandwidth part configured as the corresponding subcarrier spacing may be activated.

In addition, according to an embodiment, the base station may configure bandwidth parts having different sizes of bandwidths for the UE for the purpose of reducing power consumed by the UE. For example, if the UE supports a substantially large bandwidth (for example, 100MHz) and always transmits/receives data with the corresponding bandwidth, a substantially large amount of power consumption may occur. Particularly, it may be substantially inefficient from the viewpoint of power consumption to unnecessarily monitor the downlink control channel with a large bandwidth of 100MHz in the absence of traffic. In order to reduce power consumed by the UE, the base station may configure a bandwidth part of a relatively small bandwidth (for example, a bandwidth part of 20MHz) for the UE. The UE may perform a monitoring operation in the 20MHz bandwidth part in the absence of traffic, and may transmit/receive data with the 100MHz bandwidth part as instructed by the base station if data has occurred.

In connection with the bandwidth part configuring method, UEs, before being RRC-connected, may consider the bandwidth of the CORESET configured by the MIB as the initial bandwidth part, and may receive, through the configured initial bandwidth part, a physical downlink shared channel (PDSCH) through which an SIB is transmitted.

[Bandwidth part (BWP) change]

If a UE has one or more bandwidth parts configured therefor, the base station may instruct to the UE to change (or switch) the bandwidth parts by using a bandwidth part indicator field inside DCI. As an example, if the currently activated bandwidth part of the UE is bandwidth part #1 301 in FIG. 3, the base station may indicate bandwidth part #2 302 with a bandwidth part indicator inside DCI, and the UE may change the bandwidth part to bandwidth part #2 302 indicated by the bandwidth part indicator inside received DCI.

As described above, DCI-based bandwidth part changing may be indicated by DCI for scheduling a PDSCH or a PUSCH, and thus, upon receiving a bandwidth part change request, the UE needs to be able to receive or transmit the PDSCH or PUSCH scheduled by the corresponding DCI in the changed bandwidth part with no problem. To this end, requirements for the delay time ($T_{BWP}$) required during a bandwidth part change are specified in standards, and may be defined, for example, as follows.

[Table 3]

| $\mu$ | NR Slot length (ms) | BWP switch delay $T_{BWP}$ (slots) | |
|---|---|---|---|
| | | Type 1 [Note 1] | Type 2[Note 1] |
| 0 | 1 | 1 | 3 |
| 1 | 0.5 | 2 | 5 |
| 2 | 0.25 | 3 | 9 |
| 3 | 0.125 | 6 | 18 |
| Note 1: Depends on UE capability. | | | |
| Note 2: If the BWP switch involves changing of SCS, the BWP switch delay is determined by the larger one between the SCS before BWP switch and the SCS after BWP switch. | | | |

The requirements for the bandwidth part change delay time may support type 1 or type 2, depending on the capability of the UE. The UE may report the supportable bandwidth part delay time type to the base station.

If the UE has received DCI including a bandwidth part change indicator in slot n, according to the above-described requirement regarding the bandwidth part change delay time, the UE may complete a change to the new bandwidth part indicated by the bandwidth part change indicator at a timepoint not later than slot n+$T_{BWP}$, and may transmit/receive a data channel scheduled by the corresponding DCI in the newly changed bandwidth part. If the base station wants to schedule a data channel by using the new bandwidth part, the base station may determine time domain resource allocation regarding the data channel in consideration of the UE's bandwidth part change delay time ($T_{BWP}$). That is, when scheduling a data channel by using the new bandwidth part, the base station may schedule the corresponding data channel after the bandwidth part change delay time, in connection with the method for determining time domain resource allocation regarding the data channel. Accordingly, the UE may not expect that the DCI that indicates a bandwidth part change will indicate a slot offset (K0 or K2) value smaller than the bandwidth part change delay time ($T_{BWP}$).

If the UE has received DCI (for example, DCI format 1_1 or 0_1) indicating a bandwidth part change, the UE may perform no transmission or reception during a time interval from the third symbol of the slot used to receive a PDCCH including the corresponding DCI to the start point of the slot indicated by a slot offset (K0 or K2) value indicated by a time domain resource allocation indicator field in the corresponding DCI. For example, if the UE has received DCI indicating a bandwidth part change in slot n, and if the slot offset value indicated by the corresponding DCI is K, the UE may perform no transmission or reception from the third symbol of slot n to the symbol before slot n+K (that is, the last symbol of slot n+K-1).

[SS/PBCH block]

Next, synchronization signal (SS)/PBCH blocks in 5G will be described.

An SS/PBCH block may refer to a physical layer channel block including a primary SS (PSS), a secondary SS (SSS), and a PBCH. Details thereof are as follows.

- PSS: a signal which becomes a reference of downlink time/frequency synchronization, and provides partial information of a cell ID.
SSS: becomes a reference of downlink time/frequency synchronization, and provides remaining cell ID information not provided by the PSS. Additionally, the SSS may play the role of a reference signal for PBCH demodulation.
- PBCH: provides essential system information necessary for the UE's data channel and control channel transmission/reception. The essential system information may include search space-related control information indicating a control channel's radio resource mapping information, scheduling control information regarding a separate data channel for transmitting system information, and the like.
- SS/PBCH block: the SS/PBCH block includes a combination of a PSS, an SSS, and a PBCH. One or multiple SS/PBCH blocks may be transmitted within a time period of 5 ms, and each transmitted SS/PBCH block may be distinguished by an index.

The UE may detect the PSS and the SSS in the initial access stage, and may decode the PBCH. The UE may acquire an MIB from the PBCH, and may be configured CORESET #0 therefrom. The UE may monitor CORESET #0 by assuming that the demodulation reference signal (DMRS) transmitted in the selected SS/PBCH block and CORESET #0 is quasi-co-located (QCL). The UE may receive system information with downlink control information transmitted in CORESET #0. The UE may acquire configuration information related to a random access channel (RACH) necessary for initial access from the received system information. The UE may transmit a physical RACH (PRACH) to the base station in consideration of a selected SS/PBCH index, and the base station, upon receiving the PRACH, may acquire information regarding the SS/PBCH block index selected by the UE. The base station may know which block the UE has selected from respective SS/PBCH blocks, and the fact that CORESET #0 associated therewith is monitored.

[PDCCH: regarding DCI]

Next, downlink control information (DCI) in a 5G system will be described in detail.
In a 5G system, scheduling information regarding uplink data (or physical uplink shared channel (PUSCH)) or downlink data (or physical downlink shared channel (PDSCH)) is transferred from a base station to a UE through DCI. The UE may monitor, with regard to the PUSCH or PDSCH, a fallback DCI format and a non-fallback DCI format. The fallback DCI format may include a fixed field predefined between the base station and the UE, and the non-fallback DCI format may include a configurable field.
The DCI may be subjected to channel coding and modulation processes and then transmitted through a physical downlink control channel (PDCCH). A cyclic redundancy check is attached to the DCI message payload, and the CRC may be scrambled by a radio network temporary identifier (RNTI) corresponding to the identity of the UE. Different RNTIs may be used according to the purpose of the DCI message, for example, UE-specific data transmission, power control command, or random access response. That is, the RNTI is not explicitly transmitted, but is transmitted while being included in a CRC calculation process. Upon receiving a DCI message transmitted through the PDCCH, the UE may identify the CRC by using the allocated RNTI, and if the CRC identification result is right, the UE may know that the corresponding message has been transmitted to the UE.
DCI format 0_0 may be used as fallback DCI for scheduling the PUSCH, and the CRC may be scrambled by a C-RNTI. DCI format 0_0 in which the CRC is scrambled by a C-RNTI may include the following pieces of information, for example.

[Table 4]

| |
|---|
| - Identifier for DCI formats - [1] bit |
| - Frequency domain resource assignment $\cdot[\lceil log_2(N_{\mathrm{RB}}^{\mathrm{UL,BWP}}(N_{\mathrm{RB}}^{\mathrm{UL,BWP}}+1)/2)\rceil \ ]$ bits |
| - Time domain resource assignment - X bits |
| - Frequency hopping flag - 1 bit. |
| - Modulation and coding scheme - 5 bits |
| - New data indicator - 1 bit |
| - Redundancy version - 2 bits |
| - HARQ process number - 4 bits |
| - Transmit power control (TPC) command for scheduled PUSCH- [2] bits |
| - Uplink/supplementary uplink indicator (UL/SUL indicator) - 0 or 1 bit |

DCI format 0_1 may be used as non-fallback DCI for scheduling the PUSCH, and the CRC may be scrambled by a C-RNTI. DCI format 0_1 in which the CRC is scrambled by a C-RNTI may include the following pieces of information, for example.

[Table 5]

- Carrier indicator - 0 or 3 bits
- UL/SUL indicator - 0 or 1 bit
- Identifier for DCI formats - [1] bits
- Bandwidth part indicator - 0, 1 or 2 bits
- Frequency domain resource assignment

       • For resource allocation type 0, $\left\lceil N_{\text{RB}}^{\text{UL,BWP}}/P \right\rceil$ bits

       • For resource allocation type 1,

$$\left\lceil log_2 \left( N_{\text{RB}}^{\text{UL,BWP}} \left( N_{\text{RB}}^{\text{UL,BWP}} + 1 \right)/2 \right) \right\rceil \text{ bits}$$

- Time domain resource assignment -1, 2, 3, or 4 bits
- virtual resource block-to-physical resource block (VRB-to-PRB) mapping - 0 or 1 bit, only for resource allocation type 1.

       • 0 bit if only resource allocation type 0 is configured;

       • 1 bit otherwise.

- Frequency hopping flag - 0 or 1 bit, only for resource allocation type 1.

       • 0 bit if only resource allocation type 0 is configured;

       • 1 bit otherwise.

- Modulation and coding scheme - 5 bits
- New data indicator - 1 bit
- Redundancy version - 2 bits
- HARQ process number - 4 bits
- 1st downlink assignment index- 1 or 2 bits

       • 1 bit for semi-static HARQ-ACK codebook;

       • 2 bits for dynamic HARQ-ACK codebook with single HARQ-ACK codebook.

- 2nd downlink assignment index - 0 or 2 bits

       • 2 bits for dynamic HARQ-ACK codebook with two HARQ-ACK subcodebooks;

       • 0 bit otherwise.

- TPC command for scheduled PUSCH - 2 bits

- SRS resource indicator    $\left\lceil log_2 \left( \sum_{k=1}^{L_{max}\Sigma} \binom{N_{\text{SRS}}}{k} () \right) \right\rceil$ or $\left\lceil log_2(N_{\text{SRS}}) \right\rceil$ bits

       • $\left\lceil log_2 \left( \sum_{k=1}^{L_{max}\Sigma} \binom{N_{\text{SRS}}}{k} () \right) \right\rceil$ bits for non-codebook based PUSCH transmission;

       • $\left\lceil log_2(N_{\text{SRS}}) \right\rceil$ bits for codebook based PUSCH transmission.

- Precoding information and number of layers-up to 6 bits
- Antenna ports - up to 5 bits
- SRS request - 2 bits
- CSI request - 0, 1, 2, 3, 4, 5, or 6 bits
- Code block group (CBG) transmission information - 0, 2, 4, 6, or 8 bits
- Phase tracking reference signal (PTRS)-demodulation reference signal (DMRS) association- 0 or 2 bits.
- beta_offset indicator- 0 or 2 bits
- DMRS sequence initialization- 0 or 1 bit

DCI format 1_0 may be used as fallback DCI for scheduling the PDSCH, and the CRC may be scrambled by a C-RNTI. DCI format 1_0 in which the CRC is scrambled by a C-RNTI may include the following pieces of information, for example.

[Table 6]

- Identifier for DCI formats - [1] bit

- Frequency domain resource assignment $\cdot[\lceil log_2( N_{\text{RB}}^{\text{DL,BWP}}(N_{\text{RB}}^{\text{DL,BWP}} + 1)/2)\rceil\ ]$ bits

- Time domain resource assignment - X bits

- VRB-to-PRB mapping - 1 bit.

- Modulation and coding scheme - 5 bits

- New data indicator - 1 bit

- Redundancy version - 2 bits

- HARQ process number - 4 bits

- Downlink assignment index - 2 bits

- TPC command for scheduled PUCCH - [2] bits

- Physical uplink control channel (PUCCH) resource indicator- 3 bits

- PDSCH-to-HARQ feedback timing indicator- [3] bits

DCI format 1_1 may be used as non-fallback DCI for scheduling the PDSCH, and the CRC may be scrambled by a C-RNTI. DCI format 1_1 in which the CRC is scrambled by a C-RNTI may include the following pieces of information, for example.

[Table 7]

- Carrier indicator - 0 or 3 bits

- Identifier for DCI formats - [1] bits

- Bandwidth part indicator - 0, 1 or 2 bits

- Frequency domain resource assignment

    • For resource allocation type 0, $\lceil N_{\text{RB}}^{\text{DL,BWP}}/P\rceil$ bits

    • For resource allocation type 1, $\lceil log_2( N_{\text{RB}}^{\text{DL,BWP}}(N_{\text{RB}}^{\text{DL,BWP}} + 1)/2)\rceil$ bits

- Time domain resource assignment -1, 2, 3, or 4 bits

- VRB-to-PRB mapping - 0 or 1 bit, only for resource allocation type 1.

    • 0 bit if only resource allocation type 0 is configured;

    • 1 bit otherwise.

- PRB bundling size indicator - 0 or 1 bit

- Rate matching indicator - 0, 1, or 2 bits

- ZP CSI-RS trigger - 0, 1, or 2 bits

For transport block 1:

- Modulation and coding scheme - 5 bits

- New data indicator - 1 bit

- Redundancy version - 2 bits

For transport block 2:

- Modulation and coding scheme - 5 bits

- New data indicator - 1 bit

- Redundancy version - 2 bits

- HARQ process number - 4 bits

- Downlink assignment index - 0 or 2 or 4 bits

- TPC command for scheduled PUCCH - 2 bits

- PUCCH resource indicator - 3 bits

- PDSCH-to-HARQ_feedback timing indicator - 3 bits

(continued)

- Antenna ports - 4, 5 or 6 bits
- Transmission configuration indication- 0 or 3 bits
- SRS request - 2 bits
- CBG transmission information - 0, 2, 4, 6, or 8 bits
- CBG flushing out information - 0 or 1 bit
- DMRS sequence initialization - 1 bit

[PDCCH: CORESET, REG, CCE, and Search Space]

Hereinafter, a downlink control channel in a 5G communication system will be described in more detail with reference to the accompanying drawings.

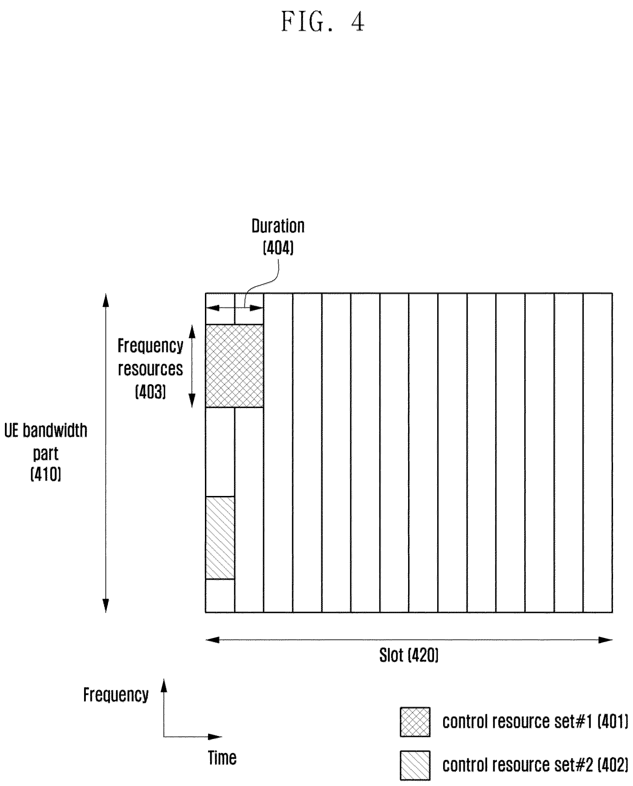

FIG. 4 illustrates an example of a CORESET used to transmit a downlink control channel in a 5G wireless communication system. FIG. 4 illustrates an example in which a UE bandwidth part 410 is configured along the frequency axis, and two CORESETs (CORESET #1 401 and CORESET #2 402) are configured within one slot 420 along the time axis. The CORESETs 401 and 402 may be configured in a specific frequency resource 403 within the entire UE bandwidth part 410 along the frequency axis. One or multiple OFDM symbols may be configured along the time axis, and this may be defined as a CORESET duration 404. Referring to the example illustrated in FIG. 4, CORESET #1 401 is configured to have a CORESET duration of two symbols, and CORESET #2 402 is configured to have a CORESET duration of one symbol.

A CORESET in 5G described above may be configured for a UE by a base station through upper layer signaling (for example, system information, MIB, or RRC signaling). The description that a CORESET is configured for a UE means that information such as the identity of a CORESET, the frequency location of a CORESET, and the symbol duration of a CORESET is provided. For example, the CORESET may include the following pieces of information.

[Table 8]

```
ControlResourceSet ::=                    SEQUENCE {
    -- Corresponds to L1 parameter 'CORESET-ID'


    controlResourceSetId                  ControlResourceSetId,
    (control resource set identity))
    frequencyDomainResources              BIT STRING (SIZE (45)),
    (frequency domain resource assignment information)
    duration                              INTEGER
(1..maxCoReSetDuration),
    (time domain resource assignment information)
    cce-REG-MappingType                   CHOICE {
    (CCE-to-REG mapping type)
        interleaved                       SEQUENCE {

            reg-BundleSize                ENUMERATED
{n2, n3, n6},
            (REG bundle size)


            precoderGranularity           ENUMERATED
{sameAsREG-bundle, allContiguousRBs},
```

```
                          interleaverSize                    ENUMERATED
{n2, n3, n6}
                          (interleaver size)


                          shiftIndex
        INTEGER(0..maxNrofPhysicalResourceBlocks-1)
OPTIONAL
                   (interleaver shift)
                   },
             nonInterleaved                        NULL
             },
             tci-StatesPDCCH                        SEQUENCE(SIZE
(1..maxNrofTCI-StatesPDCCH)) OF TCI-StateId
      OPTIONAL,
      (QCL configuration information)
      tci-PresentInDCI                        ENUMERATED {enabled}
                                              OPTIONAL,        --
Need S
      }
```

In Table 8, tci-StatesPDCCH (simply referred to as transmission configuration indication (TCI) state) configuration information may include information of one or multiple synchronization signal (SS)/physical broadcast channel (PBCH) block index or channel state information reference signal (CSI-RS) index, which is quasi-co-located with a DMRS transmitted in a corresponding CORESET.

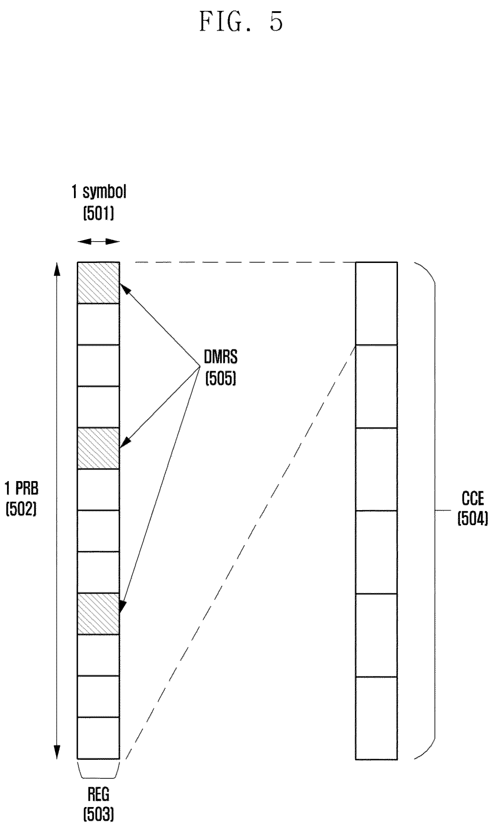

FIG. 5 illustrates an example of the basic unit of time and frequency resources constituting a downlink control channel available in 5G. According to FIG. 5, the basic unit of time and frequency resources constituting a control channel may be referred to as a resource element group (REG) 503, and the REG 503 may be defined by one OFDM symbol 501 along the time axis and one physical resource block (PRB) 502, that is, 12 subcarriers, along the frequency axis. The base station may configure a downlink control channel allocation unit by concatenating the REGs 503.

Provided that the basic unit of downlink control channel allocation in 5G is a control channel element 504 as illustrated in FIG. 5, one CCE 504 may include multiple REGs 503. To describe the REG 503 illustrated in FIG. 5, for example, the REG 503 may include 12 REs, and if one CCE 504 may include six REGs 503, one CCE 504 may include 72 REs. A downlink control resource set, once configured, may include multiple CCEs 504, and a specific downlink control channel may be mapped to one or multiple CCEs 504 and then transmitted according to the aggregation level (AL) in the control resource set. The CCEs 504 in the CORESET are distinguished by numbers, and the numbers of CCEs 504 may be allocated according to a logical mapping scheme.

The basic unit of the downlink control channel illustrated in FIG. 5, that is, the REG 503, may include both REs to which DCI is mapped, and an area to which a reference signal (DMRS 505) for decoding the same is mapped. As in FIG. 5, three DRMSs 503 may be transmitted inside one REG 505. The number of CCEs necessary to transmit a PDCCH may be 1, 2, 4, 8, or 16 according to the aggregation level (AL), and different number of CCEs may be used to implement link adaption of the downlink control channel. For example, in the case of AL=L, one downlink control channel may be transmitted through L CCEs. The UE needs to detect a signal while being no information regarding the downlink control channel, and a search space indicating a set of CCEs has thus been defined for blind decoding. The search space is a set of downlink control channel candidates including CCEs which the UE needs to attempt to decode at a given AL. Since 1, 2, 4, 8, or 16 CCEs constitute a bundle at various ALs, the UE may have multiple search spaces. A search space set may be defined as a set of search spaces at all configured ALs.

Search spaces may be classified into common search spaces and UE-specific search spaces. A group of UEs or all UEs may search a common search space of the PDCCH in order to receive cell-common control information such as a paging message or dynamic scheduling regarding system information For example, PDSCH scheduling allocation information for transmitting an SIB including a cell operator information or the like may be received by searching the common search space of the PDCCH. In the case of a common search space, a group of UEs or all UEs need to receive the PDCCH, and the same may thus be defined as a pre-promised set of CCEs. Scheduling allocation information regarding a UE-specific PDSCH or PUSCH may be received by investigating the UE-specific search space of the PDCCH. The UE-specific search space may be defined UE-specifically as a function of various system parameters and the identity of the UE.

In 5G, a parameter regarding a search parameter regarding a PDCCH may be configured for the UE by the base station through upper layer signaling (for example, SIB, MIB, RRC signaling). For example, the base station may provide the UE with configurations such as the number of PDCCH candidates at each aggregation level L, the monitoring cycle regarding the search space, the monitoring occasion with regard to each symbol in a slot regarding the search space, the search space type (common search space or UE-specific search space), a combination of an RNTI and a DCI format to be monitored in the corresponding search space, a control resource set index for monitoring the search space, and the like. For example, the parameter may include the following pieces of information:

[Table 9]

```
SearchSpace ::=                              SEQUENCE {
    -- Identity of the search space. SearchSpaceId = 0 identifies the SearchSpace
configured via PBCH (MIB) or ServingCellConfigCommon.
    searchSpaceId                            SearchSpaceId,
    (search space identity)
    controlResourceSetId                     ControlResourceSetId,
    (control resource set identity)
    monitoringSlotPeriodicityAndOffset       CHOICE {
    (monitoring slot level cycle)
        sl1                                      NULL,
        sl2                                      INTEGER (0..1),
        sl4                                      INTEGER (0..3),
        sl5                                  INTEGER (0..4),
        sl8                                      INTEGER (0..7),
        sl10                                     INTEGER (0..9),
        sl16                                     INTEGER (0..15),
        sl20                                     INTEGER (0..19)
    }
                                             OPTIONAL,
    duration(monitoring duration)            INTEGER (2..2559)
    monitoringSymbolsWithinSlot              BIT   STRING   (SIZE
(14))                                            OPTIONAL,
    (monitoirng symbols within slot)
    nrofCandidates                           SEQUENCE {
    (number of PDCCH candidates per aggregation level)
```

```
                aggregationLevel1                    ENUMERATED      {n0,
n1, n2, n3, n4, n5, n6, n8},
                aggregationLevel2                    ENUMERATED      {n0,
n1, n2, n3, n4, n5, n6, n8},
                aggregationLevel4                    ENUMERATED      {n0,
n1, n2, n3, n4, n5, n6, n8},
                aggregationLevel8                    ENUMERATED      {n0,
n1, n2, n3, n4, n5, n6, n8},
                aggregationLevel16                   ENUMERATED      {n0,
n1, n2, n3, n4, n5, n6, n8}
        },

        searchSpaceType                      CHOICE {
        (search space type)
            -- Configures this search space as common search space (CSS) and DCI
formats to monitor.
            common                               SEQUENCE {
        (common search space)
            }
            ue-Specific                          SEQUENCE {
        (UE-specific search space)
                -- Indicates whether the UE monitors in this USS for DCI formats
0-0 and 1-0 or for formats 0-1 and 1-1.
                formats                              ENUMERATED
{formats0-0-And-1-0, formats0-1-And-1-1},
                ...
            }
```

According to configuration information, the base station may configure one or multiple search space sets for the UE. According to some embodiments, the base station may configure search space set 1 and search space set 2 for the UE, may configure DCI format A scrambled by an X-RNTI to be monitored in a common search space in search space set 1, and may configure DCI format B scrambled by a Y-RNTI to be monitored in a UE-specific search space in search space set 2.

According to configuration information, one or multiple search space sets may exist in a common search space or a UE-specific search space. For example, search space set #1 and search space set #2 may be configured as a common search space, and search space set #3 and search space set #4 may be configured as a UE-specific search space.

Combinations of DCI formats and RNTIs given below may be monitored in a common search space. Obviously, the example given below is not limiting.

- DCI format 0_0/1_0 with CRC scrambled by C-RNTI, CS-RNTI, SP-CSI-RNTI, RA-RNTI, TC-RNTI, P-RNTI, SI-RNTI
- DCI format 2_0 with CRC scrambled by SFI-RNTI
- DCI format 2_1 with CRC scrambled by INT-RNTI

- DCI format 2_2 with CRC scrambled by TPC-PUSCH-RNTI, TPC-PUCCH-RNTI
  DCI format 2_3 with CRC scrambled by TPC-SRS-RNTI

Combinations of DCI formats and RNTIs given below may be monitored in a UE-specific search space. Obviously, the example given below is not limiting.

- DCI format 0_0/1_0 with CRC scrambled by C-RNTI, CS-RNTI, TC-RNTI
- DCI format 1_0/1_1 with CRC scrambled by C-RNTI, CS-RNTI, TC-RNTI

Enumerated RNTIs may follow the definition and usage given below.

Cell RNTI (C-RNTI): used to schedule a UE-specific PDSCH
Temporary cell RNTI (TC-RNTI): used to schedule a UE-specific PDSCH
Configured scheduling RNTI (CS-RNTI): used to schedule a semi-statically configured UE-specific PDSCH
Random access RNTI (RA-RNTI): used to schedule a PDSCH in a random access step
Paging RNTI (P-RNTI): used to schedule a PDSCH in which paging is transmitted
System information RNTI (SI-RNTI): used to schedule a PDSCH in which system information is transmitted
Interruption RNTI (INT-RNTI): used to indicate whether a PDSCH is punctured
Transmit power control for PUSCH RNTI (TPC-PUSCH-RNTI): used to indicate a power control command regarding a PUSCH
Transmit power control for PUCCH RNTI (TPC-PUCCH-RNTI): used to indicate a power control command regarding a PUCCH
Transmit power control for SRS RNTI (TPC-SRS-RNTI): used to indicate a power control command regarding an SRS

The DCI formats enumerated above may follow the definitions given below.

[Table 10]

| DCI format | Usage |
|---|---|
| 0_0 | Scheduling of PUSCH in one cell |
| 0_1 | Scheduling of PUSCH in one cell |
| 1_0 | Scheduling of PDSCH in one cell |
| 1_1 | Scheduling of PDSCH in one cell |
| 2_0 | Notifying a group of UEs of the slot format |
| 2_1 | Notifying a group of UEs of the PRB(s) and OFDM symbol(s) where UE may assume no transmission is intended for the UE |
| 2_2 | Transmission of TPC commands for PUCCH and PUSCH |
| 2_3 | Transmission of a group of TPC commands for SRS transmissions by one or more UEs |

The search space at aggregation level L in connection with control resource set p and search space set s may be expressed by the following equation.

[Equation 1]

$$L \cdot \left\{ \left( Y_{p,n_{s,f}^{\mu}} + \left\lfloor \frac{m_{s,n_{CI}} \cdot N_{CCE,p}}{L \cdot M_{s,max}^{(L)}} \right\rfloor + n_{CI} \right) mod \left\lfloor \frac{N_{CCE,p}}{L} \right\rfloor \right\} + i$$

- L: aggregation level
- $n_{CI}$: carrier index
- $N_{CCE,p}$: total number of CCEs existing in CORESET p
- $n_{s,f}^{\mu}$ : slot index

- $M_{s,max}^{(L)}$ : number of PDCCH candidates at aggregation level L

- $m_{s,n_{CI}} = 0, \ldots, M_{s,max}^{(L)} - 1$ : PDCCH candidate index at aggregation level L

- $i = 0, \ldots, L -1$

- $Y_{p,n_{s,f}^{\mu}} = \left( A_p \cdot Y_{p,n_{s,f}^{\mu}-1} \right) mod \, D$ , $Y_{p,-1} = n_{RNTI} \neq 0$ , $A_p$ = 39827 *for pmod*3 = 0 , $A_p$ = 39829 *for pmod*3 = 1 , $A_p$ = 39839 *for pmod*3 = 2, D = 65537

$n_{RNTI}$: UE identity

The $Y_{p,n_{s,f}^{\mu}}$ value may correspond to 0 in the case of a common search space.

The $Y_{p,n_{s,f}^{\mu}}$ value may correspond to a value changed by the UE's identity (C-RNTI or ID configured for the UE by the base station) and the time index in the case of a UE-specific search space.

In 5G, multiple search space sets may be configured by different parameters (for example, parameters in Table 9), and the group of search space sets monitored by the UE at each timepoint may differ. For example, if search space set #1 is configured at by X-slot cycle, if search space set #2 is configured at by Y-slot cycle, and if X and Y are different, the UE may monitor search space set #1 and search space set #2 both in a specific slot, and may monitor one of search space set #1 and search space set #2 both in another specific slot.

[QCL, TCI state]

In a wireless communication system, one or more different antenna ports (which may be replaced with one or more channels, signals, and combinations thereof, but will be referred to as different antenna ports, as a whole, for the convenience of description of the disclosure) may be associated with each other by a quasi-co-location (QCL) configuration as in Table 11 below. A TCI state is for publishing the QCL relation between a PDCCH (or a PDCCH DRMS) and another RS or channel, and the description that a reference antenna port A (reference RS #A) and another target antenna port B (target RS #B) are QCLed with each other means that the UE is allowed to apply some or all of large-scale channel parameters estimated in the antenna port A to channel measurement form the antenna port B. The QCL needs to be associated with different parameters according to the situation such as 1) time tracking influenced by average delay and delay spread, 2) frequency tracking influenced by Doppler shift and Doppler spread, 3) radio resource management (RRM) influenced by average gain, or 4) beam management (BM) influenced by a spatial parameter. Accordingly, four types of QCL relations are supported in NR as in Table 11 below.

[Table 11]

| QCL type | Large-scale characteristics |
|---|---|
| A | Doppler shift, Doppler spread, average delay, delay spread |
| B | Doppler shift, Doppler spread |
| C | Doppler shift, average delay |
| D | Spatial Rx parameter |

The spatial RX parameter may refer to some or all of various parameters as a whole, such as angle of arrival (AoA), power angular spectrum (PAS) of AoA, angle of departure (AoD), PAS of AoD, transmit/receive channel correlation, transmit/receive beamforming, and spatial channel correlation.

The QCL relations may be configured for the UE through RRC parameter TCI-state and QCL-info as in Table 12 below. Referring to Table 12, the base station may configure one or more TCI states for the UE, thereby informing of a maximum of two kinds of QCL relations (qcl-Type1, qcl-Type2) regarding the RS that refers to the ID of the TCI state, that is, the target RS. Each piece of QCL information (QCL-Info) that each TCI state includes the serving cell index and the BWP index of the reference RS indicated by the corresponding QCL information, the type and ID of the reference BS, and a QCL type as in Table 11 above.

[Table 12]

```
TCI-State ::=                        SEQUENCE {
    tci-StateId                      TCI-StateId,
    (ID of corresponding TCI state)
    qcl-Type1                        QCL-Info,
    (QCL information of first refernece RS of RS (target RS) referring to corresponding TCI state
ID)
    qcl-Type2                        QCL-Info              OPTIONAL, --
Need R
    (QCL information of second refernece RS of RS (target RS) referring to corresponding TCI
state ID)
    ...
}


QCL-Info ::=                         SEQUENCE {
    cell                             ServCellIndex         OPTIONAL, --
Need R
    (serving cell index of reference RS indicated by corresponding QCL information)
    bwp-Id                           BWP-Id                OPTIONAL, --
Cond CSI-RS-Indicated
    (BWP index of reference RS indicated by corresponding QCL information)
    referenceSignal                  CHOICE {
        csi-rs                       NZP-CSI-RS-ResourceId,
        ssb                          SSB-Index
```

```
        (one of CSI-RS ID or SSB ID indicated by corresponding QCL information)
    },
    qcl-Type                         ENUMERATED {typeA, typeB, typeC, typeD},
    ...
}
```

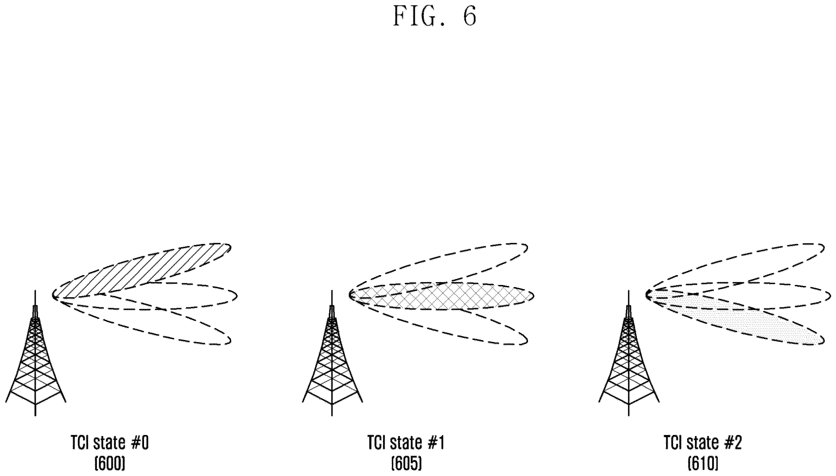

FIG. 6 illustrates an example of base station beam allocation according to TCI state configuration. Referring to FIG. 6, the base station may transfer information regarding N different beams to the UE through N different TCI states. For example, in the case of N=3 as in FIG. 6, the base station may configure qcl-Type2 parameters included in three TCI states 600, 605, and 610 in QCL type D while being associated with CSI-RSs or SSBs corresponding to different beams, thereby notifying that antenna ports referring to the different TCI states 600, 605, and 610 are associated with different spatial Rx parameters, that is, different beams.

Tables 13 to 17 below enumerate valid TCI state configurations according to the target antenna port type.

Table 13 enumerates valid TCI state configurations when the target antenna port is a CSI-RS for tracking (TRS). The TRS refers to an NZP CSI-RS which has no repetition parameter configured therefor, and trs-Info of which is configured as "true", among CRI-RSs. In Table 13, configuration no. 3 may be used for an aperiodic TRS.

[Table 13]

| Valid TCI state Configuration | DL RS 1 | qcl-Type1 | DL RS 2 (If configured) | qcl-Type2 |
|---|---|---|---|---|
| 1 | SSB | QCL-TypeC | SSB | QCL-TypeD |
| 2 | SSB | QCL-TypeC | CSI-RS (BM) | QCL-TypeD |
| 3 | TRS (periodic) | QCL-TypeA | TRS (same as DL RS 1) | QCL-TypeD |

Table 15-2 enumerates valid TCI state configurations when the target antenna port is a CSI-RS for CSI. The CSI-RS for CSI refers to an NZP CSI-RS which has no parameter indicating repetition (for example, repetition parameter) configured therefor, and trs-Info of which is not configured as "true", among CRI-RSs.

[Table 14]

| Valid TCI state Configuration | DL RS 1 | qcl-Type1 | DL RS 2 (If configured) | qcl-Type2 |
|---|---|---|---|---|
| 1 | TRS | QCL-TypeA | SSB | QCL-TypeD |
| 2 | TRS | QCL-TypeA | CSI-RS for BM | QCL-TypeD |
| 3 | TRS | QCL-TypeA | TRS (same as DL RS 1) | QCL-TypeD |
| 4 | TRS | QCL-TypeB | | |

Table 15 enumerates valid TCI state configurations when the target antenna port is a CSI-RS for beam management (BM) (which has the same meaning as CSI-RS for L1 RSRP reporting). The CSI-RS for BM may refer to an NZP CSI-RS which has a repetition parameter configured to have a value of "on" or "off', and trs-Info of which is not configured as "true", among CRI-RSs.

[Table 15]

| Valid TCI state Configuration | DLRS 1 | qcl-Type1 | DLRS 2 (If configured) | qcl-Type2 |
|---|---|---|---|---|
| 1 | TRS | QCL-TypeA | TRS (same as DL RS 1) | QCL-TypeD |
| 2 | TRS | QCL-TypeA | CSI-RS (BM) | QCL-TypeD |
| 3 | SS/PBCH Block | QCL-TypeC | SS/PBCH Block | QCL-TypeD |

Table 16 enumerates valid TCI state configurations when the target antenna port is a PDCCH DMRS.

[Table 16]

| Valid TCI state Configuration | DLRS 1 | qcl-Type1 | DL RS 2 (If configured) | qcl-Type2 |
|---|---|---|---|---|
| 1 | TRS | QCL-TypeA | TRS (same as DL RS 1) | QCL-TypeD |
| 2 | TRS | QCL-TypeA | CSI-RS (BM) | QCL-TypeD |
| 3 | CSI-RS (CSI) | QCL-TypeA | CSI-RS (same as DL RS 1) | QCL-TypeD |

Table 17 enumerates valid TCI state configurations when the target antenna port is a PDSCH DMRS.

Table 17

| Valid TCI state Configuration | DLRS 1 | qcl-Type1 | DL RS 2 (If configured) | qcl-Type2 |
|---|---|---|---|---|
| 1 | TRS | QCL-TypeA | TRS | QCL-TypeD |
| 2 | TRS | QCL-TypeA | CSI-RS (BM) | QCL-TypeD |
| 3 | CSI-RS (CSI) | QCL-TypeA | CSI-RS (CSI) | QCL-TypeD |

According to a representative QCL configuration method based on Tables 13 to 17 above, the target antenna port and reference antenna port for each step are configured and operated such as "SSB" -> "TRS" -> "CSI-RS for CSI, or CSI-RS for BM, or PDCCH DMRS, or PDSCH DMRS". Accordingly, it is possible to help the UE's receiving operation by associating statistical characteristics that can be measured from the SSB and TRS with respective antenna ports.

[PDCCH: regarding TCI state]

Specific TCI state combinations applicable to a PDCCH DMRS antenna port are given in Table 18 below. The fourth row in Table 18 corresponds to a combination assumed by the UE before RRC configuration, and no configuration is possible after the RRC.

[Table 18]

| Valid TCI state Configuration | DL RS 1 | qcl-Typel | DL RS 2 (if configured) | qcl-Type2 (if configured) |
|---|---|---|---|---|
| 1 | TRS | QCL-TypeA | TRS | QCL-TypeD |
| 2 | TRS | QCL-TypeA | CSI-RS (BM) | QCL-TypeD |
| 3 | CSI-RS (CSI) | QCL-TypeA | | |
| 4 | SS/PBCH Block | QCL-TypeA | SS/PBCH Block | QCL-TypeD |

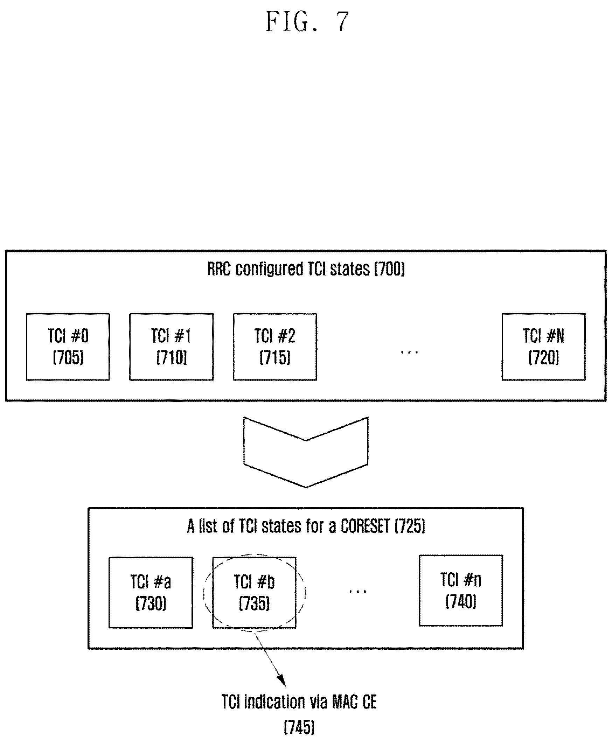

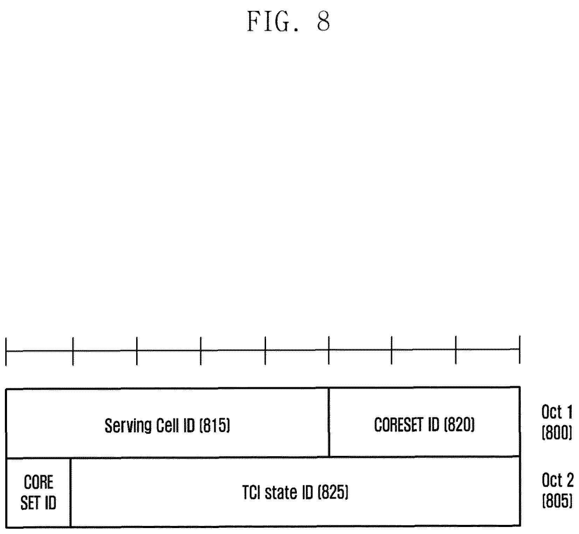

In NR, a hierarchical signaling method as illustrated in FIG. 7 is supported for dynamic allocation regarding a PDCCH beam. FIG. 7 illustrates an example of a method for allocating a TCI state to a PDCCH in a wireless communication system according to an embodiment of the disclosure. Referring to FIG. 8, the base station may configure N TCI states 805, 810, ..., 820 for the UE through RRC signaling 800, and may configure some thereof as TCI states for a CORESET (825). The base station may then indicate one of the TCI states 730, 735, and 740 for the CORESET to the UE through MAC CE signaling (745). The UE then receives a PDCCH, based on beam information included in the TCI state indicated by the MAC CE signaling.

FIG. 8 illustrates a TCI indication MAC CE signaling structure for the PDCCH DMRS. Referring to FIG. 8, the TCI indication MAC CE signaling for the PDCCH DMRS is configured by 2 bytes (16 bits), and includes a 5-bit serving cell ID 815, a 4-bit CORESET ID 820, and a 7-bit TCI state ID 825.

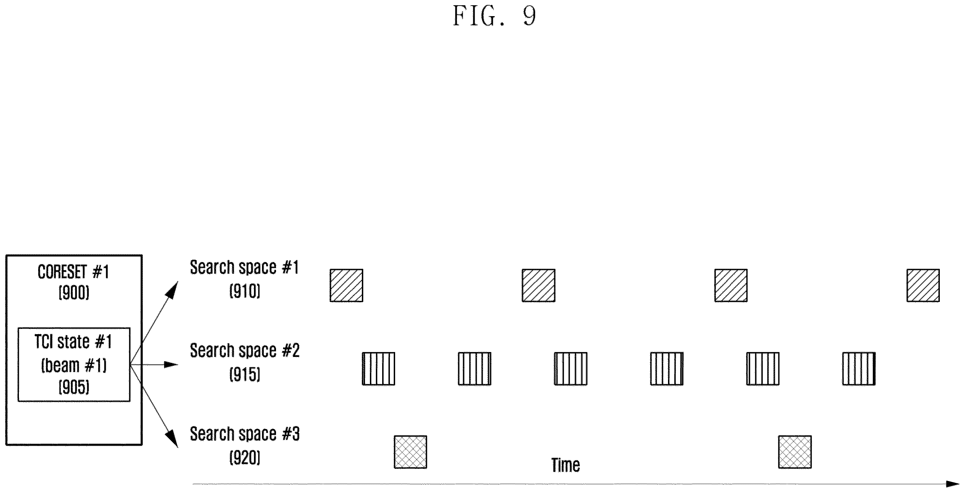

FIG. 9 illustrates an example of beam configuration with regard to a CORESET and a search space according to the above description. Referring to FIG. 9, the base station may indicate one of TCI state lists included in CORESET 900 configuration through MAC CE signaling (905). Until a different TCI state is indicated for the corresponding CORESET through different MAC CE signaling, the UE considers that identical QCL information (beam #1) 905 is all applied to one or more search spaces 910, 915, and 920 connected to the CORESET. The above-described PDCCH beam allocation method has a problem in that it is difficult to indicate a beam change faster than MAC CE signaling delay, and the same beam is unilaterally applied to each CORESET regardless of search space characteristics, thereby making flexible PDCCH beam operation difficult.

The base station may configure one or multiple TCI states for the UE with regard to a specific CORESET, and may activate one of the configured TCI states through a MAC CE activation command. For example, if {TCI state#0, TCI state#1, TCI state#2} are configured as TCI states for CORESET #1, the base station may transmit an activation command to the UE through a MAC CE such that TCI state#0 is assumed as the TCI state regarding CORESET #1. Based on the activation command regarding the TCI state received through the MAC CE, the UE may correctly receive the DMRS of the corresponding CORESET, based on QCL information in the activated TCI state.

With regard to a CORESET #0, if the UE has failed to receive a MAC CE activation command regarding the TCI state of CORESET #0, the UE may assume that the DMRS transmitted in CORESET #0 has been QCLed with a SS/PBCH block identified in the initial access process, or in a non-contention-based random access process not triggered by a PDCCH command.

With regard to a CORESET having a configured index value other than 0 (CORESET #X), if the UE has no TCI state configured regarding CORESET #X, or if the UE has one or more TCI states configured therefor but has failed to receive a MAC CE activation command for activating one thereof, the UE may assume that the DMRS transmitted in CORESET #X has been QCLed with a SS/PBCH block identified in the initial access process.

[PDCCH: regarding QCL prioritization rule]

Hereinafter, an operation for determining a QCL priority for a PDCCH is described below.

If multiple CORESETs which operate according to carrier aggregation inside a single cell or band and which exist inside a single or multiple in-cell activated bandwidth parts overlap temporally while having identical or different QCL-TypeD characteristics in a specific PDCCH monitoring occasion, the UE may select a specific CORESET according to a QCL priority determining operation and may monitor CORESETs having the same QCL-TypeD characteristics as the corresponding CORESET. That is, if multiple control resource sets overlap temporally, only one QCL-TypeD characteristic can be received. The QCL priority may be determined by the following criteria.

- Criterion 1. a CORESET connected to a common search space having the lowest index inside a cell corresponding to the lowest index among cells including a common search space
- Criterion 2. a CORESET connected to a UE-specific search space having the lowest index inside a cell corresponding to the lowest index among cells including a UE-specific search space

If one criterion among the criteria is not satisfied, the UE applies the next criterion. For example, if CORESETs overlap temporally in a specific PDCCH monitoring occasion, and if all the CORESETs are not connected to a common search space but connected to a UE-specific search space, that is, if criterion 1 is not satisfied, the UE may omit application of criterion 1 and apply criterion 2.

When selecting a CORESET according to the above-mentioned criteria, the UE may additionally consider the two aspects with regard to QCL information configured for the CORESET. Firstly, if CORESET 1 has CSI-RS 1 as a reference signal having a relation of QCL-TypeD, if this CSI-RS 1 has a relation of QCL-TypeD with reference signal SSB 1, and if another CORESET 2 has a relation of QCL-TypeD with reference signal SSB 1, the UE may consider that the two CORESETs 1 and 2 have different QCL-TypeD characteristics. Secondly, if CORESET 1 has CSI-RS 1 configured for cell 1 as a reference signal having a relation of QCL-TypeD, if this CSI-RS 1 has a relation of QCL-TypeD with reference signal SSB 1, if CORESET 2 has a relation of QCL-TypeD with reference signal CSI-RS 2 configured for cell 2, and if this CSI-RS 2 has a relation of QCL-TypeD with the same reference signal SSB 1, the UE may consider that the two CORESETs have the same QCL-TypeD characteristics.

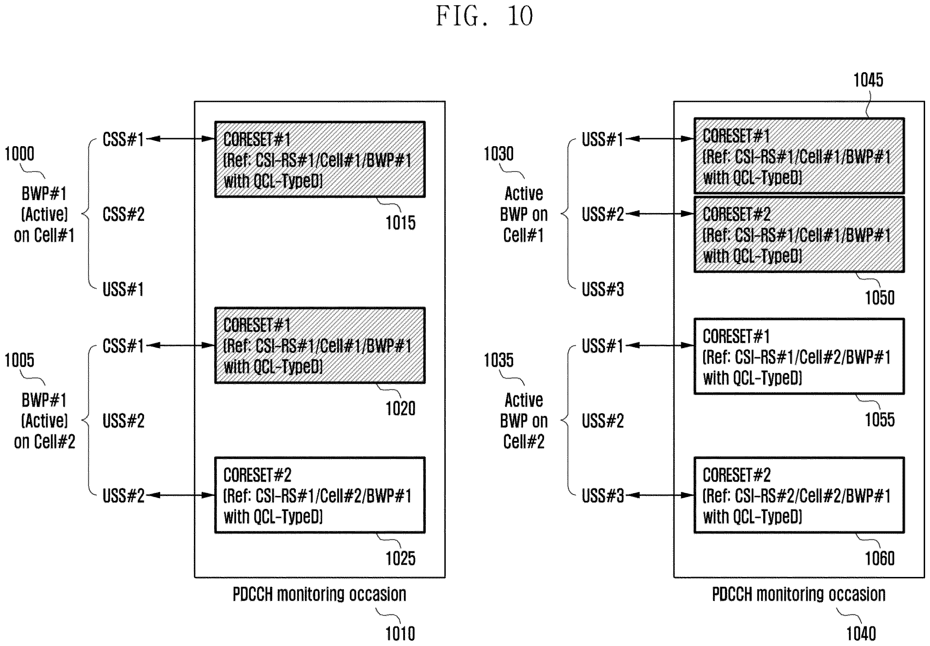

FIG. 10 illustrates a method in which, upon receiving a downlink control channel, a UE selects a receivable control resource set in view of priority in a wireless communication system according to an embodiment of the disclosure. As an example, the UE may be configured to receive multiple control resource sets overlapping temporally in a specific PDCCH monitoring occasion 1010, and such multiple control resource sets may be connected to a common search space or a UE-specific search space with regard to multiple cells. In the corresponding PDCCH monitoring occasion, CORESET no. 1 1015 connected to common search space no. 1 may exist in bandwidth part no. 1 1000 of cell no. 1, and CORESET no. 1 1020 connected to common search space no. 1 and CORESET no. 2 1025 connected to UE-specific search space no. 2 may exist in bandwidth part no. 1 1005 of cell no. 2. The CORESETs 1015 and 1020 may have a relation of QCL-TypeD with CSI-RS resource no. 1 configured in bandwidth part no. 1 of cell no. 1, and the CORESET 1025 may have a relation of QCL-TypeD with CSI-RS resource no. 1 configured in bandwidth part no. 1 of cell no. 2. Therefore, if criterion 1 is applied to the corresponding PDCCH monitoring occasion 1010, all other CORESETs having the same reference signal of QCL-TypeD as CORESET no. 1 1015 may be received. Therefore, the UE may receive the CORESETs 1015 and 1020 in the corresponding PDCCH monitoring occasion 1010.

As another example, the UE may be configured to receive multiple CORESETs overlapping temporally in a specific PDCCH monitoring occasion 1040, and such multiple CORESETs may be connected to a common search space or a UE-specific search space with regard to multiple cells. In the corresponding PDCCH monitoring occasion, control resource set no. 1 1045 connected to UE-specific search space no. 1 and CORESET no. 2 1050 connected to UE-specific search space no. 2 may exist in bandwidth part no. 1 1030 of cell no. 1, and CORESET no. 1 1055 connected to UE-specific search space no. 1 and CORESET no. 2 1060 connected to UE-specific search space no. 3 may exist in bandwidth part no. 1 1035 of cell no. 2. The CORESETs 1045 and 1050 may have a relation of QCL-TypeD with CSI-RS resource no. 1 configured in bandwidth part no. 1 of cell no. 1, the CORESET 1055 may have a relation of QCL-TypeD with CSI-RS resource no. 1 configured in bandwidth part no. 1 of cell no. 2, and the CORESET 1060 may have a relation of QCL-TypeD with CSI-RS resource no. 2 configured in bandwidth part no. 1 of cell no. 2. If criterion 1 is applied to the corresponding PDCCH monitoring occasion 1240, there is no common search space, and the next criterion (criterion 2) may thus be applied. If criterion 2 is applied to the corresponding PDCCH monitoring occasion 1040, all other CORESETs having the same reference signal of QCL-TypeD as CORESET no. 1 1045 may be received. Therefore, the UE may receive the CORESETs 1045 and 1050 in the corresponding PDCCH monitoring occasion 1040.

[PDSCH: regarding frequency resource allocation]

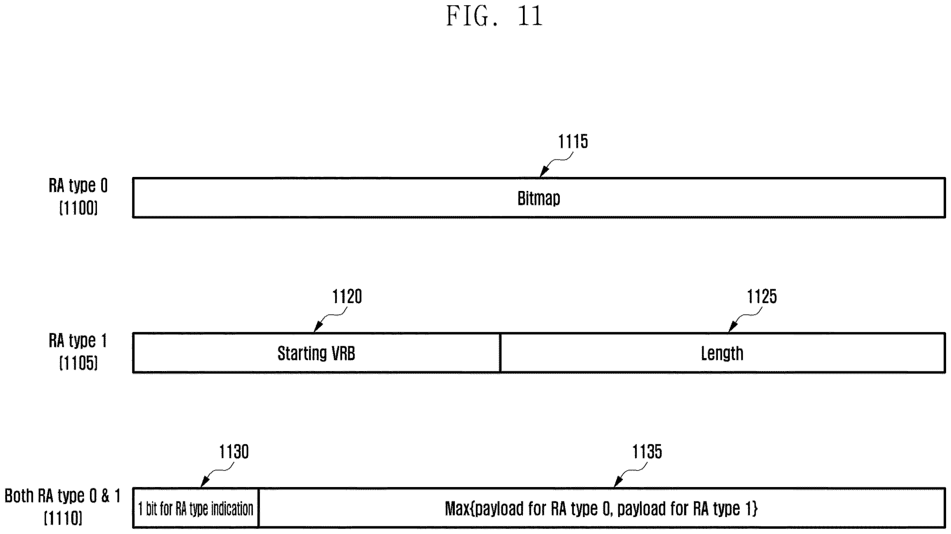

FIG. 11 illustrates an example of frequency domain resource allocation with regard to a PDSCH in a wireless communication system according to an embodiment of the disclosure.

FIG. 11 illustrates three frequency domain resource allocation methods of type 0 1100, type 1 1105, and dynamic switch 1110 which can be configured through an upper layer in an NR wireless communication system.

Referring to FIG. 11, in the case 1100 in which a UE is configured to use only resource type 0 through upper layer signaling, partial downlink control information (DCI) for allocating a PDSCH to the UE include a bitmap including $N_{RBG}$ bits. conditions for this will be described later. As used herein, $N_{RBG}$ refers to the number of resource block groups (RBGs) determined according to the BWP size allocated by a BWP indicator and upper layer parameter rbg-Size, as in Table 19 below, and data is transmitted in RBGs indicated as "1" by the bitmap.

[Table 19]

| Bandwidth Part Size | Configuration 1 | Configuration 2 |
|:---:|:---:|:---:|
| 1-36 | 2 | 4 |
| 37-72 | 4 | 8 |
| 73-144 | 8 | 16 |
| 145-275 | 16 | 16 |

In the case 1105 in which the UE is configured to use only resource type 1 through upper layer signaling, partial DCI includes frequency domain resource allocation information including $[log_2(N_{RB}^{DL,BWP}(N_{RB}^{DL,BWP}+1)/2]$ i bits. The conditions for this will be described again later. The base station may thereby configure a starting VRB 1120 and the length 1125 of a frequency domain resource allocated continuously therefrom.

In the case 1110 in which the UE is configured to use both resource type 0 and resource type 1 through upper layer signaling, partial DCI for allocating a PDSCH to the corresponding UE includes frequency domain resource allocation information including as many bits as the larger value 1135 between the payload 1115 for configuring resource type 0 and the payload 1120 and 1125 for configuring resource type 1. The conditions for this will be described again later. One bit may be added to the foremost part (MSB) of the frequency domain resource allocation information inside the DCI. If the bit has the value of "0", use of resource type 0 may be indicated, and if the bit has the value of "1", use of resource type 1 may be indicated.

[PDSCH/PUSCH: regarding time resource allocation]

Hereinafter, a time domain resource allocation method regarding a data channel in a next-generation mobile communication system (5G or NR system) will be described.

A base station may configure table regarding time domain resource allocation information regarding a physical downlink shared channel (PDSCH) and a physical uplink shared channel (PUSCH) for a UE through upper layer signaling (for example, RRC signaling). A table including a maximum of maxNrofDL-Allocations=16 entries may be configured for the PDSCH, and a table including a maximum of maxNrofUL-Allocations=16 entries may be configured for the PUSCH. In an embodiment, the time domain resource allocation information may include PDCCH-to-PDSCH slot timing (corresponding to a slot-unit time interval between a timepoint at which a PDCCH is received and a timepoint at which a PDSCH scheduled by the received PDCCH is transmitted; labeled K0), PDCCH-to-PUSCH slot timing (corresponding to a slot-unit time interval between a timepoint at which a PDCCH is received and a timepoint at which a PUSCH scheduled by the received PDCCH is transmitted; labeled K2), information regarding the location and length of the start symbol by which a PDSCH or PUSCH is scheduled inside a slot, the mapping type of a PDSCH or PUSCH, and the like. For example, information such as in Table 20 or Table 21 below may be transmitted from the base station to the UE.

[Table 20]

| *PDSCH-TimeDomainResourceAllocationList information element* |
|---|
| PDSCH-TimeDomainResourceAllocationList  ::=  SEQUENCE (SIZE(1..maxNrofDL-Allocations)) OF PDSCH-TimeDomainResourceAllocation <br><br> PDSCH-TimeDomainResourceAllocation ::=  SEQUENCE { <br>        k0                                                     INTEGER(0..32) <br>    OPTIONAL,    -- Need S <br>        (PDCCH-to-PDSCH timing, slot unit) <br>      mappingType                                        ENUMERATED  {typeA, typeB}, <br>        (PDSCH mapping type) |

| |
|---|
|   startSymbolAndLength                        INTEGER (0..127) <br>    (start symbol and length of PDSCH) <br> } |

[Table 21]

| *PUSCH-TimeDomainResourceAllocationList information element* |
|---|
| PUSCH-TimeDomainResourceAllocationList  ::=      SEQUENCE  (SIZE(1..maxNrofUL-Allocations))<br><br>    OF PUSCH-TimeDomainResourceAllocation<br><br><br>    PUSCH-TimeDomainResourceAllocation ::=     SEQUENCE {<br>          k2                                                              INTEGER(0..32)<br>    OPTIONAL,      -- Need S<br>          (PDCCH-to-PUSCH timing, slot unit)<br>               mappingType                                    ENUMERATED {typeA, typeB},<br>               (PUSCH mapping type)<br>          startSymbolAndLength                   INTEGER (0..127)<br>               (start symbol and length of PUSCH)<br>    } |

The base station may notify the UF of one of the entries of the table regarding time domain resource allocation information described above through L1 signaling (for example, DCI) (for example, "time domain resource allocation" field in DCI may indicate the same). The UE may acquire time domain resource allocation information regarding a PDSCH or PUSCH, based on the DCI acquired from the base station.

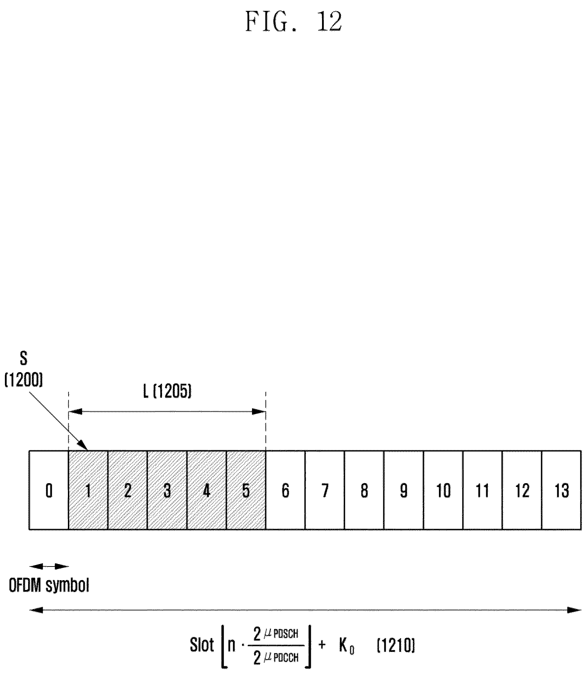

FIG. 12 illustrates an example of time domain resource allocation with regard to a PDSCH in a wireless communication system according to an embodiment of the disclosure.

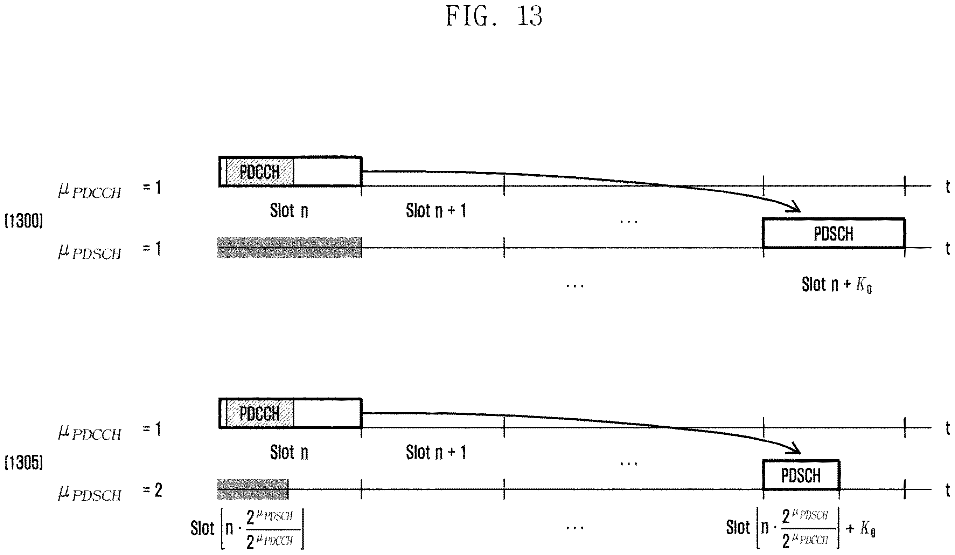

Referring to FIG. 12, the base station may indicate the time domain location of a PDSCH resource according to the subcarrier spacing (SCS) ($\mu_{PDSCH}$, $\mu_{PDCCH}$) of a data channel and a control channel configured by using an upper layer, the scheduling offset (K0) value, and the start location 1200 and length 1205 of an OFDM symbol inside one slot dynamically indicated through DCI. As many OFDM symbols as the length 1205 from the OFDM symbol start location 1200 within one slot are allocated to the PDSCH as time domain resources. A slot in which the PDSCH is scheduled according to scheduling offset will be described in detail with reference to FIG. 13.

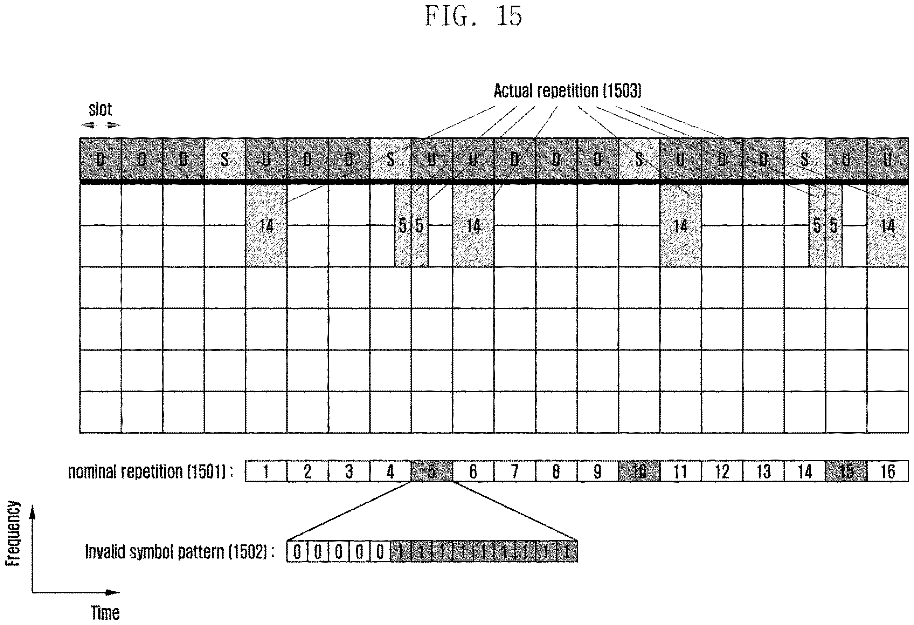

FIG. 15 illustrates an example of time domain resource allocation according to a subcarrier spacing with regard to a data channel and a control channel in a wireless communication system according to an embodiment of the disclosure.

Referring to FIG. 13, if the data channel and the control channel have the same subcarrier spacing 1300 ($\mu_{PDSCH}$ =$\mu_{PDCCH}$), the slot number for data and that for control are identical, and the base station and the UE may accordingly generate a scheduling offset in conformity with a predetermined slot offset K0. On the other hand, if the data channel and the control channel have different subcarrier spacings 1305 ($_{PDSCH} \neq \mu_{PDCCH}$), the slot number for data and that for control are different, and the base station and the UE may accordingly generate a scheduling offset in conformity with a predetermined slot offset K0 with reference to the subcarrier spacing of the PDCCH.

[PDSCH: TCI state activation MAC-CE]

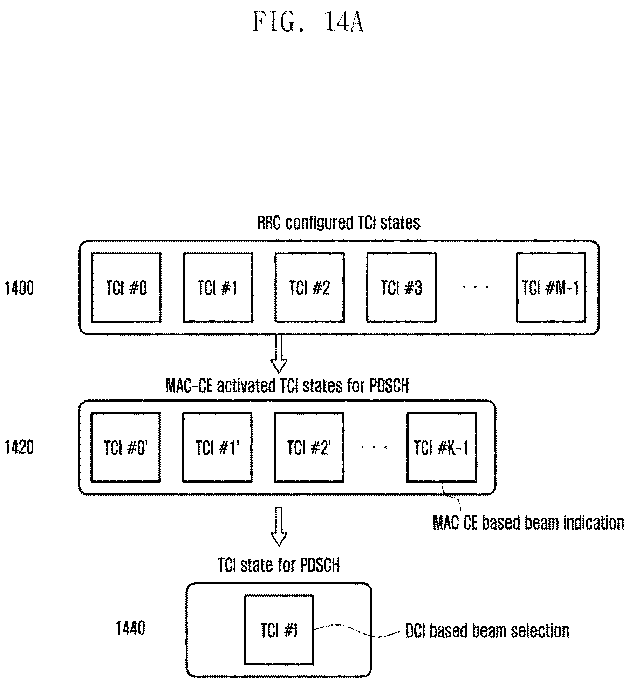

Next, a beam configuration method regarding a PDSCH will be described. FIG. 14A illustrates a process for beam configuration and activation with regard to a PDSCH. A list of TCI states regarding a PDSCH may be indicated through an upper layer list such as RRC (1400). The list of TCI states may be indicated by tci-StatesToAddModList and/or tci-StatesToReleaseList inside a BWP-specific PDSCH-Config IE, for example. Next, a part of the list of TCI states may be activated through a MAC-CE (1420). The maximum number of activated TCI states may be determined by the capability reported by the UE.

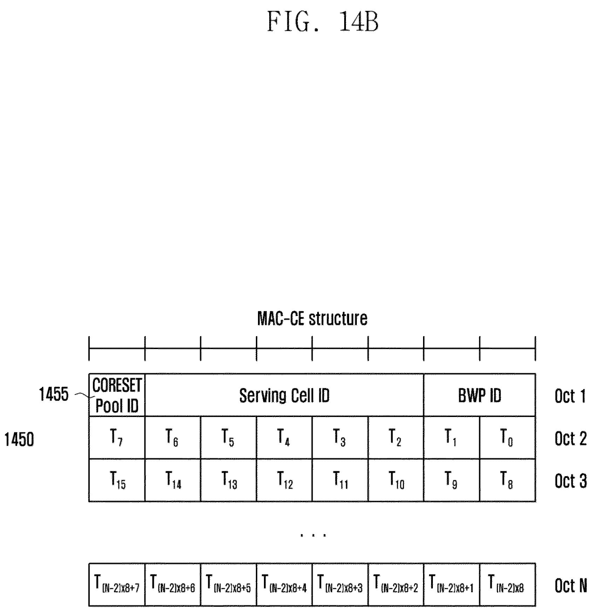

FIG. 14B illustrates an example of a MAC-CE structure for PDSCH TCI state activation or deactivation. The meaning of each field in the MAC-CE and the values configurable for each field are as follows.

- Serving Cell ID: This field indicates the identity of the Serving Cell for which the MAC CE applies. The length of the field is 5 bits. If the indicated Serving Cell is configured as part of a simultaneousTCI-UpdateList1 or simultaneousTCI-UpdateList2 as specified in TS 38.331 [5], this MAC CE applies to all the Serving Cells configured in the set simultaneousTCI-UpdateList1 or simultaneousTCI-UpdateList2, respectively;
- BWP ID: This field indicates a DL BWP for which the MAC CE applies as the codepoint of the DCI bandwidth part indicator field as specified in TS 38.212 [9]. The length of the BWP ID field is 2 bits. This field is ignored if this MAC CE applies to a set of Serving Cells;
- $T_i$ (TCI state ID): If there is a TCI state with TCI-StateId i as specified in TS 38.331 [5], this field indicates the activation/deactivation status of the TCI state with TCI-StateId i, otherwise MAC entity shall ignore the Ti field. The Ti field is set to 1 to indicate that the TCI state with TCI-StateId i shall be activated and mapped to the codepoint of the DCI Transmission Configuration Indication field, as specified in TS 38.214 [7]. The Ti field is set to 0 to indicate that the TCI state with TCI-StateId i shall be deactivated and is not mapped to the codepoint of the DCI Transmission Configuration Indication field. The codepoint to which the TCI State is mapped is determined by its ordinal position among all the TCI States with Ti field set to 1, i.e., the first TCI State with Ti field set to 1 shall be mapped to the codepoint value 0, second TCI State with Ti field set to 1 shall be mapped to the codepoint value 1 and so on. The maximum number of activated TCI states is 8;

CORESET Pool ID: This field indicates that mapping between the activated TCI states and the codepoint of the DCI Transmission Configuration Indication set by field Ti is specific to the ControlResourceSetId configured with CORESET Pool ID as specified in TS 38.331 [5]. This field set to 1 indicates that this MAC CE shall be applied for the DL transmission scheduled by CORESET with the CORESET pool ID equal to 1, otherwise, this MAC CE shall be applied for the DL transmission scheduled by CORESET pool ID equal to 0. If the coresetPoolIndex is not configured for any CORESET, MAC entity shall ignore the CORESET Pool ID field in this MAC CE when receiving the MAC CE. If the Serving Cell in the MAC CE is configured in a cell list that contains more than one Serving Cell, the CORESET Pool ID field shall be ignored when receiving the MAC CE.

[SRS Related]

Next, a UL channel estimation method of a terminal using sounding reference signal (SRS) transmission will be described. A base station may configure at least one SRS configuration for each UL BWP in order to deliver configuration information for SRS transmission to the terminal, and may also configure at least one SRS resource set for each SRS configuration. For example, the base station and the terminal may exchange the following higher signaling information to deliver information about the SRS resource set.

- srs-ResourceSetId: SRS resource set index
- srs-ResourceIdList: A set of SRS resource indexes referenced in the SRS resource set
- resourceType: This is the time axis transmission configuration of the SRS resource referenced in the SRS resource set, and may be configured as one of 'periodic', 'semi-persistent', and 'aperiodic'. In case that the resourceType is configured as 'periodic' or 'semi-persistent', associated CSI-RS information may be provided according to the usage of the SRS resource set. If the resourceType is configured as 'aperiodic', an aperiodic SRS resource trigger list and slot offset information may be provided, and associated CSI-RS information may be provided according to the usage of the SRS resource set.
- usage: This is configuration for the usage of the SRS resource referenced in the SRS resource set, and may be configured as one of 'beamManagement', 'codebook', 'nonCodebook', and 'antennaSwitching'.
- alpha, p0, pathlossReferenceRS, srs-PowerControlAdjustmentStates: This provides parameter configuration for adjusting the transmit power of the SRS resource referenced in the SRS resource set.

The terminal may understand that the SRS resource included in the set of SRS resource indexes referenced in the SRS resource set follows information configured in the SRS resource set.

In addition, the base station and the terminal may transmit and receive higher layer signaling information to deliver individual configuration information for SRS resources. For example, the individual configuration information for the SRS resource may include time-frequency axis mapping information within the slot of SRS resources, which may include information about intra-slot or inter-slot frequency hopping of SRS resources. In addition, the individual configuration information for the SRS resource may include a time-axis transmission configuration of SRS resources, and may be configured to be one of 'periodic', 'semi-persistent', and 'aperiodic'. This may be limited to have the same time-axis transmission configuration as the SRS resource set including SRS resources. In case that the time-axis transmission configuration of the SRS resource is configured as 'periodic' or 'semi-persistent', the SRS resource transmission period and slot offset (e.g., periodicityAndOffset) may be additionally included in the time-axis transmission configuration.

The base station may activate, deactivate, or trigger the SRS transmission to the terminal through higher layer signaling including RRC signaling or MAC CE signaling, or L1 signaling (e.g., DCI). For example, the base station may activate or deactivate the periodic SRS transmission through higher layer signaling to the terminal. The base station may instruct, through higher layer signaling, to activate the SRS resource set in which the resource Type is configured as periodic, and the terminal may transmit the SRS resource referenced in the activated SRS resource set. The time-frequency axis resource mapping of the SRS resource transmitted in the slot follows the resource mapping information configured in the SRS resource, and the slot mapping including the transmission period and the slot offset follows the periodicityAndOffset configured in the SRS resource. In addition, the spatial domain transmission filter applied to the SRS resource transmitted may refer to the spatial relation info configured in the SRS resource, or may refer to the associated CSI-RS information configured in the SRS resource set including the SRS resource. The terminal may transmit the SRS resource in the UL BWP activated for the periodic SRS resource activated through higher layer signaling.

For example, the base station may activate or deactivate the semi-persistent SRS transmission through higher layer signaling to the terminal. The base station may instruct to activate the SRS resource set through MAC CE signaling, and the terminal may transmit the SRS resource referenced in the activated SRS resource set. The SRS resource set activated through MAC CE signaling may be limited to the SRS resource set in which the resource Type is configured as semi-persistent. The time-frequency axis resource mapping of the SRS resource transmitted in the slot follows the resource mapping information configured in the SRS resource, and the slot mapping including the transmission period and the slot offset follows the periodicityAndOffset configured in the SRS resource. In addition, the spatial domain transmission filter applied to the SRS resource transmitted may refer to the spatial relation info configured in the SRS resource, or may refer to the associated CSI-RS information configured in the SRS resource set including the SRS resource. In case that the spatial relation info is configured in the SRS resource, this may not be followed, and the spatial domain transmission filter may be determined by referring to the configuration information for the spatial relation info delivered through MAC CE signaling that activates the semi-persistent SRS transmission. The terminal may transmit the SRS resource within the UL BWP activated for the semi-persistent SRS resource activated through higher layer signaling.

For example, the base station may trigger the aperiodic SRS transmission to the terminal through the DCI. The base station may indicate one of aperiodic SRS resource triggers (aperiodicSRS-ResourceTrigger) through the SRS request field of the DCI. The terminal may understand, in the configuration information of the SRS resource set, that the SRS resource set including the aperiodic SRS resource trigger indicated through the DCI in the aperiodic SRS resource trigger list is triggered. The terminal may transmit the SRS resource referenced in the triggered SRS resource set. The time-frequency axis resource mapping of the SRS resource transmitted in the slot follows the resource mapping information configured in the SRS resource. In addition, the slot mapping of the SRS resource transmitted may be determined through the slot offset between the PDCCH including DCI and the SRS resource, which may refer to the value(s) included in the slot offset set configured in the SRS resource set. Specifically, the slot offset between the PDCCH including DCI and the SRS resource may apply a value indicated in the time domain resource assignment field of the DCI among the offset value(s) included in the slot offset set configured in the SRS resource set. In addition, the spatial domain transmission filter applied to the SRS resource transmitted may refer to the spatial relation info configured in the SRS resource, or may refer to the associated CSI-RS information configured in the SRS resource set including the SRS resource. The terminal may transmit the SRS resource within the UL BWP activated for the aperiodic SRS resource triggered through the DCI.

In case that the base station triggers the aperiodic SRS transmission to the terminal through the DCI, in order for the terminal to transmit the SRS by applying the configuration information for the SRS resource, a minimum time interval may be required between the PDCCH including the DCI triggering the aperiodic SRS transmission and the transmitted SRS. The time interval for the SRS transmission of the terminal may be defined as the number of symbols between the last symbol of the PDCCH including the DCI triggering the aperiodic SRS transmission and the first symbol to which the SRS resource transmitted first among the transmitted SRS resource(s) is mapped. The minimum time interval may be determined with reference to the PUSCH preparation procedure time required for the terminal to prepare PUSCH transmission. In addition, the minimum time interval may have a different value depending on the usage of the SRS resource set including the transmitted SRS resource. For example, the minimum time interval may be determined as N2 symbols defined in consideration of the UE processing capability according to the UE capability by referring to the PUSCH preparation procedure time of the UE. In addition, in consideration of the usage of the SRS resource set including the transmitted SRS resource, in case that the usage of the SRS resource set is configured as 'codebook' or 'antennaSwitching', the minimum time interval may be determined as N2 symbols, and in case that the usage of the SRS resource set is configured as 'nonCodebook' or 'beamManagement', the minimum time interval may be determined as (N2+14) symbols. The UE may transmit the aperiodic SRS when the time interval for aperiodic SRS transmission is greater than or equal to the minimum time interval, and may ignore the DCI triggering the aperiodic SRS when the time interval for aperiodic SRS transmission is less than the minimum time interval.

【Table 22】

```
SRS-Resource ::= SEQUENCE {
srs-ResourceId SRS-ResourceId,
nrofSRS-Ports ENUMERATED {port1, ports2, ports4},
ptrs-PortIndex ENUMERATED {n0, n1 } OPTIONAL, -- Need R
transmissionComb CHOICE {
n2 SEQUENCE {
combOffset-n2 INTEGER (0..1),
cyclicShift-n2 INTEGER (0..7)
},
n4 SEQUENCE {
combOffset-n4 INTEGER (0..3),
cyclicShift-n4 INTEGER (0..11)
}
},
resourceMapping SEQUENCE {
startPosition INTEGER (0..5),
nrofSymbols ENUMERATED {n1, n2, n4},
repetitionFactor ENUMERATED {n1, n2, n4}
},
freqDomainPosition INTEGER (0..67),
freqDomainShift INTEGER (0..268),
freqHopping SEQUENCE {
c-SRS INTEGER (0..63),
b-SRS INTEGER (0..3),
b-hop INTEGER (0..3)
},
groupOrSequenceHopping ENUMERATED { neither, groupHopping,
sequenceHopping },
resourceType CHOICE {
aperiodic SEQUENCE {
...
},
semi-persistent SEQUENCE {
periodicityAndOffset-sp SRS-PeriodicityAndOffset,
...
},
```

```
periodic SEQUENCE {
periodicityAndOffset-p SRS-PeriodicityAndOffset,
...
}
},
sequenceId INTEGER (0..1023),
spatialRelationInfo SRS-SpatialRelationInfo OPTIONAL, -- Need R
...
}
```

The spatialRelationInfo configuration information in Table 22 refers to one reference signal and applies beam information of the reference signal to a beam used for the corresponding SRS transmission. For example, the configuration of spatialRelationInfo may include information as shown in Table 23 below.

【Table 23】

```
SRS-SpatialRelationInfo ::= SEQUENCE {
servingCellId ServCellIndex OPTIONAL, -- Need S
referenceSignal CHOICE {
ssb-Index SSB-Index,
csi-RS-Index NZP-CSI-RS-ResourceId,
srs SEQUENCE {
resourceId SRS-ResourceId,
uplinkBWP BWP-Id
}
}
}
```

Referring to the spatialRelationInfo configuration, an SS/PBCH block index, a CSI-RS index, or an SRS index may be configured as an index of a reference signal to be referenced in order to use the beam information of a specific reference signal. The higher signaling reference Signal is configuration information indicating which reference signal beam information is to be referred to for the corresponding SRS transmission, ssb-Index refers to the index of the SS/PBCH block, csi-RS-Index refers to the index of the CSI-RS, and srs refers to the index of the SRS. In case that a value of the higher signaling referenceSignal is configured as 'ssb-Index', the UE may apply the reception beam, having been used when receiving the SS/PBCH block corresponding to the ssb-Index, as the transmission beam of the corresponding SRS transmission. When a value of the higher signaling referenceSignal is configured as 'csi-RS-Index', the UE may apply the reception beam, having been used when receiving the CSI-RS corresponding to the csi-RS-Index, as the transmission beam of the corresponding SRS transmission. When a value of the higher signaling referenceSignal is configured as 'srs', the UE may apply the transmission beam, having been used when transmitting the SRS corresponding to srs, as the transmission beam of the corresponding SRS transmission.

[PUSCH: regarding transmission scheme]

Next, a PUSCH transmission scheduling scheme will be described. PUSCH transmission may be dynamically scheduled by a UL grant inside DCI, or operated by means of configured grant Type 1 or Type 2. Dynamic scheduling indication regarding PUSCH transmission can be made by DCI format 0_0 or 0_1.

Configured grant Type 1 PUSCH transmission may be configured semi-statically by receiving configuredGrantConfig including rrc-ConfiguredUplinkGrant in Table 24 through upper signaling, without receiving a UL grant inside DCI. Configured grant Type 2 PUSCH transmission may be scheduled semi-persistently by a UL grant inside DCI after receiving configuredGrantConfig not including rrc-ConfiguredUplinkGrant in Table 24 through upper signaling. If PUSCH transmission is operated by a configured grant, parameters applied to the PUSCH transmission are applied through configuredGrantConfig (upper signaling) in Table 24 except for dataScramblingIdentityPUSCH, txConfig, codebookSubset, maxRank, and scaling of UCI-OnPUSCH, which are provided by pusch-Config in Table 25, which is upper signaling. If provided with transformPrecoder inside configuredGrantConfig (upper signaling) in Table 24, the UE applies tp-pi2BPSK inside pusch-Config in Table 25 to PUSCH transmission operated by a configured grant.

[Table 24]

| ConfiguredGrantConfig ::= | SEQUENCE { |
|---|---|
| frequencyHopping | ENUMERATED {intraSlot, interSlot} OPTIONAL, -- Need S, |
| cg-DMRS-Configuration | DMRS-UplinkConfig, |
| mcs-Table | ENUMERATED {qam256, qam64LowSE} OPTIONAL, -- Need S |
| mcs-TableTransformPrecoder | ENUMERATED {qam256, qam64LowSE} OPTIONAL, -- Need S |

```
        uci-OnPUSCH                        SetupRelease { CG-UCI-
OnPUSCH }                                           OPTIONAL,    --
Need M
        resourceAllocation                 ENUMERATED
{ resourceAllocationType0, resourceAllocationType1, dynamicSwitch },
        rbg-Size                                ENUMERATED {config2}
OPTIONAL,    -- Need S
        powerControlLoopToUse              ENUMERATED {n0, n1},
        p0-PUSCH-Alpha                     P0-PUSCH-AlphaSetId,
        transformPrecoder                  ENUMERATED {enabled, disabled}
OPTIONAL,    -- Need S
        nrofHARQ-Processes                 INTEGER(1..16),
        repK                               ENUMERATED {n1, n2, n4, n8},
        repK-RV                            ENUMERATED {s1-0231, s2-0303,
s3-0000}                                  OPTIONAL,    -- Need R
        periodicity                        ENUMERATED {
                                           sym2, sym7, sym1x14,
sym2x14, sym4x14, sym5x14, sym8x14, sym10x14, sym16x14, sym20x14,
                                           sym32x14, sym40x14,
sym64x14, sym80x14, sym128x14, sym160x14, sym256x14, sym320x14, sym512x14,
                                           sym640x14, sym1024x14,
sym1280x14, sym2560x14, sym5120x14,
                                           sym6, sym1x12, sym2x12,
sym4x12, sym5x12, sym8x12, sym10x12, sym16x12, sym20x12, sym32x12,
                                           sym40x12, sym64x12,
sym80x12, sym128x12, sym160x12, sym256x12, sym320x12, sym512x12,
sym640x12,
                                           sym1280x12, sym2560x12
        },
        configuredGrantTimer               INTEGER (1..64)
OPTIONAL,    -- Need R
```

```
rrc-ConfiguredUplinkGrant              SEQUENCE {
    timeDomainOffset                       INTEGER (0..5119),
    timeDomainAllocation                   INTEGER   (0..15),
    frequencyDomainAllocation              BIT STRING (SIZE(18)),
    antennaPort                                       INTEGER
(0..31),
    dmrs-SeqInitialization                 INTEGER (0..1)
OPTIONAL,      -- Need R
    precodingAndNumberOfLayers             INTEGER (0..63),
    srs-ResourceIndicator                  INTEGER (0..15)
OPTIONAL,      -- Need R
    mcsAndTBS                              INTEGER (0..31),
    frequencyHoppingOffset                 INTEGER (1..
maxNrofPhysicalResourceBlocks-1)            OPTIONAL,     -- Need R
    pathlossReferenceIndex                            INTEGER
(0..maxNrofPUSCH-PathlossReferenceRSs-1),

        ...

    }
OPTIONAL,      -- Need R

    ...

}
```

Next, a PUSCH transmission method will be described. The DMRS antenna port for PUSCH transmission is identical to an antenna port for SRS transmission. PUSCH transmission may follow a codebook-based transmission method and a non- codebook-based transmission method according to whether the value of txConfig inside pusch-Config in Table 25, which is upper signaling, is "codebook" or "nonCodebook".

As described above, PUSCH transmission may be dynamically scheduled through DCI format 0_0 or 0_1, and may be semi-statically configured by a configured grant. Upon receiving indication of scheduling regarding PUSCH transmission through DCI format 0_0, the UE perform beam configuration for PUSCH transmission by using pucch-spatialRelationInfoID corresponding to a UE-specific PUCCH resource corresponding to the minimum ID inside an activated uplink BWP inside a serving cell, and the PUSCH transmission is based on a single antenna port. The UE does not expect scheduling regarding PUSCH transmission through DCI format 0_0 inside a BWP having no configured PUCCH resource including pucch-spatialRelationInfo. If the UE has no configured txConfig inside pusch-Config in Table 25, the UE does not expect scheduling through DCI format 0_1.

[Table 25]

| | |
|---|---|
| PUSCH-Config ::= | SEQUENCE { |
| dataScramblingIdentityPUSCH | INTEGER (0..1023) |
| OPTIONAL,    -- Need S | |
| txConfig | ENUMERATED {codebook, |
| nonCodebook} | OPTIONAL,    -- Need S |
| dmrs-UplinkForPUSCH-MappingTypeA | SetupRelease { DMRS- |
| UplinkConfig } | OPTIONAL,    -- Need M |
| dmrs-UplinkForPUSCH-MappingTypeB | SetupRelease { DMRS- |
| UplinkConfig } | OPTIONAL,    -- Need M |
| pusch-PowerControl | PUSCH-PowerControl |
| OPTIONAL,    -- Need M | |
| frequencyHopping | ENUMERATED {intraSlot, |
| interSlot} | OPTIONAL,    -- Need S |
| frequencyHoppingOffsetLists | |
| SEQUENCE (SIZE (1..4)) OF INTEGER (1.. maxNrofPhysicalResourceBlocks-1) | |
| OPTIONAL,    -- Need M | |
| resourceAllocation | ENUMERATED |
| { resourceAllocationType0, resourceAllocationType1, dynamicSwitch}, | |
| pusch-TimeDomainAllocationList | SetupRelease { PUSCH- |
| TimeDomainResourceAllocationList } | OPTIONAL,    -- Need M |
| pusch-AggregationFactor | ENUMERATED { n2, n4, n8 } |
| OPTIONAL,    -- Need S | |

```
        mcs-Table                              ENUMERATED {qam256,
qam64LowSE}                                      OPTIONAL,    -- Need
S
        mcs-TableTransformPrecoder             ENUMERATED {qam256,
qam64LowSE}                                      OPTIONAL,    -- Need
S
        transformPrecoder                      ENUMERATED {enabled,
disabled}                                        OPTIONAL,    -- Need S
        codebookSubset                         ENUMERATED
{fullyAndPartialAndNonCoherent, partialAndNonCoherent,nonCoherent}

OPTIONAL, -- Cond codebookBased
        maxRank                                            INTEGER
(1..4)
OPTIONAL, -- Cond codebookBased
        rbg-Size
ENUMERATED { config2}
OPTIONAL, -- Need S
        uci-OnPUSCH                                      SetupRelease
{ UCI-OnPUSCH}                               OPTIONAL, -- Need M
        tp-pi2BPSK
ENUMERATED {enabled}
OPTIONAL, -- Need S
        ...
}
```

Next, codebook-based PUSCH transmission will be described. The codebook-based PUSCH transmission may be dynamically scheduled through DCI format 0_0 or 0_1, and may be operated semi-statically by a configured grant. If a codebook-based PUSCH is dynamically scheduled through DCI format 0_1 or configured semi-statically by a configured grant, the UE determines a precoder for PUSCH transmission, based on an SRS resource indicator (SRI), a transmission precoding matrix indicator (TPMI), and a transmission rank (the number of PUSCH transmission layers).

The SRI may be given through the SRS resource indicator (a field inside DCI) or configured through srs-ResourceIndicator (upper signaling). During codebook-based PUSCH transmission, the UE has at least one SRS resource configured therefor, and may have a maximum of two SRS resources configured therefor. If the UE is provided with an SRI through DCI, the SRS resource indicated by the SRI refers to the SRS resource corresponding to the SRI among SRS resources transmitted prior to the PDCCH including the SRI. In addition, the TPMI and the transmission rank may be given through field "precoding information and number of layers" inside DCI or configured through precodingAndNumberOfLayers (upper signaling). The TPMI is used to indicate a precoder applied to PUSCH transmission. If one SRS resource is configured for the UE, the TPMI is used to indicate a precoder to be applied in the configured SRS resource. If multiple SRS resources are configured for the UE, the TPMI is used to indicate a precoder to be applied in an SRS resource indicated through the SRI.

The precoder to be used for PUSCH transmission is selected from an uplink codebook having the same number of antenna ports as the value of nrofSRS-Ports inside SRS-Config (upper signaling). In connection with codebook-based PUSCH transmission, the UE determines a codebook subset, based on codebookSubset inside pusch-Config (upper signaling) and TPMI. The codebookSubset inside pusch-Config (upper signaling) may be configured to be one of "fullyAndPartialAndNonCoherent", "partialAndNonCoherent", or "noncoherent", based on UE capability reported by the UE to the base station. If the UE reported "partialAndNonCoherent'" as UE capability, the UE does not expect that the value of codebookSubset (upper signaling) will be configured as "fullyAndPartialAndNonCoherent". In addition, if the UE reported "noncoherent" as UE capability, UE does not expect that the value of codebookSubset (upper signaling) will be configured as "fullyAndPartialAndNonCoherent" or "partialAndNonCoherent". If nrofSRS-Ports inside SRS-Resource-Set (upper signaling) indicates two SRS antenna ports, the UE does not expect that the value of codebookSubset (upper signaling) will be configured as "partialAndNonCoherent".

The UE may have one SRS resource set configured therefor, wherein the value of usage inside SRS-Resource-Set (upper signaling) is "codebook", and one SRS resource may be indicated through an SRI inside the SRS resource set. If multiple SRS resources are configured inside the SRS resource set wherein the value of usage inside SRS-ResourceSet (upper signaling) is "codebook", the UE expects that the value of nrofSRS-Ports inside SRS-Resource (upper signaling) is identical with regard to all SRS resources.

The UE transmit, to the base station, one or multiple SRS resources included in the SRS resource set wherein the value of usage is configured as "codebook" according to upper signaling, and the base station selects one from the SRS resources transmitted by the UE and instructs the UE to transmit a PUSCH by using transmission beam information of the corresponding SRS resource. In connection with the codebook-based PUSCH transmission, the SRI is used as information for selecting the index of one SRS resource, and is included in DCI. Additionally, the base station adds information indicating the rank and TPMI to be used by the UE for PUSCH transmission to the DCI. Using the SRS resource indicated by the SRI, the UE applies the precoder indicated by the rank and TPMI indicated based on the transmission beam of the corresponding SRS resource, thereby performing PUSCH transmission.

Next, non-codebook-based PUSCH transmission will be described. The non- codebook-based PUSCH transmission may be dynamically scheduled through DCI format 0_0 or 0_1, and may be operated semi-statically by a configured grant. If at least one SRS resource is configured inside an SRS resource set wherein the value of usage inside SRS-ResourceSet (upper signaling) is "nonCodebook", non-codebook-based PUSCH transmission may be scheduled for the UE through DCI format 0_1.

With regard to the SRS resource set wherein the value of usage inside SRS-ResourceSet (upper signaling) is "nonCodebook", one connected NZP CSI-RS resource (non-zero power CSI-RS) may be configured for the UE. The UE may calculate a precoder for SRS transmission by measuring the NZP CSI-RS resource connected to the SRS resource set. If the difference between the last received symbol of an aperiodic NZP CSI-RS resource connected to the SRS resource set and the first symbol of aperiodic SRS transmission in the UE is less than 42 symbols, the UE does not expect that information regarding the precoder for SRS transmission will be updated.

If the configured value of resourceType inside SRS-ResourceSet (upper signaling) is "aperiodic", the connected NZP CSI-RS is indicated by an SRS request which is a field inside DCI format 0_1 or 1_1. If the connected NZP CSI-RS resource is an aperiodic NZP CSI-RS resource, the existence of the connected NZP CSI-RS is indicated with regard to the case in which the value of SRS request (a field inside DCI format 0_1 or 1_1) is not "00". The corresponding DCI should not indicate cross carrier or cross BWP scheduling. In addition, if the value of SRS request indicates the existence of a NZP CSI-RS, the NZP CSI-RS is positioned in the slot used to transmit the PDCCH including the SRS request field. In this case, TCI states configured for the scheduled subcarrier are not configured as QCL-TypeD.

If there is a periodic or semi-persistent SRS resource set configured, the connected NZP CSI-RS may be indicated through associatedCSI-RS inside SRS-ResourceSet, which is upper signaling. With regard to non-codebook-based transmission, the UE does not expect that spatialRelationInfo, which is upper signaling regarding the SRS resource, and associatedCSI-RS inside SRS-ResourceSet, which is upper signaling, will be configured together.

If multiple SRS resources are configured for the UE, the UE may determine a precoder to be applied to PUSCH transmission and the transmission rank, based on an SRI indicated by the base station. The SRI may be indicated through the SRS resource indicator (a field inside DCI) or configured through srs-ResourceIndicator (upper signaling). Similarly to the above-described codebook-based PUSCH transmission, if the UE is provided with the SRI through DCI, the SRS resource indicated by the corresponding SRI refers to the SRS resource corresponding to the SRI, among SRS resources transmitted prior to the PDCCH including the corresponding SRI. The UE may use one or multiple SRS resources for SRS transmission, and the maximum number of SRS resources that can be transmitted simultaneously in the same symbol inside one SRS resource set and the maximum number of SRS resources are determined by UE capability reported to the base station by the UE. SRS resources simultaneously transmitted by the UE occupy the same RB. The UE configures one SRS port for each SRS resource. There may be only one configured SRS resource set wherein the value of usage inside SRS-ResourceSet (upper signaling) is "nonCodebook", and a maximum of four SRS resources can be configured for non-codebook-based PUSCH transmission.

The base station transmits one NZP-CSI-RS connected to the SRS resource set to the UE, and the UE calculates the precoder to be used when transmitting one or multiple SRS resources inside the corresponding SRS resource set, based on the result of measurement when the corresponding NZP-CSI-RS is received. The UE applies the calculated precoder when transmitting, to the base station, one or multiple SRS resources inside the SRS resource set wherein the configured usage is "nonCodebook", and the base station selects one or multiple SRS resources from the received one or multiple SRS resources. In connection with the non-codebook-based PUSCH transmission, the SRI indicates an index that may express one SRS resource or a combination of multiple SRS resources, and the SRI is included in DCI. The number of SRS resources indicated by the SRI transmitted by the base station may be the number of transmission layers of the PUSCH, and the UE transmits the PUSCH by applying the precoder applied to SRS resource transmission to each layer.

[PUSCH: regarding repeated transmission]

Hereinafter, repeated transmission of an uplink data channel in a 5G system will be described in detail. A 5G system supports two types of methods for repeatedly transmitting an uplink data channel, PUSCH repeated transmission type A and PUSCH repeated transmission type B. One of PUSCH repeated transmission type A and type B may be configured for a UE through upper layer signaling.

PUSCH repeated transmission type A

- As described above, the symbol length of an uplink data channel and the location of the start symbol may be determined by a time domain resource allocation method in one slot, and a base station may notify a UE of the number of repeated transmissions through upper layer signaling (for example, RRC signaling) or L1 signaling (for example, DCI).
- Based on the number of repeated transmissions received from the base station, the UE repeatedly transmit an uplink data channel having the same length and start symbol as the configured uplink data channel, in a continuous slot. If the base station configured a slot as a downlink for the UE, or if at least one of symbols of the uplink data channel configured for the UE is configured as a downlink, the UE omits uplink data channel transmission, but counts the number of repeated transmissions of the uplink data channel.

PUSCH repeated transmission type B

- As described above, the start symbol and length of an uplink data channel may be determined by a time domain resource allocation method in one slot, and the base station may notify the UE of the number of repeated transmissions (numberofrepetitions) through upper layer signaling (for example, RRC signaling) or L1 signaling (for example, DCI).
- The nominal repetition of the uplink data channel is determined as follows, based on the previously configured start symbol and length of the uplink data channel. The slot in which the nth nominal repetition starts is given by

$$K_s + \left\lfloor \frac{S + n \cdot L}{N_{symb}^{slot}} \right\rfloor$$, and the symbol starting in that slot is given by $$mod\left(S + n \cdot L, N_{symb}^{slot}\right)$$. The slot in which the nth nominal repetition ends is given by $$K_s + \left\lfloor \frac{S + (n+1) \cdot L - 1}{N_{symb}^{slot}} \right\rfloor$$, and the symbol ending in that slot is given by

$$mod\left(S + (n + 1) \cdot L - 1, N_{symb}^{slot}\right)$$. In this regard, n=0,..., numberofrepetitions-1, S refers to the start symbol of the configured uplink data channel, and L refers to the symbol length of the configured uplink data channel. $K_s$

refers to the slot in which PUSCH transmission starts, and $N_{symb}^{slot}$ refers to the number of symbols per slot.

- The UE determines an invalid symbol for PUSCH repeated transmission type B. A symbol configured as a downlink by tdd-UL-DL-ConfigurationCommon or tdd-UL-DL-ConfigurationDedicated is determined as the invalid symbol for PUSCH repeated transmission type B. Additionally, the invalid symbol may be configured in an upper layer parameter (for example, InvalidSymbolPattern). The upper layer parameter (for example, InvalidSymbolPattern) may provide a symbol level bitmap across one or two slots, thereby configuring the invalid symbol. In the bitmap, 1 represents the invalid symbol. Additionally, the cycle and pattern of the bitmap may be configured through the upper layer parameter (for example, InvalidSymbolPattern). If an upper layer parameter (for example, InvalidSymbolPattern) is configured, and if parameter InvalidSymbolPatternIndicator-ForDCIFormat0_1 or InvalidSymbolPatternIndicator-ForDCIFormat0_2 indicates 1, the UE applies an invalid symbol pattern, and if the above parameter indicates 0, the UE does not apply the invalid symbol pattern. If an upper layer parameter (for example, InvalidSymbolPattern) is configured, and if parameter InvalidSymbolPatternIndicator-ForDCIFormat0_1 or InvalidSymbolPatternIndicator-ForDCIFormat0_2 is not configured, the UE applies the invalid symbol pattern.

After an invalid symbol is determined, the UE may consider, with regard to each nominal repetition, that symbols other than the invalid symbol are valid symbols. If one or more valid symbols are included in each nominal repetition, the nominal repetition may include one or more actual repetitions. Each actual repetition includes a set of consecutive valid symbols available for PUSCH repeated transmission type B in one slot.

FIG. 15 illustrates an example of PUSCH repeated transmission type B in a wireless communication system according to an embodiment of the disclosure. The UE may receive the following configurations: the start symbol S of an uplink data channel is 0, the length L of the uplink data channel is 14, and the number of repeated transmissions is 16. In this case, nominal repetitions appear in 16 consecutive slots (1501). Thereafter, the UE may determine that the symbol configured as a downlink symbol in each nominal repetition 1501 is an invalid symbol. In addition, the UE determines that symbols configured as 1 in the invalid symbol pattern 1502 are invalid symbols. If valid symbols other than invalid symbols in respective nominal repetitions constitute one or more consecutive symbols in one slot, they are configured and transmitted as actual repetitions (1503).

In addition, with regard to PUSCH repeated transmission, additional methods may be defined in NR Release 16 with regard to UL grant-based PUSCH transmission and configured grant-based PUSCH transmission, across slot boundaries, as follows.

- Method 1 (mini-slot level repetition): through one UL grant, two or more PUSCH repeated transmissions are scheduled inside one slot or across the boundary of consecutive slots. In addition, in connection with method 1, time domain resource allocation information inside DCI indicates resources of the first repeated transmission. In addition, time domain resource information of remaining repeated transmissions may be determined according to time domain resource information of the first repeated transmission, and the uplink or downlink direction determined with regard to each symbol of each slot. Each repeated transmission occupies consecutive symbols.
- Method 2 (multi-segment transmission): through one UL grant, two or more PUSCH repeated transmissions are scheduled in consecutive slots. Transmission no. 1 is designated with regard to each slot, and the start point or repetition length may differ between respective transmission. In addition, in method 2, time domain resource allocation information inside DCI indicates the start point and repetition length of all repeated transmissions. In addition, when performing repeated transmissions inside a single slot through method 2, if there are multiple bundles of consecutive uplink symbols in the corresponding slot, respective repeated transmissions are performed with regard to respective uplink symbol bundles. If there is a single bundle of consecutive uplink symbols in the corresponding slot, PUSCH repeated transmission may be performed once according to the method of NR Release 15.
- Method 3: two or more PUSCH repeated transmissions are scheduled in consecutive slots through two or more UL grants. Transmission no. 1 is designated with regard to each slot, and the $n^{th}$ UL grant may be received before PUSCH transmission scheduled by the $(n-1)^{th}$ UL grant is over.
- Method 4: through one UL grant or one configured grant, one or multiple PUSCH repeated transmissions inside a single slot, or two or more PUSCH repeated transmissions across the boundary of consecutive slots may be supported. The number of repetitions indicated to the UE by the base station is only a nominal value, and the UE may actually perform a larger number of PUSCH repeated transmissions than the nominal number of repetitions. Time domain resource allocation information inside DCI or configured grant may refer to resources of the first repeated transmission indicated by the base station. Time domain resource information of remaining repeated transmissions may be determined with reference to resource information of the first repeated transmission and the uplink or downlink direction of symbols. If time domain resource information of a repeated transmission indicated by the base station spans a slot boundary or includes an uplink/downlink switching point, the corresponding repeated transmission may be divided into multiple repeated transmissions. One repeated transmission may be included in one slot with regard to each uplink period.

[Regarding UE capability report]

In LTE and NR, a UE may perform a procedure in which, while being connected to a serving base station, the UE reports capability supported by the UE to the corresponding base station. This will be referred to as a UE capability report in the following description.

The base station may transfer a UE capability enquiry message to the UE in a connected state so as to request a capability report. The message may include a UE capability request with regard to each radio access technology (RAT) type of the base station. The RAT type-specific request may include supported frequency band combination information and the like. In addition, in the case of the UE capability enquiry message, UE capability with regard to multiple RAT types may be requested through one RRC message container transmitted by the base station, or the base station may transfer a UE capability enquiry message including multiple UE capability requests with regard to respective RAT types. That is, multiple capability enquiries may be included in one message, and may configure a UE capability information message corresponding thereto and report the same multiple times. In next-generation mobile communication systems, a UE capability request may be made regarding multi-RAT dual connectivity (MR-DC), such as NR, LTE, E-UTRA - NR dual connectivity (EN-DC). In addition, the UE capability enquiry message is transmitted initially after the UE is connected to the base station, in general, but may be requested in any condition if needed by the base station.

Upon receiving the UE capability report request from the base station in the above step, the UE configures UE capability according to band information and RAT type required by the base station. The method in which the UE configures UE capability in an NR system is summarized below.

1. If the UE receives a list regarding LTE and/or NR bands from the base station at a UE capability request, the UE constructs band combinations (BCs) regarding EN-DC and NR standalone (SA). That is, the UE configures a candidate list of BCs regarding EN-DC and NR SA, based on bands received from the base station at a request through FreqBandList. In addition, bands have priority in the order described in FreqBandList.

2. If the base station has set "eutra-nr-only" flag or "eutra" flag and requested a UE capability report, the UE removes everything related to NR SA BCs from the configured BC candidate list. Such an operation may occur only if an LTE base station (eNB) requests "eutra" capability.

3. The UE then removes fallback BCs from the BC candidate list configured in the above step. As used herein, a fallback BC refers to a BC that can be obtained by removing a band corresponding to at least one SCell from a specific BC, and since a BC before removal of the band corresponding to at least one SCell can already cover a fallback BC, the same can be omitted. This step is applied in MR-DC as well, that is, LTE bands are also applied. BCs remaining after this step constitute the final "candidate BC list".

4. The UE selects BCs appropriate for the requested RAT type from the final "candidate BC list" and selects BCs to report. In this step, the UE configures supportedBandCombinationList in a determined order. That is, the UE configures BCs and UE capability to report according to a preconfigured rat-Type order. In addition, the UE configures featureSetCombination regarding the configured supportedBandCombinationList and configures a list of "candidate feature set combinations" from a candidate BC list from which a list regarding fallback BCs (including capability of the same or lower step) is removed. The "candidate feature set combinations" include all feature set combinations regarding NR and EUTRA-NR BCs, and are obtainable from feature set combinations of containers of UE-NR-Capabilities and UE-MRDC-Capabilities.

5. In addition, if the requested RAT type is eutra-nr and has an influence, featureSetCombinations is included on both containers of UE-MRDC-Capabilities and UE-NR-Capabilities. However, the feature set of NR is included only in UE-NR-Capabilities.

After the UE capability is configured, the UE transfers a UE capability information message including the UE capability to the base station. The base stations performs scheduling and transmission/reception management appropriate for the UE, based on the UE capability received from the UE.

[Regarding CA/DC]

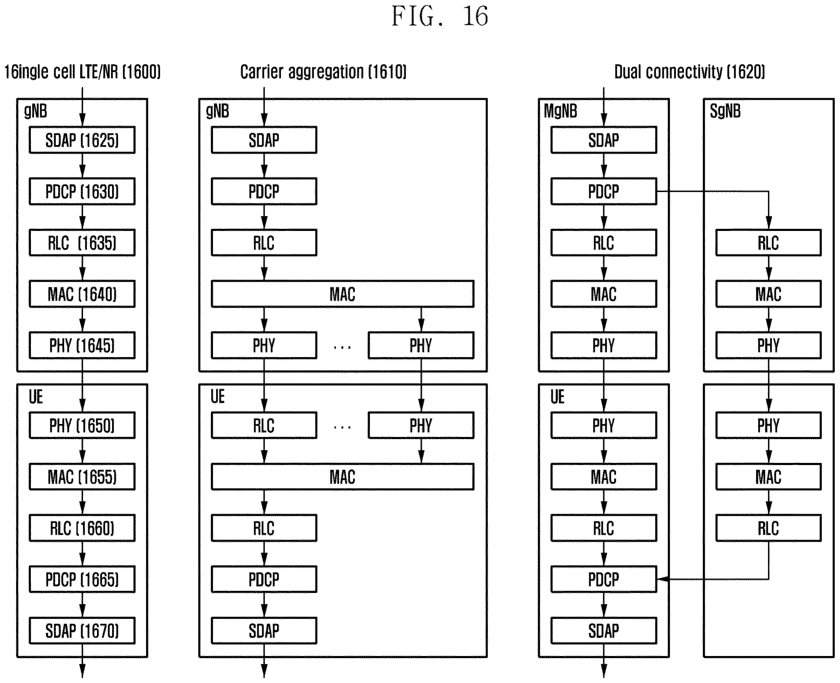

FIG. 16 illustrates radio protocol structures of a base station and a UE in single cell, carrier aggregation, and dual connectivity situations according to an embodiment of the disclosure.

Referring to FIG. 16, a radio protocol of a next-generation mobile communication system includes NR service data adaptation protocols (SDAPs) 2025 and 2070, NR packet data convergence protocols (PDCPs) 2030 and 2065, NR radio link controls (RLCs) 2035 and 2060, and NR medium access controls (MACs) 2040 and 2055, in a UE and an NR base station, respectively.

The main functions of the NR SDAP 2025 or 2070 may include some of functions: below.

- Transfer of user plane data
- Mapping between a QoS flow and a DRB for both DL and UL
- Marking QoS flow ID in both DL and UL packets
- Reflective QoS flow to DRB mapping for the UL SDAP PDUs

With regard to the SDAP layer device, the UE may be configured, through an RRC message, whether to use the header of the SDAP layer device or whether to use functions of the SDAP layer device for each PDCP layer device or each bearer or each logical channel. If an SDAP header is configured, the non-access stratum (NAS) QoS reflection configuration 1-bit indicator (NAS reflective QoS) and the AS QoS reflection configuration 1-bit indicator (AS reflective QoS) of the SDAP header may be indicated so that the UE can update or reconfigure mapping information regarding the QoS flow and data bearer of the uplink and downlink. The SDAP header may include QoS flow ID information indicating the QoS. The QoS information may be used as data processing priority, scheduling information, etc. for smoothly supporting services.

The main functions of the NR PDCP 2030 or 2065 may include some of functions: below.

- Header compression and decompression: ROHC only
- Transfer of user data
- In-sequence delivery of upper layer PDUs
- Out-of-sequence delivery of upper layer PDUs
- PDCP PDU reordering for reception
- Duplicate detection of lower layer SDUs
- Retransmission of PDCP SDUs
- Ciphering and deciphering
- Timer-based SDU discard in uplink

The above-mentioned reordering of the NR PDCP device refers to a function of reordering PDCP PDUs received from a lower layer in an order based on the PDCP sequence number (SN), and may include a function of transferring data to an upper layer in the reordered sequence. Alternatively, the reordering of the NR PDCP device may include a function of instantly transferring data without considering the order, may include a function of recording PDCP PDUs lost as a result of reordering, may include a function of reporting the state of the lost PDCP PDUs to the transmitting side, and may include a function of requesting retransmission of the lost PDCP PDUs.

The main functions of the NR RLC 2035 or 2060 may include some of functions: below.

- Transfer of upper layer PDUs
- In-sequence delivery of upper layer PDUs
- Out-of-sequence delivery of upper layer PDUs
- Error Correction through ARQ
- Concatenation, segmentation and reassembly of RLC SDUs
- Re-segmentation of RLC data PDUs
- Reordering of RLC data PDUs
- Duplicate detection
- Protocol error detection
- RLC SDU discard
- RLC re-establishment

The above-mentioned in-sequence delivery of the NR RLC device may refer to a function of successively delivering RLC SDUs received from the lower layer to the upper layer. The in-sequence delivery of the NR RLC device may include a function of reassembling and delivering multiple RLC SDUs received, into which one original RLC SDU has been segmented, may include a function of reordering the received RLC PDUs with reference to the RLC sequence number (SN) or PDCP sequence number (SN), may include a function of recording RLC PDUs lost as a result of reordering, may include a function of reporting the state of the lost RLC PDUs to the transmitting side, and may include a function of requesting retransmission of the lost RLC PDUs. The in-sequence delivery of the NR RLC device may include a function of, if there is a lost RLC SDU, successively delivering only RLC SDUs before the lost RLC SDU to the upper layer, and may include a function of, if a predetermined timer has expired although there is a lost RLC SDU, successively delivering all RLC SDUs received before the timer was started to the upper layer. Alternatively, the in-sequence delivery of the NR RLC device may include a function of, if a predetermined timer has expired although there is a lost RLC SDU, successively delivering all currently received RLC SDUs to the upper layer. In addition, the RLC PDUs may be processed in the received order (regardless of the sequence number order, in the order of arrival) and delivered to the PDCP device regardless of the order (out-of-sequence delivery), and in the case of segments, segments which are stored in a buffer or are to be received later may be received, reconfigured into one complete RLC PDU, processed, and delivered to the PDCP device. The NR RLC layer may include no concatenation function, which may be performed in the NR MAC layer or replaced with a multiplexing function of the NR MAC layer.

The out-of-sequence delivery of the NR RLC device refers to a function of instantly delivering RLC SDUs received from the lower layer to the upper layer regardless of the order, may include a function of reassembling and delivering multiple RLC SDUs received, into which one original RLC SDU has been segmented, and may include a function of storing the RLC SN or PDCP SN of received RLC PDUs, and recording RLC PDUs lost as a result of reordering.

The NR MAC 2040 or 2055 may be connected to multiple NR RLC layer devices configured in one UE, and the main functions of the NR MAC may include some of functions below.

- Mapping between logical channels and transport channels
- Multiplexing/demultiplexing of MAC SDUs
- Scheduling information reporting
- Error correction through HARQ
- Priority handling between logical channels of one UE
- Priority handling between UEs by means of dynamic scheduling
- MBMS service identification
- Transport format selection
- Padding

An NR PHY layers 2045 and 2050 may perform operations of channel-coding and modulating upper layer data, thereby obtaining OFDM symbols, and delivering the same through a radio channel, or demodulating OFDM symbols received through the radio channel, channel-decoding the same, and delivering the same to the upper layer.

The detailed structure of the radio protocol structure may be variously changed according to the carrier (or cell) operating scheme. As an example, assuming that the base station transmits data to the UE based on a single carrier (or cell), the base station and the UE use a protocol structure having a single structure with regard to each layer, such as 2000. On the other hand, assuming that the base station transmits data to the UE based on carrier aggregation (CA) which uses multiple carriers in a single TRP, the base station and the UE use a protocol structure which has a single structure up to the RLC, such as 2010, but multiplexes the PHY layer through a MAC layer. As another example, assuming that the base station transmits data to the UE based on dual connectivity (DC) which uses multiple carriers in multiple TRPs, the base station and the UE use a protocol structure which has a single structure up to the RLC, such as 2020, but multiplexes the PHY layer through a MAC layer.

Hereinafter, embodiments of the disclosure will be described in detail in conjunction with the accompanying drawings. Of course, the embodiments of the disclosure may be employed in FDD and TDD systems. As used herein, upper signaling (or upper layer signaling) is a method for transferring signals from a base station to a UE by using a downlink data channel of a physical layer, or from the UE to the base station by using an uplink data channel of the physical layer, and may also be referred to as RRC signaling, PDCP signaling, or a medium access control (MAC) control element (MAC CE).

Hereinafter, in the disclosure, the UE may use various methods to determine whether or not to apply cooperative communication, for example, PDCCH(s) that allocates a PDSCH to which cooperative communication is applied have a specific format, or PDCCH(s) that allocates a PDSCH to which cooperative communication is applied include a specific indicator indicating whether or not to apply cooperative communication, or PDCCH(s) that allocates a PDSCH to which cooperative communication is applied are scrambled by a specific RNTI, or cooperative communication application is assumed in a specific range indicated by an upper layer. Hereinafter, it will be assumed, for convenience of description, that NC-JT case refers to a case in which the UE receives a PDSCH to which cooperative communication is applied, based on conditions similar to those described above.

Hereinafter, determining priority between A and B may be variously described as, for example, selecting an entity having a higher priority according to a predetermined priority rule and performing an operation corresponding thereto, or omitting or dropping operations regarding an entity having a lower priority.

Hereinafter, the above examples may be described through multiple embodiments, but they are not independent of each other, and one or more embodiments may be applied simultaneously or in combination.

[NC-JT Related]

According to an embodiment of the disclosure, non-coherent joint transmission (NC-JT) may be used for a UE to receive a PDSCH from a plurality of TRPs.

Unlike the existing system, the 5G wireless communication system may support all of a service requiring a high transfer rate, a service having a very low latency, and a service requiring a high connection density. In a wireless communication network including a plurality of cells, transmission and reception points (TRPs), or beams, coordinated transmission between cells, TRPs, and/or beams may satisfy various service requirements by increasing the strength of a signal received by the UE or efficiently performing control of interference between cells, TRPs, and/or beams.

The joint transmission (JT), which is a representative transmission technology for the above-mentioned cooperative communication (or coordinated transmission), is a technique to increase the strength of a signal received by the UE or throughput by transmitting a signal to one UE through a plurality of different cells, TRPs, and/or beams. In this case, a channel between the UE and the cell, TRP, and/or beam may have significantly different characteristics. In particular, the non-coherent joint transmission (NC-JT) that supports non-coherent precoding between cells, TRPs, and/or beams may require individual precoding, MCS, resource allocation, TCI indication, etc., according to the channel characteristics for each link between the UE and the cell, TRP, and/or beam.

The above-described NC-JT transmission may be applied to at least one channel of a DL data channel (PDSCH), a DL control channel (PDCCH), a UL data channel (PUSCH), and a UL control channel (PUCCH). During PDSCH transmission, transmission information such as precoding, MCS, resource allocation, and TCI is indicated by DL DCI, and for the NC-JT transmission, the transmission information should be independently indicated for each cell, TRP, and/or beam. This becomes a major factor in increasing a payload required for DL DCI transmission, which may adversely affect reception performance of the PDCCH transmitting the DCI. Therefore, it is necessary to carefully design a tradeoff between the amount of DCI information and the control information reception performance to support the JT of the PDSCH.

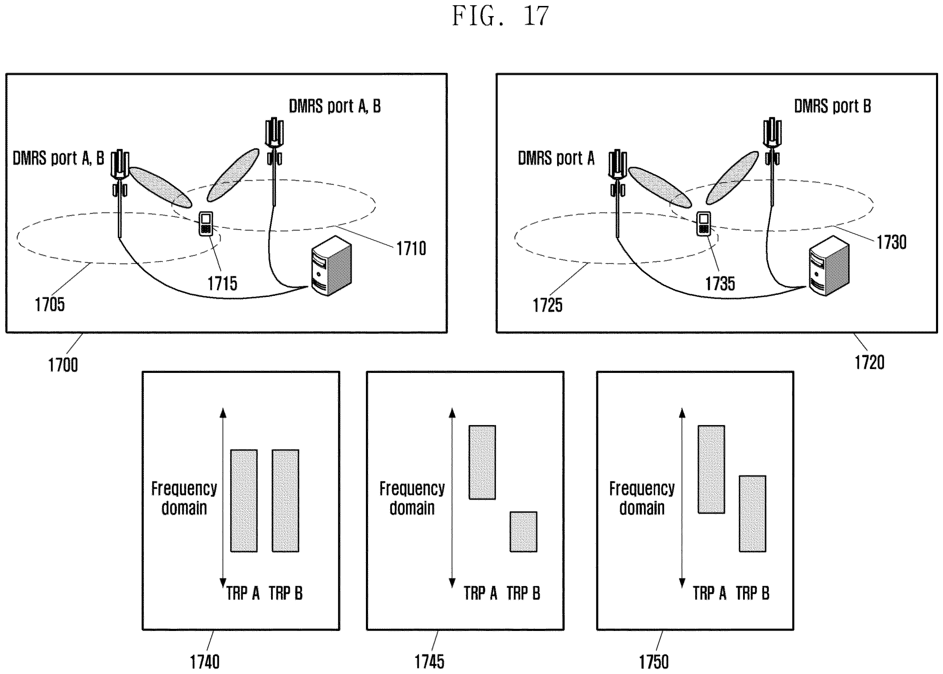

FIG. 17 illustrates an example of antenna port configuration and resource allocation for transmitting a PDSCH by using cooperative communication in a wireless communication system according to an embodiment of the disclosure.

With reference to FIG. 17, an example for PDSCH transmission is described for each technique of joint transmission (JT), and examples for allocating radio resources for each TRP are shown.

With reference to FIG. 17, an example 1700 of coherent joint transmission (C-JT) supporting coherent precoding between cells, TRPs, and/or beams is shown.

In case of C-JT, TRP A 1705 and TRP B 1710 transmit single data (PDSCH) to a UE 1715, and joint precoding may be performed in a plurality of TRPs. This may imply that DMRS is transmitted through the same DMRS ports so that TRP A 1705 and TRP B 1710 transmit the same PDSCH. For example, each of TRP A 1705 and TRP B 1710 may transmit the DRMS to the UE through DMRS port A and DMRS B. In this case, the UE may receive one piece of DCI information for receiving one PDSCH demodulated based on the DMRS transmitted through DMRS port A and DMRS B.

FIG. 17 illustrates an example 1720 of non-coherent joint transmission (NC-JT) supporting non-coherent precoding between cells, TRPs, and/or beams for PDSCH transmission.

In case of NC-JT, the PDSCH is transmitted to a UE 1735 for each cell, TRP, and/or beam, and individual precoding may be applied to each PDSCH. Each cell, TRP, and/or beam transmits a different PDSCH or a different PDSCH layer to the UE, thereby improving throughput compared to single cell, TRP, and/or beam transmission. In addition, each cell, TRP, and/or beam repeatedly transmits the same PDSCH to the UE, thereby improving reliability compared to single cell, TRP, and/or beam transmission. For convenience of description, the cell, TRP, and/or beam is hereinafter collectively referred to as a TRP.

For PDSCH transmission, various radio resource allocation cases may be considered such as a case in which the frequency and time resources used by a plurality of TRPs are all the same (indicated by reference numeral 1740), a case in which the frequency and time resources used by the plurality of TRPs do not overlap at all(indicated by reference numeral 1745), and a case in which the frequency and time resources used by the plurality of TRPs partially overlap (indicated by reference numeral 1750).

In order to simultaneously allocate a plurality of PDSCHs to one UE for NC-JT support, DCIs of various types, structures, and relationships may be considered.

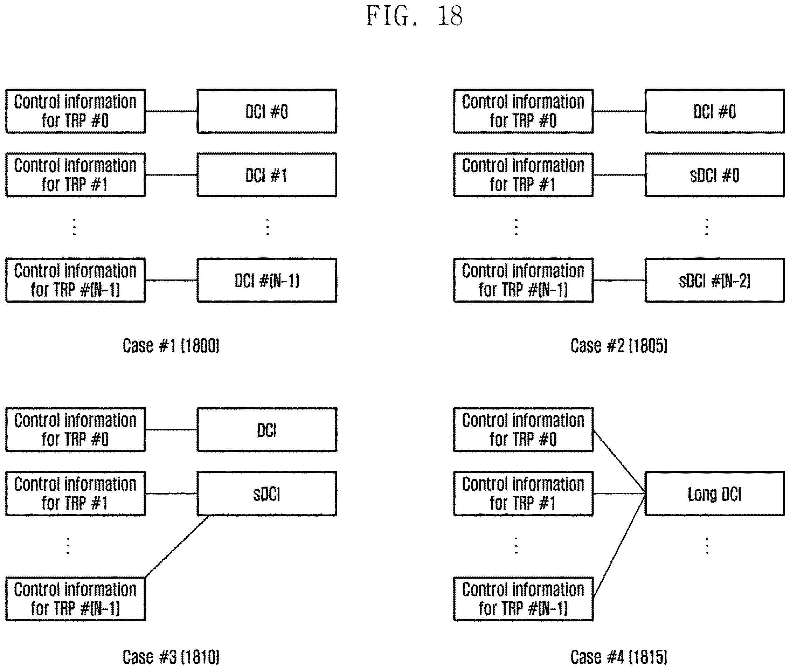

FIG. 18 illustrates an example of a configuration of downlink control information (DCI) for NC-JT in which respective TRPs transmit different PDSCHs or different PDSCH layers to a UE in a wireless communication system according to an embodiment of the disclosure.

With reference to FIG. 18, case #1 1800 is an example that, in a situation where different (N-1) PDSCHs are transmitted from (N-1) additional TRPs (TRP #1 to TRP #(N-1)) in addition to a serving TRP (TRP #0) used for single PDSCH transmission, control information for the PDSCHs transmitted in the (N-1) additional TRPs is transmitted independently of control information for the PDSCHs transmitted in the serving TRP. That is, the UE may obtain control information for PDSCHs transmitted from different TRPs (TRP #0 to TRP #(N-1)) through independent DCIs (DCI #0 to DCI #(N-1)). The format between the independent DCIs may be identical with or different from each other, and the payload between the DCIs may also be identical with or different from each other. In the aforementioned case #1, each PDSCH control or allocation freedom may be completely guaranteed, but when each DCI is transmitted in different TRPs, a coverage difference for each DCI may occur and reception performance may deteriorate.

Case #2 1805 is an example that, in a situation where different (N-1) PDSCHs are transmitted from (N-1) additional TRPs (TRP #1 to TRP #(N-1)) in addition to a serving TRP (TRP #0) used for single PDSCH transmission, respective pieces of control information (DCI) for the PDSCH of (N-1) additional TRPs are transmitted, and each of these DCIs is dependent on the control information for the PDSCH transmitted from the serving TRP.

For example, in case of DCI #0, which is control information for PDSCH transmitted from the serving TRP (TRP #0), all information elements of DCI format 1_0, DCI format 1_1, and DCI format 1_2 are included. However, in case of shortened DCI (hereinafter, sDCI) (sDCI #0 to sDCI #(N-2)), which is control information for PDSCHs transmitted from cooperative TRPs (TRP #1 to TRP #(N-1)), only some of the information elements of format 1_0, DCI format 1_1, and DCI format 1_2 may be included. Therefore, in case of sDCI transmitting control information for PDSCHs transmitted from cooperative TRPs, since the payload is small compared to normal DCI (nDCI) for transmitting PDSCH-related control information transmitted from the serving TRP, it is possible to include reserved bits compared to nDCI.

In case #2 described above, each PDSCH control or allocation freedom may be limited according to the content of the information element included in sDCI. However, since the reception performance of sDCI is superior to that of nDCI, a probability of occurrence of a coverage difference for each DCI may be reduced.

Case #3 1810 is an example that, in a situation where different (N-1) PDSCHs are transmitted from (N-1) additional TRPs (TRP #1 to TRP #(N-1)) in addition to a serving TRP (TRP #0) used for single PDSCH transmission, one control information for the PDSCH of (N-1) additional TRPs is transmitted, and this DCI is dependent on the control information for the PDSCH transmitted from the serving TRP.

For example, in case of DCI #0, which is control information for PDSCH transmitted from the serving TRP (TRP #0), all information elements of DCI format 1_0, DCI format 1_1, and DCI format 1_2 are included, and in case of control information for PDSCHs transmitted from cooperative TRPs (TRP #1 to TRP #(N-1)), only some of the information elements of DCI format 1_0, DCI format 1_1, and DCI format 1_2 can be collected as one 'secondary' DCI (sDCI) and transmitted. For example, the sDCI may include at least one of HARQ-related information such as frequency domain resource assignment, time domain resource assignment, and MCS of cooperative TRPs. In addition, in case of information not included in the sDCI, such as a BWP indicator or carrier indicator, it may follow DCI (DCI #0, normal DCI, nDCI) of the serving TRP.

In case #3 1810, each PDSCH control or allocation freedom may be limited according to the content of the information element included in the sDCI, but the sDCI reception performance can be adjusted and, compared to case #1 1800 or case #2 1805, the complexity of DCI blind decoding of the UE may be reduced.

Case #4 1815 is an example that, in a situation where different (N-1) PDSCHs are transmitted from (N-1) additional TRPs (TRP #1 to TRP #(N-1)) in addition to a serving TRP (TRP #0) used for single PDSCH transmission, control information for PDSCH transmitted from (N-1) additional TRPs is transmitted in the same DCI (long DCI) as control information for PDSCH transmitted from the serving TRP. That is, the UE may obtain control information for PDSCHs transmitted from different TRPs (TRP #0 to TRP #(N-1)) through single DCI. In case #4 1815, although the complexity of DCI blind decoding of the UE may not increase, the number of cooperative TRPs may be limited due to long DCI payload limitations, resulting in lowering the degree of freedom in PDSCH control or allocation.

In the following description and embodiments, the sDCI may refer to various auxiliary DCIs, such as shortened DCI, secondary DCI, or normal DCI (the above-described DCI formats 1_0 to 1_1) including PDSCH control information transmitted in cooperative TRP. In case that no specific limitation is specified, the description is similarly applicable to the various auxiliary DCIs.

In the following description and embodiments, the above-described cases #1 1800, case #2 1805, and case #3 1810 in which one or more DCI (PDCCH) are used for NC-JT support may be classified as multiple PDCCH-based NC-JT, and the above-described case #4 1815 in which single DCI (PDCCH) is used for NC-JT support may be classified as single PDCCH-based NC-JT. In multiple PDCCH-based PDSCH transmission, a CORESET for scheduling DCI of the serving TRP (TRP #0) may be distinguished from CORESETs for scheduling DCI of the cooperative TRPs (TRP #1 to TRP #(N-1)). A method of distinguishing CORESETs may include a distinguishing method through a higher layer indicator for each CORESET, a distinguishing method through a beam configuration for each CORESET, and the like. In addition, in single PDCCH-based NC-JT, single DCI schedules a single PDSCH having a plurality of layers instead of scheduling a plurality of PDSCHs, and the plurality of layers described above may be transmitted from a plurality of TRPs. Association between a layer and a TRP for transmitting the layer may be indicated through a transmission configuration indicator (TCI) indication for the layer.

In the embodiments of the disclosure, "cooperative TRP" may be replaced by various terms such as "cooperative panel" or "cooperative beam" when actually applied.

In the embodiments of the disclosure, "a case in which NC-JT is applied" may be interpreted in various ways depending on situations, such as "a case in which the UE receives one or more PDSCHs at the same time in one BWP", "a case in which the UE receives the PDSCH based on indication of two or more transmission configuration indicators (TCIs) simultaneously in one BWP", and "a case in which the PDSCH received by the UE is associated with one or more DMRS port groups", but is used by one expression for convenience of explanation.

In the disclosure, a wireless protocol structure for NC-JT may be used in various ways depending on TRP deployment scenarios. For example, when there is no backhaul delay between cooperative TRPs or there is a small backhaul delay, a method (a CA-like method) using a structure based on MAC layer multiplexing can be used similarly to reference numeral S 10 of FIG. 18. On the other hand, when the backhaul delay between cooperative TRPs is too large to be ignored (e.g., a time of 2 ms or longer is needed to exchange information such as CSI, scheduling, and HARQ-ACK between cooperative TRPs), a method (a DC-like method) of securing a characteristic robust to a delay can be used by using an independent structure for each TRP from an RLC layer similar to reference numeral 1620 of FIG. 16.

The UE supporting C-JT/NC-JT may receive a C-JT/NC-JT-related parameter or a setting value from a higher layer configuration and set an RRC parameter of the UE based on the received parameter or value. For the higher layer configuration, the UE may use a UE capability parameter, for example, tci-StatePDSCH. Here, the UE capability parameter, for example, tci-StatePDSCH, may define TCI states for the purpose of PDSCH transmission, and the number of TCI states may be configured as 4, 8, 16, 32, 64, or 128 in FR1, and as 64 or 128 in FR2, and a maximum of 8 states which can be indicated by 3 bits of a TCI field of DCI may be configured through a MAC CE message among the configured number. A maximum value of 128 refers to a value indicated by maxNumberConfiguredTCIstatesPerCC in the tci-StatePDSCH parameter included in capability signaling of the UE. As such, a series of configuration processes from the higher layer configuration to the MAC CE configuration may be applied to a beamforming indication or a beamforming change command for at least one PDSCH in one TRP.

[Multi-TRP-based on Multi-DCI]

According to an embodiment of the disclosure, a multi-DCI-based multi-TRP transmission method is described. The multi-DCI-based multi-TRP transmission method may configure a downlink control channel for NC-JT transmission based on a multi-PDCCH.

In NC-JT based on multiple PDCCHs, there may be a CORESET or a search space separated for each TRP when DCI for scheduling the PDSCH of each TRP is transmitted. The CORESET or the search space for each TRP may be configured as in at least one of the following cases.

* A configuration of a higher-layer index for each CORESET: CORESET configuration information configured by a higher layer may include an index value, and a TRP for transmitting a PDCCH in the corresponding CORESET may be distinguished by the configured index value for each CORESET. That is, in a set of CORESETs having the same higher-layer index value, it may be considered that the same TRP transmits the PDCCH or the PDCCH for scheduling the PDSCH of the same TRP is transmitted. The index for each CORESET described above may be named CORESETPoolIndex, and it may be considered that the PDCCH is transmitted from the same TRP, with respect to CORESETs in which the same CORESETPoolIndex value is configured. In case of a CORESET in which the same CORESETPoolIndex value is not configured, it may be considered that a default value of CORESETPoolIndex is configured, and the default value may be 0.

- In the disclosure, in case that the type of CORESETPoolIndex of each of a plurality of CORESETs included in PDCCH-Config, which is higher layer signaling, exceeds one, that is, if each CORESET has a different CORESETPoolIndex, the UE may consider that the base station can use the multi-DCI-based multi-TRP transmission method.
- On the other hand, in the disclosure, if the type of CORESETPoolIndex of each of a plurality of CORESETs included in PDCCH-Config, which is higher layer signaling, is one, that is, in case that all CORESETs have the same CORESETPoolIndex of 0 or 1, the UE may consider that the base station performs transmission by using single-TRP instead of using the multi-DCI-based multi-TRP transmission method.

* A configuration of multiple PDCCH-Config: a plurality of PDCCH-Config are configured in one BWP, and each PDCCH-Config may include a PDCCH configuration for each TRP. That is, a list of CORESETs for each TRP and/or a list of search spaces for each TRP may be included in one PDCCH-Config, and one or more CORESETs and one or more search spaces included in one PDCCH-Config may be considered to correspond to a specific TRP.
* A configuration of a CORESET beam/beam group: a TRP corresponding to the corresponding CORESET may be distinguished through a beam or a beam group configured for each CORESET. For example, when the same TCI state is configured in a plurality of CORESETs, it may be considered that the corresponding CORESETs are transmitted through the same TRP or a PDCCH for scheduling a PDSCH of the same TRP is transmitted in the corresponding CORESET.
* A configuration of a search space beam/beam group: a beam or a beam group is configured for each search space, and a TRP for each search space may be distinguished therethrough. For example, when the same beam/beam group or TCI state is configured in a plurality of search spaces, it may be considered that the same TRP transmits the PDCCH in the corresponding search space or a PDCCH for scheduling a PDSCH of the same TRP is transmitted in the corresponding search space.

As described above, by distinguishing the CORESETs or search spaces for each TRP, it is possible to classify PDSCH and HARQ-ACK information for each TRP and accordingly to generate an independent HARQ-ACK codebook for each TRP and use an independent PUCCH resource.

The configuration may be independent for each cell or BWP. For example, while two different CORESETPoolIndex values may be configured in a PCell, no CORESETPoolIndex value may be configured in a specific SCell. In this case, it may be considered that NC-JT transmission is configured in the PCell, but NC-JT transmission is not configured in the SCell in which no CORESETPoolIndex value is configured.

The PDSCH TCI state activation/deactivation MAC-CE applicable to the multi-DCI-based multi-TRP transmission method may follow the above FIG. 14B. In case that the UE is not configured with CORESETPoolIndex for each of all CORESETs in the higher layer signaling PDCCH-Config, the UE may ignore a CORESET Pool ID field 1455 in the corresponding MAC-CE 1450. In case that the UE can support the multi-DCI-based multi-TRP transmission method, that is, if the UE has a different CORESETPoolIndex for each CORESET in the higher layer signaling PDCCH-Config, the UE may activate the TCI state in the DCI contained in the PDCCH transmitted in CORESETs having the same CORESETPoolIndex value as that of a CORESET Pool ID field 1455 in the corresponding MAC-CE 1450. For example, if the CORESET Pool ID field 1455 in the MAC-CE 1450 has a value of 0, the TCI state in the DCI contained in the PDCCH transmitted in CORESETs having the CORESETPoolIndex of 0 may follow the activation information of the corresponding MAC-CE.

When the UE is configured to use the multi-TRP transmission method based on the multi-DCI from the base station, that is, when the type of CORESETPoolIndex of each of a plurality of CORESETs included in the higher layer signaling PDCCH-Config exceeds one, or when each CORESET has different CORESETPoolIndexes, the UE may know that the following restrictions exist for PDSCHs scheduled from the PDCCH in each CORESET having two different CORESETPoolIndexes.

1) In case that PDSCHs indicated from the PDCCH in each CORESET having two different CORESETPoolIndexes completely or partially overlap, the UE may apply the TCI states indicated by each PDCCH to different CDM groups, respectively. That is, two or more TCI states may not be applied to one CDM group.

2) In case that PDSCHs indicated from the PDCCH in each CORESET having two different CORESETPoolIndexes completely or partially overlap, the UE may expect that the actual number of front loaded DMRS symbols, the actual number of additional DMRS symbols, the actual position of the DMRS symbols, and the DMRS type are not different for each PDSCH.

3) The UE may expect the same bandwidth part and the same subcarrier spacing are indicated from the PDCCH in each CORESET having two different CORESETPoolIndexes.

4) The UE may expect that each PDCCH completely includes information about the PDSCH scheduled from the PDCCH in each CORESET having two different CORESETPoolIndexes.

[Single-DCI-based Multi-TRP]

An embodiment of the disclosure describes a single-DCI-based multi-TRP transmission method. The single-DCI-based multi-TRP transmission method may configure a DL control channel for the NC-JT transmission based on a single-PDCCH.

In the single-DCI-based multi-TRP transmission method, a PDSCH transmitted by a plurality of TRPs may be scheduled by one piece of DCI. In this case, the number of TCI states may be used as a method of indicating the number of TRPs transmitting the corresponding PDSCH. That is, single PDCCH-based NC-JT transmission may be considered when the number of TCI states indicated by DCI for scheduling the PDSCHs is 2, and single-TRP transmission may be considered when the number of TCI states is 1. The TCI states indicated by the DCI may correspond to one or two TCI states among TCI states activated by the MAC CE. When the TCI states of DCI correspond to two TCI states activated by the MAC CE, a TCI codepoint indicated by the DCI is associated with the TCI states activated by the MAC CE, and this may occur when the TCI states activated with the MAC-CE corresponding to the TCI codepoint are two.

In another example, if at least one codepoint among all codepoints of the TCI state field in the DCI indicates two TCI states, the UE may consider that the base station may perform transmission based on the single-DCI-based multi-TRP method. In this case, at least one codepoint indicating two TCI states in the TCI state field may be activated through an enhanced PDSCH TCI state activation/deactivation MAC-CE.

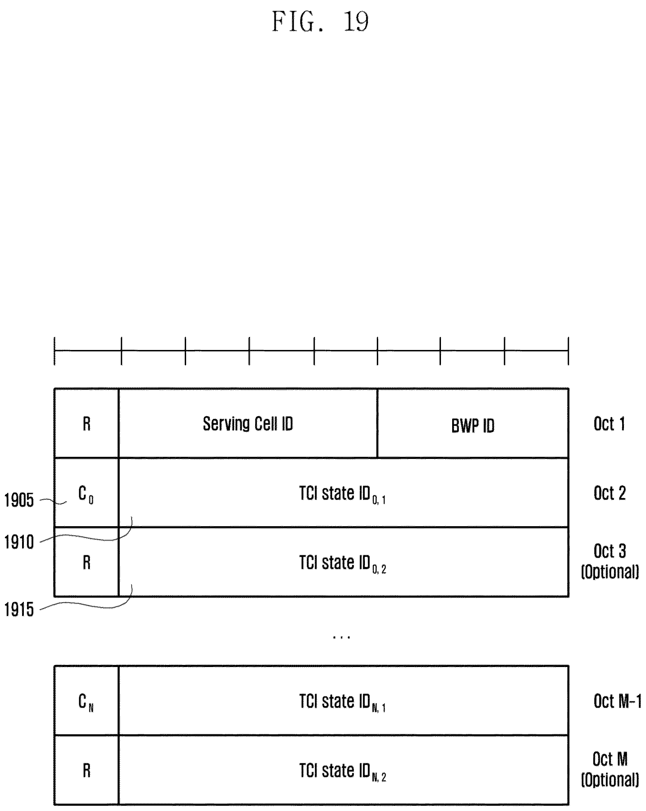

FIG. 19 illustrates an enhanced PDSCH TCI state activation/deactivation MAC-CE structure. The meaning of each field in the MAC CE and the values configurable for each field are as follows.

- Serving Cell ID: This field indicates the identity of the Serving Cell for which the MAC CE applies. The length of the field is 5 bits. If the indicated Serving Cell is configured as part of a simultaneousTCI-UpdateList1 or simultaneousTCI-UpdateList2 as specified in TS 38.331 [5], this MAC CE applies to all the Serving Cells configured in the set simultaneousTCI-UpdateList1 or simultaneousTCI-UpdateList2, respectively;

- BWP ID: This field indicates a DL BWP for which the MAC CE applies as the codepoint of the DCI bandwidth part indicator field as specified in TS 38.212 [9]. The length of the BWP ID field is 2 bits;

- $C_i$: This field indicates whether the octet containing TCI state IDi,2 is present. If this field is set to "1", the octet containing TCI state $ID_{i,2}$ is present. If this field is set to "0", the octet containing TCI state $ID_{i,2}$ is not present;

- TCI state $ID_{i,j}$: This field indicates the TCI state identified by TCI-StateId as specified in TS 38.331 [5], where i is the index of the codepoint of the DCI Transmission configuration indication field as specified in TS 38.212 [9] and TCI state $ID_{i,j}$ denotes the j-th TCI state indicated for the i-th codepoint in the DCI Transmission Configuration Indication field. The TCI codepoint to which the TCI States are mapped is determined by its ordinal position among all the TCI codepoints with sets of TCI state $ID_{i,j}$ fields, i.e. the first TCI codepoint with TCI state $ID_{0,1}$ and TCI state $ID_{0,2}$ shall be mapped to the codepoint value 0, the second TCI codepoint with TCI state $ID_{1,1}$ and TCI state $ID_{1,2}$ shall be mapped to the codepoint value 1 and so on. The TCI state $ID_{i,2}$ is optional based on the indication of the Ci field. The maximum number of activated TCI codepoint is 8 and the maximum number of TCI states mapped to a TCI codepoint is 2.

R: Reserved bit, set to "0".

In FIG. 19, if $C_0$ field 1905 has a value of 1, the corresponding MAC-CE may include TCI state $ID_{0,2}$ field 1915 in addition to TCI state $ID_{0,1}$ field 1910. This implies that TCI state $ID_{0,1}$ and TCI state $ID_{0,2}$ are activated for the 0th codepoint of the TCI state field included in the DCI, and if the base station indicates the corresponding codepoint to the UE, the UE may receive indication of two TCI states. If the $C_0$ field 1905 has a value of 0, the corresponding MAC-CE may not include the TCI state $ID_{0,2}$ field 1915. This implies that one TCI state corresponding to TCI state $ID_{0,1}$ is activated for the 0th codepoint of the TCI state field included in the DCI.

The above configuration may be independent for each cell or each BWP. For example, the PCell may have a maximum of two activated TCI states corresponding to one TCI codepoint, whereas a specific SCell may have a maximum of one activated TCI state corresponding to one TCI codepoint. In this case, it may be considered that NC-JT transmission is configured in a PCell, whereas NC-JT transmission is not configured in the SCell described above.

[Single-DCI-based Multi-TRP PDSCH repetitive transmission scheme (TDM/FDM/SDM) Distinguishment Method]

Next, a single-DCI-based multi-TRP PDSCH repetitive transmission scheme distinguishment method will be described. Different single-DCI-based multi-TRP PDSCH repetitive transmission schemes (e.g., TDM, FDM, SDM) may be indicated to a UE from a base station according to a value indicated by a DCI field and a higher layer signaling configuration. Table 26 below shows a method of distinguishing between single or multiple TRP-based schemes indicated to a UE according to a specific DCI field value and a higher layer signaling configuration.

[Table 26]

| Combination | Number of TCI states | Number of CDM groups | repetitionNumber configuration and indication condition | Regarding repetitionScheme configuration | Transmission scheme indicated to UE |
|---|---|---|---|---|---|
| 1 | 1 | ≥1 | Condition 2 | Not configured | Single-TRP |
| 2 | 1 | ≥1 | Condition 2 | Configured | Single-TRP |
| 3 | 1 | ≥1 | Condition 3 | Configured | Single-TRP |
| 4 | 1 | 1 | Condition 1 | Configured or not configured | Single-TRP TDM scheme B |
| 5 | 2 | 2 | Condition 2 | Not configured | Multi-TRP SDM |
| 6 | 2 | 2 | Condition 3 | Not configured | Multi-TRP SDM |
| 7 | 2 | 2 | Condition 3 | Configured | Multi-TRP SDM |
| 8 | 2 | 1 | Condition 3 | Configured | Multi-TRP FDM scheme A/FDM scheme B/TDM scheme A |

(continued)

| Combination | Number of TCI states | Number of CDM groups | repetitionNumber configuration and indication condition | Regarding repetitionScheme configuration | Transmission scheme indicated to UE |
|---|---|---|---|---|---|
| 9 | 2 | 1 | Condition 1 | Not configured | Multi-TRP TDM scheme B |

In Table 26, each column may be described as follows:

o Number of TCI states (second column): this indicates the number of TCI states indicated by a TCI state field in the DCI, and may be one or two.

o Number of CDM groups (third column): this indicates the number of different CDM groups of DMRS ports indicated by an antenna port field in the DCI. The number may be 1, 2 or 3.

o repetitionNumber configuration and indication condition (fourth column): There may be three conditions according to whether repetitionNumber is configured for all TDRA entries which may be indicated by a time domain resource allocation field in the DCI, and whether an actually indicated TDRA entry has a repetitionNumber configuration.

- Condition 1: at least one of all TDRA entries which may be indicated by a time domain resource allocation field includes configuration for repetitionNumber, and a TDRA entry indicated by a time domain resource allocation field in the DCI includes a configuration on repetitionNumber greater than 1
- Condition 2: at least one of all TDRA entries which may be indicated by a time domain resource allocation field includes configuration on repetitionNumber, and a TDRA entry indicated by a time domain resource allocation field in the DCI does not include a configuration on repetitionNumber
- Condition 3: all TDRA entries which may be indicated by a time domain resource allocation field do not include a configuration on repetitionNumber

o Regarding repetitionScheme configuration (fifth column): this indicates whether repetitionScheme, which is a higher layer signaling, is configured. As the higher layer signaling repetitionScheme, One of 'tdmSchemeA', 'fdmSchemeA', and 'fdmSchemeB' may be configured.

o Transmission scheme indicated to UE (sixth column): this refers to single or multiple TRP schemes indicated by combinations (first column) shown in Table 26 above.

- Single-TRP: this indicates single-TRP-based PDSCH transmission. If pdsch-AggregationFactor in the higher layer signaling PDSCH-config is configured for a UE, a single-TRP-based PDSCH repetitive transmission performed as many times as the configured number of times may be scheduled for a UE. Otherwise, a single-TRP-based PDSCH single transmission may be scheduled for the UE.
- Single-TRP TDM scheme B: this indicates single TRP-based inter-slot time resource division-based PDSCH repetitive transmission. According to condition 1 related repetitionNumber described above, a UE repeats PDSCH transmission in a time domain by the number of slots corresponding to the count of repetitionNumber greater than 1 configured in a time domain resource allocation field (TDRA) entry indicated by a TDRA field. Here, the UE applies the same start symbol and the same symbol length of a PDSCH indicated by the TDRA entry to each of the slots, the number of each is equal to the count of repetitionNumber, and applies the same TCI state is applied to every PDSCH repetitive transmission. This scheme is similar to a slot aggregation scheme in that inter-slot PDSCH repetitive transmission is performed in the time resources, but differs from slot aggregation in that whether repetitive transmission is indicated may be dynamically determined based on a time domain resource allocation field in the DCI.
- Multi-TRP SDM: this indicates a multi-TRP-based spatial resource division PDSCH transmission scheme. This is a method of receiving distributed layers from each TRP and is not a repetitive transmission scheme. However, this method may increase the reliability of PDSCH transmission in that transmission is performed at a lowered code rate by increasing the number of layers. A UE may receive a PDSCH by applying two TCI states indicated through a TCI state field in the DCI to two CDM groups indicated by a base station, respectively.
- Multi-TRP FDM scheme A: this indicates a multi-TRP-based frequency resource division PDSCH transmission scheme. This scheme provides one PDSCH transmission position (occasion) and thus is not a repetitive transmission like multi-TRP SDM. However, transmission is possible with high reliability at a lowered code rate by increasing the amount of frequency resources. Multi-TRP FDM scheme A may apply two TCI states indicated through a TCI state field in the DCI to frequency resources not overlapping each other, respectively. When a PRB bundling size is determined to be a wideband and, if the number of RBs indicated by a frequency domain resource allocation field is N, the UE receives the first ceil(N/2) RBs by applying the first TCI state and receives the remaining floor(N/2) RBs by applying the second TCI state. Here, ceil(.) and floor(.) are operators for rounding up and rounding off for the first decimal place. In case that a PRB bundling size is determined to be 2 or 4, a UE may apply the first TCI state to even-numbered PRGs, and apply the second TCI state to odd-numbered PRGs, so as to perform reception.

- Multi-TRP FDM scheme B: this indicates a multi-TRP-based frequency resource division PDSCH repetitive transmission scheme, and provides two PDSCH transmission occasions to repeat PDSCH transmission at the respective occasions. In the same way as multi-TRP FDM scheme A, multi-TRP FDM scheme B may also apply two TCI states indicated through a TCI state field in the DCI to frequency resources not overlapping each other, respectively. In case that a PRB bundling size is determined to be a wideband and, if the number of RBs indicated by a FDRA field is N, the UE applies the first TCI state to the first ceil(N/2) RBs and applies the second TCI state to the remaining floor(N/2) RBs so as to perform reception. Here, ceil(.) and floor(.) are operators for rounding up and rounding off for the first decimal place, respectively. In case that a PRB bundling size is determined to be 2 or 4, the UE applies the first TCI state to even-numbered PRGs and applies the second TCI state to odd-numbered PRGs so as to perform reception.

- Multi-TRP TDM scheme A: this indicates a multi-TRP-based time resource division intra-slot PDSCH repetitive transmission scheme. A UE has two PDSCH transmission occasions in one slot, and the first reception occasion may be determined based on the start symbol and symbol length of a PDSCH indicated through a time domain resource allocation field in the DCI. The start symbol of the second reception occasion of the PDSCH may be a position obtained by applying a symbol offset of StartingSymbolOffsetK, which is higher layer signaling, from the last symbol of the first transmission occasion, and the transmission occasion may be determined as long as the symbol length indicated therefrom. If the StartingSymbolOffsetK, which is higher layer signaling, is not configured, the symbol offset may be regarded as 0.

- Multi-TRP TDM scheme B: this indicates a multi-TRP-based time resource division inter-slot PDSCH repetitive transmission scheme. The UE has one PDSCH transmission occasion in one slot, and may receive repetitive transmission based on the same start symbol and the same symbol length of a PDSCH during a number of slots equal to the count of repetitionNumber indicated through a time domain resource allocation field in the DCI. If repetitionNumber is 2, the UE may receive PDSCH repetitive transmission in the first and second slots by applying the first and second TCI states, respectively. In case that repetitionNumber is greater than 2, the UE may use different TCI state applying schemes depending on which the higher layer signaling tciMapping is configured. In case that tciMapping is configured as cyclicMapping, the UE applies the first and second TCI states to the first and second PDSCH transmission occasions, respectively, and also applies this TCI state application method to the remaining PDSCH transmission occasions in the same manner. In case that tciMapping is configured as sequentialMapping, the UE applies the first TCI state to the first and second PDSCH transmission occasions, and applies the second TCI state to the third and fourth PDSCH transmission occasions. The UE applies this TCI state application method to the remaining PDSCH transmission occasions in the same manner.

Hereinafter, for convenience of explanation in the disclosure, cells, transmission points, panels, beams and/or transmission directions, which can be distinguished through higher layer/L1 parameters such as TCI state or spatial relation information, or indicators such as cell ID, TRP ID, panel ID, etc., are unified and described as a transmission reception point (TRP, transmission point), a beam, or a TCI state. Therefore, in actual application, it is possible to appropriately replace a TRP, a beam, or a TCI state with one of the above terms.

Hereinafter, in the disclosure, when the UE determines whether cooperative communication is applied, it is possible to use various methods, such as, in which PDCCH(s) for allocation of PDSCH to which the cooperative communication is applied has a specific format, PDCCH(s) for allocation of PDSCH to which the cooperative communication is applied include a specific indicator indicating whether cooperative communication is applied, PDCCH(s) for allocation of PDSCH to which cooperative communication is applied is scrambled by a specific RNTI, or cooperative communication is assumed to be applied in a specific interval indicated by a higher layer. Hereinafter, for convenience of description, a case in which a UE receives a PDSCH to which cooperative communication is applied based on conditions similar to the above will be referred to as an NC-JT case.

Hereinafter, an embodiment of the disclosure will be described in detail with the accompanying drawings. Hereinafter, a base station is a subject that performs resource allocation of a UE, and may be at least one of a gNode B, a gNB, an eNode B, a Node B, a base station (BS), a radio access unit, a base station controller, or a node on a network. The UE may include a user equipment (UE), a mobile station (MS), a cellular phone, a smartphone, a computer, or a multimedia system capable of performing a communication function. Hereinafter, an embodiment of the disclosure will be described using a 5G system as an example, but the embodiment of the disclosure may be applied to other communication systems having a similar technical background or channel type. For example, LTE or LTE-A mobile communication and mobile communication technology developed after 5G may be included therein. Accordingly, the embodiments of the disclosure may be applied to other communication systems through some modifications within a range that does not significantly depart from the scope of the disclosure as determined by those of ordinary skill in the art. The contents of the disclosure are applicable to FDD and TDD systems.

In addition, in the description of the disclosure, if it is determined that a detailed description of a related function or configuration may unnecessarily obscure the subject matter of the disclosure, the detailed description thereof will be omitted. In addition, the terms to be described later are terms defined considering functions in the disclosure, which may vary according to intentions or customs of users and operators. Therefore, the definition should be made based on the content throughout this specification.

Hereinafter, when describing the disclosure, higher layer signaling may be signaling corresponding to at least one or a combination of one or more of the following signalings.

- MIB
- SIB or SIB X (X=1, 2, ...)
- RRC
- MAC CE

In addition, L1 signaling may be signaling corresponding to at least one or a combination of one or more of signaling methods using the following physical layer channel or signaling.

- PDCCH
- DCI
- UE-specific DCI
- Group common DCI
- Common DCI
- Scheduling DCI (for example, DCI used for scheduling downlink or uplink data)
- Non-scheduling DCI (for example, DCI not for the purpose of scheduling downlink or uplink data)
- PUCCH
- Uplink control information (UCI)

Hereinafter, in the disclosure, determining the priority between A and B refers to selecting one having a higher priority according to a predetermined priority rule and performing an operation corresponding thereto or omitting or dropping an operation corresponding to one having a lower priority.

As used herein, the term "slot" is a general term that may refer to a specific unit of time corresponding to a transmit time interval (TTI), and may specifically refer to a slot used in a 5G NR system, or a slot or subframe used in a 4G LTE system.

Hereinafter, in the disclosure, the above examples will be described through multiple embodiments, but these are not independent and it is possible that one or more embodiments may be applied simultaneously or in combination.

<First Embodiment: Single TCI state activation and indication method based on unified TCI scheme>

In an embodiment of the disclosure, a method for single TCI state indication and activation based on a unified TCI scheme is described. The unified TCI scheme may refer to a scheme for unifying and managing, as the TCI state, the transmission and reception beam management scheme divided into the TCI state scheme used in the downlink reception and the spatial relation information scheme used in the uplink transmission of the UE in the existing Rel-15/16. Accordingly, in case of being indicated from a base station based on the unified TC scheme, the UE may perform beam management using the TCI state even for the uplink transmission. If the UE is configured with the higher layer signaling "TCI-State" having tci-stateId-r17 from the base station, the UE may perform an operation based on the unified TC scheme by using the corresponding TCI-State. The TCI-State may include two types of a joint TCI state or a separate TCI state.

The first type is the joint TCI state, and the UE may be indicated from the base station with the TCI state to be applied to both the uplink transmission and the downlink reception through one TCI-State. If the UE is indicated with TCI-State based on the joint TCI state, the UE may be indicated with a parameter to be used for downlink channel estimation using an RS corresponding to qcl-Type1 of the corresponding joint TCI state-based TCI-State, and a parameter to be used as a downlink reception beam or a reception filter using an RS corresponding to qcl-Type2. If the UE is indicated with TCI-State based on the joint TCI state, the UE may be indicated with a parameter to be used as an uplink transmission beam or a transmission filter using the RS corresponding to qcl-Type2 of the corresponding joint DL/UL TCI state-based TCI-State. Here, in case that the UE is indicated with the joint TCI state-based TCI-State, the UE may apply the same beam to the uplink transmission and the downlink reception.

The second type is the separate TCI state, and the UE may be indicated from the base station individually with a UL TCI state to be applied to the uplink transmission and a DL TCI state to be applied to the downlink reception. If the UE is indicated with the UL TCI state, the UE may be indicated with a parameter to be used as an uplink transmission beam or a transmission filter using a reference RS or a source RS configured in the corresponding UL TCI state. If the UE is indicated with the DL TCI state, the UE may be indicated with a parameter to be used for downlink channel estimation using the RS corresponding to qcl-Type1 configured in the corresponding DL TCI state, and a parameter to be used as a downlink reception beam or a reception filter using the RS corresponding to qcl-Type2.

If the UE is indicated with the DL TCI state and the UL TCI state together, the UE may be indicated with a parameter to be used as the uplink transmission beam or the transmission filter using the reference RS or the source RS configured in the corresponding UL TCI state. In addition, if the UE is indicated with the DL TCI state and the UL TCI state together, the UE may be indicated with a parameter to be used for the downlink channel estimation using the RS corresponding to qcl-Type1 configured in the corresponding DL TCI state, and the parameter to be used as the downlink reception beam or the reception filter using the RS corresponding to qcl-Type2. In case that the reference RSs or the source RSs configured in the DL TCI state and the UL TCI state indicated to the UE are different, the UE may individually apply the beam for the uplink transmission and the downlink reception based on the indicated UL TCI state and DL TCI state, respectively.

The UE may be configured from the base station with up to 128 joint TCI states for each specific BWP in a specific cell through higher layer signaling. In addition, up to 64 or 128 DL TCI states of the separate TCI state may be configured for each specific BWP in a specific cell through higher layer signaling based on a UE capability report. The DL TCI state of the separate TCI state and the joint TCI state may use the same higher layer signaling structure. For example, if 128 joint TCI states are configured and 64 DL TCI states are configured in the separate TCI state, 64 DL TCI states may be included in 128 joint TCI states.

Up to 32 or 64 UL TCI states of the separate TCI state may be configured for each specific BWP in a specific cell through higher layer signaling based on a UE capability report, the UL TCI state of the separate TCI state and the joint TCI state may use the same higher layer signaling structure, like the relationship of the DL TCI state of the separate TCI state and the joint TCI state, and the UL TCI state of the separate TCI state may use a different higher layer signaling structure from the joint TCI state and the DL TCI state of the separate TCI state.

As described in the above, use of the different or the same higher layer signaling structure may be defined in the standard, and may be distinguished through yet another higher layer signaling configured by the base station, based on a UE capability report containing information of whether to use one of the two types supported by the UE.

The UE may receive a transmission and reception beam-related indication in the unified TCI manner using one of the joint TCI state and the separate TCI state configured from the base station. The UE may be configured from the base station whether to use one of the joint TCI state and the separate TCI state through higher layer signaling.

The UE may receive the transmission and reception beam-related indication using one scheme selected from the joint TCI state and the separate TCI state through higher layer signaling. Here, the transmission and reception beam indication method from the base station may include two methods of a MAC-CE based indication method and a MAC-CE based activation and DCI based indication method.

In case that the UE receives the transmission and reception beam-related indication using the joint TCI state through the higher layer signaling, the UE may perform a transmission and reception beam application operation by receiving a MAC-CE indicating the joint TCI state from the base station, and the base station may schedule, to the UE, reception of PDSCH including the corresponding MAC-CE through the PDCCH. If the MAC-CE includes one joint TCI state, the UE may determine an uplink transmission beam or a transmission filter, and a downlink reception beam or a reception filter by using the joint TCI state indicated from 3 ms after PUCCH transmission including HARQ-ACK information indicating whether the PDSCH including the corresponding MAC-CE is successfully received or not. If the MAC-CE includes two or more joint TCI states, the UE may identify the plurality of the joint TCI states indicated by the MAC-CE corresponding to respective codepoints of the TCI state field of DCI format 1_1 or 1_2 and activate the indicated joint TCI state, from 3 ms after PUCCH transmission including HARQ-ACK information indicating whether the PDSCH including the corresponding MAC-CE is successfully received or not. Thereafter, the UE may receive DCI format 1_1 or 1_2 and apply one joint TCI state indicated by the TCI state field of the corresponding DCI to the uplink transmit and downlink reception beams. Here, DCI format 1_1 or 1_2 may include downlink data channel scheduling information (with DL assignment), or may not include the same (without DL assignment).

In case that the UE receives the transmission and reception beam-related indication using the separate TCI state through higher layer signaling, the UE may perform the transmission and reception beam application operation by receiving the MAC-CE indicating the separate TCI state from the base station, and the base station may schedule, to the UE, reception of PDSCH including the corresponding MAC-CE through the PDCCH. If the MAC-CE includes one separate TCI state set, the UE may determine an uplink transmission beam or a transmission filter, and a downlink reception beam or a reception filter by using the separate TCI states included in the separate TCI state set indicated from 3 ms after PUCCH transmission including HARQ-ACK information indicating whether the corresponding PDSCH is successfully received or not. Here, the separate TCI state set may indicate one or multiple separate TCI states of one codepoint of the TCI state field in DCI format 1_1 or 1_2. In addition, one separate TCI state set may include one DL TCI state, one UL TCI state, or one DL TCI state and one UL TCI state. If the MAC-CE includes two or more separate TCI state sets, the UE may identify the plurality of the separate TCI state sets indicated by the MAC-CE corresponding to respective codepoints of the TCI state field of DCI format 1_1 or 1_2 and activate the indicated separate TCI state set, from 3 ms after transmission of PUCCH including HARQ-ACK information indicating whether the corresponding PDSCH is successfully received or not. Here, each codepoint of the TCI state field of DCI format 1_1 or 1_2 may indicate one DL TCI state, one UL TCI state, or one DL TCI state and one UL TCI state. The UE may receive DCI format 1_1 or 1_2 and apply the separate TCI state set indicated by the TCI state field of the corresponding DCI to the uplink transmit and downlink reception beams. Here, DCI format 1_1 or 1_2 may include downlink data channel scheduling information (with DL assignment), or may not include the same (without DL assignment).

The above MAC-CE used to activate or indicate the single joint TCI state and the separate TCI state may exist according to the joint and separate TCI state scheme, and the TCI state may be activated or indicated based on one of the joint or separate TCI state scheme by using one MAC-CE. Various MAC-CE structures for activating and indicating the joint or separate TCI state may be considered, with reference to the drawings to be described.

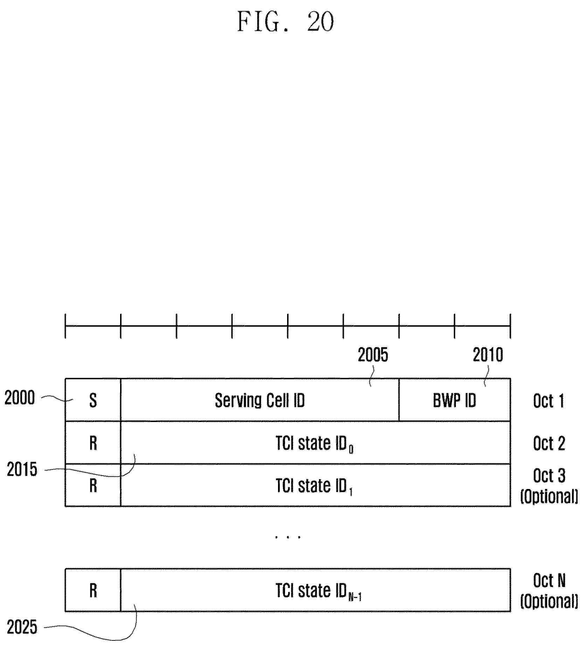

FIG. 20 illustrates a MAC-CE structure for joint TCI state activation and indication in a wireless communication system according to an embodiment of the disclosure. In FIG. 20, if S field 2000 has a value of 1, the corresponding MAC-CE may indicate one joint TCI state, and may include only up to a second octet. If the S field 2000 has a value of 0, the corresponding MAC-CE may include two or more pieces of joint TCI state information, each joint TCI state may be activated at each codepoint of the TCI state field of DCI format 1_1 or 1_2, and up to eight joint TCI states may be activated. TCI states indicated via TCI state $ID_0$ field 2015 to TCI state $ID_{N-1}$ field 2025 may correspond to the 0th to (N-1)th codepoints of the TCI state field of DCI format 1_1 or 1_2, respectively. A serving cell ID field 2005 and a BWP ID field 2010 may indicate a serving cell ID and a bandwidth part ID, respectively.

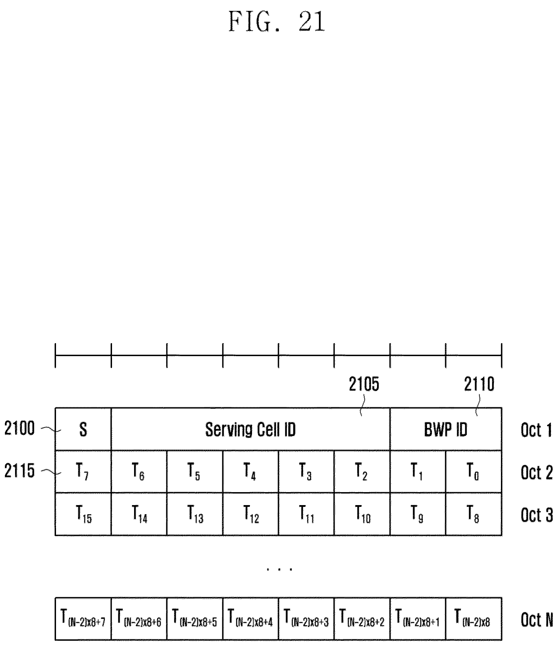

FIG. 21 illustrates another MAC-CE structure for joint TCI state activation and indication in a wireless communication system according to an embodiment of the disclosure. In FIG. 21, a serving cell ID field 2105 and a BWP ID field 2110 may indicate a serving cell ID and a BWP ID, respectively. R field 2100 may be a 1-bit reserved field not including indication information. Each field existing in second to N-th octets is a bitmap indicating the joint TCI state configured with higher layer signaling. For example, $T_7$ 2115 may be a field indicating an eighth joint TCI state configured with the higher layer signaling. If one joint TCI state is delivered through the MAC-CE structure of FIG. 21, the UE may apply the joint TCI state indicated by the MAC-CE to uplink transmission and downlink reception beams. If two or more joint TCI states are delivered through the MAC-CE structure, the UE may identify that each joint TCI state indicated by the MAC-CE corresponds to each codepoint of the TCI state field of DCI format 1_1 or 1_2, and may activate each joint TCI state. Further, if two or more joint TCI states are delivered through the MAC-CE structure, the UE may correspond and activate the indicated joint TCI states to the codepoints of the TCI state field of DCI format 1_1 or 1_2 in ascending order of index.

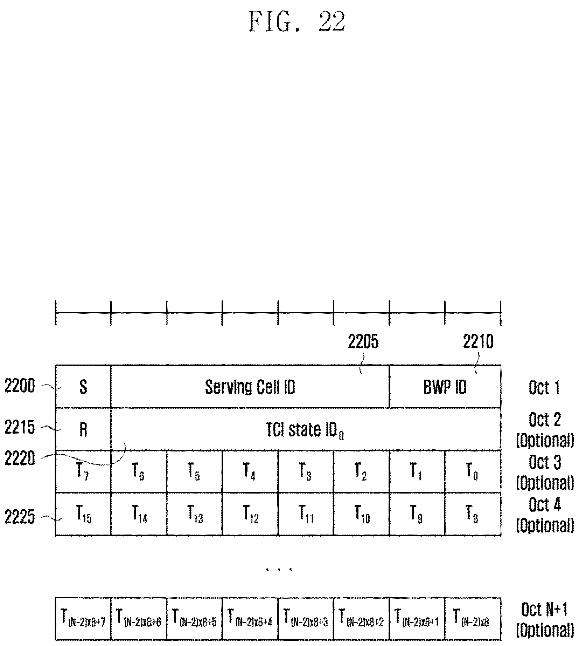

FIG. 22 illustrates a yet another MAC-CE structure for joint TCI state activation and indication in a wireless communication system according to an embodiment of the disclosure. In FIG. 22, a serving cell ID field 2205 and a BWP ID field 2210 may indicate a serving cell ID and a BWP ID, respectively. If S field 2200 has a value of 1, the corresponding MAC-CE may indicate one joint TCI state, and may include only up to a second octet, and the joint TCI state may be indicated to a UE through a TCI state $ID_0$ field 2220.

For example, if the S field 2200 has a value of 0, the corresponding MAC-CE may include two or more pieces of joint TCI state information, each joint TCI state may be activated at each codepoint of the TCI state field of DCI format 1_1 or 1_2, up to eight joint TCI states may be activated, the second octet does not exist, and a first octet and a third octet to an (N+1)-th octet may exist in the MAC-CE structure of FIG. 22. Each field existing in the third octet to the (N+1)-th octet is a bitmap indicating the joint TCI state configured with higher layer signaling. For example, $T_{15}$ 2225 may be a field indicating whether a 16th joint TCI state configured with higher layer signaling is indicated or not.

If one joint TCI state is delivered through the MAC-CE structure of FIG. 22, the UE may apply the joint TCI state indicated by the MAC-CE to uplink transmission and downlink reception beams. If two or more joint TCI states are delivered through the MAC-CE structure of FIG. 22, the UE may identify that each joint TCI state indicated by the MAC-CE corresponds to each codepoint of the TCI state field of DCI format 1_1 or 1_2, activate each joint TCI state, and correspond and activate the indicated joint TCI states to the codepoints of the TCI state field in ascending order of index.

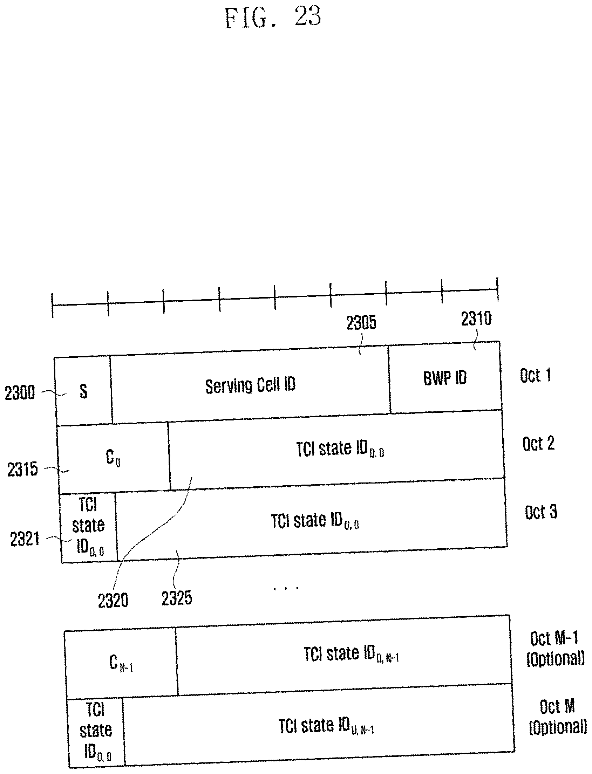

FIG. 23 illustrates a MAC-CE structure for separate TCI state activation and indication in a wireless communication system according to an embodiment of the disclosure. In FIG. 23, a serving cell ID field 2305 and a BWP ID field 2310 may indicate a serving cell ID and a BWP ID, respectively. For example, if S field 2300 has a value of 1, the corresponding MAC-CE may indicate one separate TCI state set, and include only up to a third octet.

For example, if the S field 2300 has a value of 0, the corresponding MAC-CE may include two or more pieces of separate TCI state set information, each codepoint of the TCI state field of DCI format 1_1 or 1_2 may activate each separate TCI state set, and up to eight separate TCI state sets may be activated. $C_0$ field 2315 may be a field indicating what separate TCI states the indicated separate TCI state set includes. For example, when the $C_0$ field has a value of "00", this field may indicate a reserved field. Further, in this field, a value of "01" may refer to indicating one DL TCI state, "10" may refer to indicating one UL TCI state, and "11" may refer to indicating one DL TCI state and one UL TCI state. However, the disclosure is not limited by these specific values. TCI state $ID_{D,0}$ field 2320 and TCI state $ID_{U,0}$ field 2325 may indicate the DL TCI state and the UL TCI state, respectively, which may be included and indicated in a 0-th separate TCI state set. If the $C_0$ field has a value of "01", the TCI state $ID_{D,0}$ field 2320 may indicate the DL TCI state and the TCI state $ID_{U,0}$ field 2325 may be ignored. If the $C_0$ field has a value of "10", the TCI state $ID_{D,0}$ field 2320 may be ignored and the TCI state $ID_{U,0}$ field 2325 may indicate the UL TCI state. If the $C_0$ field has a value of "11", the TCI state $ID_{D,0}$ field 2320 may indicate the DL TCI state and the TCI state $ID_{U,0}$ field 2325 may indicate the UL TCI state.

FIG. 23 may show an example of the MAC-CE of a case in which the UL TCI state of the separate TCI state uses the same higher layer signaling structure as the DL TCI state of the separate TCI state and the joint TCI state. Accordingly, the length of the TCI state $ID_{D,0}$ field 2320 and the TCI state $ID^{U,0}$ field 2325 may be 7 bits for representing up to 128 TCI states. Therefore, 6 bits 2320 may be allocated to the second octet and one bit 2321 may be allocated to the third octet to use 7 bits as the TCI state $ID_{D,0}$ field 2320. In addition, FIG. 23 may represent a case in which the UL TCI state of the separate TCI state uses a different higher layer signaling structure from the DL TCI state of the separate TCI state and the joint TCI state. Accordingly, since the UL TCI state requires 6 bits to represent up to 64 states, a first bit of the TCI state $ID_{U,0}$ field 2325 may be fixed to 0 or 1 and actual bits representing the UL TCI state may correspond to only 6 bits in total from the second bit to the seventh bit.

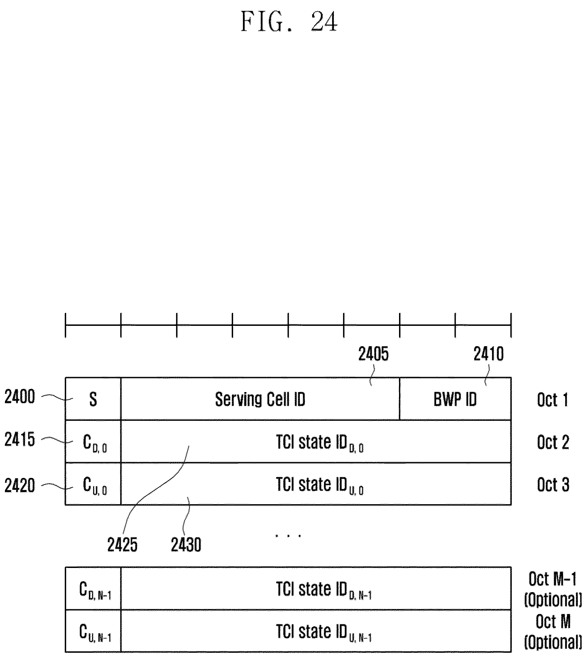

FIG. 24 illustrates another MAC-CE structure for separate TCI state activation and indication in a wireless communication system according to an embodiment of the disclosure. In FIG. 24, a serving cell ID field 2405 and a BWP ID field 2410 may indicate a serving cell ID and a BWP ID, respectively. For example, if the S field 2400 has a value of 1, the corresponding MAC-CE may indicate one separate TCI state set, and include only up to a third octet. For example, if the S field 2400 has a value of 0, the corresponding MAC-CE may include two or more pieces of separate TCI state set information, each codepoint of the TCI state field of DCI format 1_1 or 1_2 may correspond to each separate TCI state set to activate each separate TCI state set, and up to eight separate TCI state sets may be activated. $C_{D,0}$ field 2415 may be a field indicating whether the indicated separate TCI state set includes the DL TCI state, and if the $C_{D,0}$ field 2415 has a value of 1, the DL TCI state may be included and the DL TCI state may be indicated through a TCI state $ID_{D,0}$ field 2425. If the $C_{D,0}$ field 2415 has a value of 0, the DL TCI state may not be included and the TCI state $ID_{D,0}$ field 2425 may be ignored. Likewise, $C_{U,0}$ field 2420 may be a field indicating whether the indicated separate TCI state set includes the UL TCI state, and if the $C_{U,0}$ field 2420 has a value of 1, the UL TCI state may be included and the UL TCI state may be indicated by a TCI state $ID_{U,0}$ field 2430. If the $C_{U,0}$ field 2420 has a value of 0, the UL TCI state may not be included and the TCI state $ID_{U,0}$ field 2430 may be ignored.

FIG. 24 may show an example of the MAC-CE of a case in which the UL TCI state of the separate TCI state uses the same higher layer signaling structure as the DL TCI state of the separate TCI state and the joint TCI state. Accordingly, the length of the TCI state $ID_{D,0}$ field 2425 and the TCI state $ID_{U,0}$ field 2430 may be 7 bits for representing up to 128 TCI states. In addition, FIG. 24 may show an example of the MAC-CE of a case in which the UL TCI state of the separate TCI state uses a different higher layer signaling structure from the DL TCI state of the separate TCI states and the joint TCI state. Accordingly, since the UL TCI state requires 6 bits to represent up to 64 states, a first bit of the TCI state $ID_{U,0}$ field 2430 may be fixed to 0 or 1 and actual bits representing the UL TCI state may correspond to only 6 bits in total from the second bit to the seventh bit.

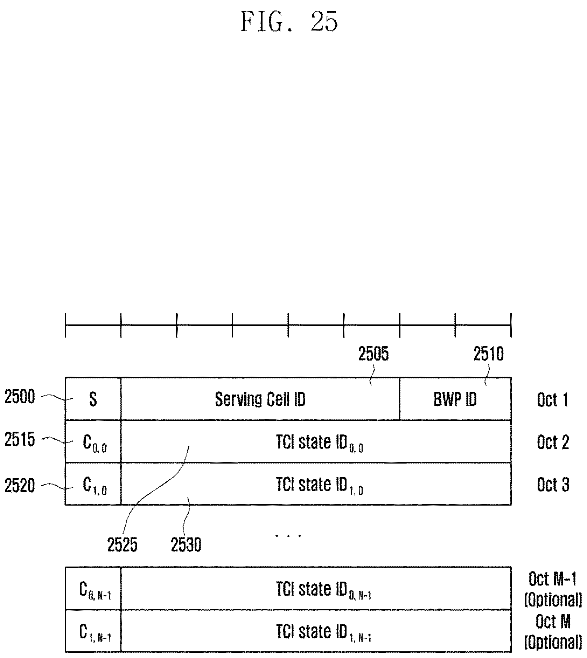

FIG. 25 illustrates yet another MAC-CE structure for separate TCI state activation and indication in a wireless communication system according to an embodiment of the disclosure. In FIG. 25, a serving cell ID field 2505 and a BWP ID field 2510 may indicate a serving cell ID and a BWP ID, respectively. For example, if S field 2500 has a value of 1, the corresponding MAC-CE may indicate one separate TCI state set, and include only up to a third octet. The MAC-CE structure of FIG. 25 may indicate one separate TCI state set using two octets, and if the corresponding separate TCI state set includes the DL TCI state, a first octet among two octets may indicate the DL TCI state and a second octet may indicate the UL TCI state. In addition, the above sequence may be changed.

For example, if the S field 2500 has a value of 0, the corresponding MAC-CE may include two or more pieces of separate TCI state information, each codepoint of the TCI state field of DCI format 1_1 or 1_2 may activate each separate TCI state set, and up to eight separate TCI state sets may be activated. $C_{0,0}$ field 2515 may distinguish whether the TCI state indicated by a TCI state $ID_{0,0}$ field 2525 is the DL TCI state or the UL TCI state. The $C_{0,0}$ field 2515 has a value of 1, the TCI state may indicate the DL TCI state, the DL TCI state may be indicated through the TCI state $ID_{0,0}$ field 2525, and a third octet may exist. In this case, if $C_{1,0}$ field 2520 has a value of 1, the UL TCI state may be indicated by a TCI state $ID_{1,0}$ field 2530. When the $C_{1,0}$ field 2520 has a value of 0, the TCI state $ID_{1,0}$ field 2530 may be ignored. If the $C_{0,0}$ field 2515 has a value of 0, the TCI state $ID_{0,0}$ field 2525 may indicate the UL TCI state, and the third octet may not exist. These are only examples.

FIG. 25 may show an example of the MAC-CE of a case in which the UL TCI state of the separate TCI state uses the same higher layer signaling structure as the DL TCI state of the separate TCI state and the joint TCI state. Accordingly, the length of the TCI state $ID_{0,0}$ field 2525 and the TCI state $ID_{1,0}$ field 2530 may be 7 bits for representing up to 128 TCI states. In addition, FIG. 25 may show an example of the MAC-CE of a case in which the UL TCI state of the separate TCI state uses a different higher layer signaling structure from the DL TCI state of the separate TCI state and the joint TCI state as mentioned above. Accordingly, the TCI state $ID_{0,0}$ field 2525 may include 7 bits for representing 6 bits to represent up to 64 UL TCI states and 7 bits to represent up to 128 DL TCI states. If the $C_{0,0}$ field 2515 has a value of 1 and the TCI state $ID_{0,0}$ field 2525 indicates the UL TCI state, a first bit of the TCI state $ID_{0,0}$ field 2525 may be fixed to 0 or 1 and actual bits representing the UL TCI state may correspond to only 6 bits in total from the second bit to the seventh bit.

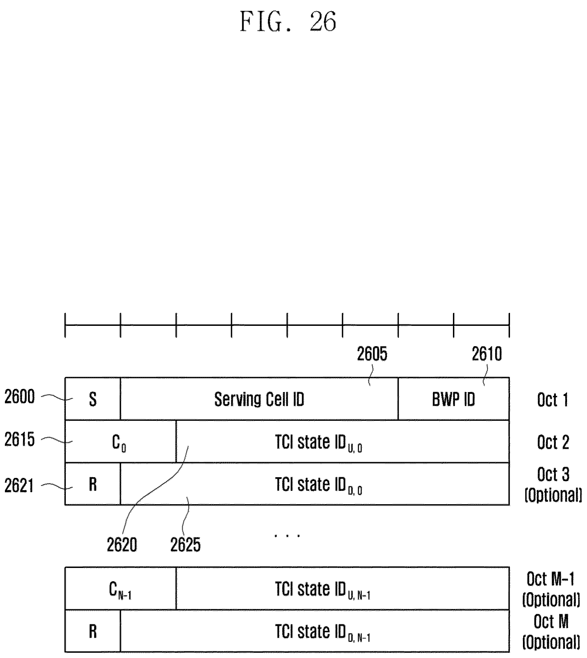

FIG. 26 illustrates still another MAC-CE structure for separate TCI state activation and indication in a wireless communication system according to an embodiment of the disclosure. In FIG. 26, a serving cell ID field 2605 and a BWP ID field 2610 may indicate a serving cell ID and a BWP ID, respectively. For example, if S field 2600 has a value of 1, the corresponding MAC-CE may indicate one separate TCI state set, and include only up to a third octet.

For example, if the S field 2600 has a value of 0, the corresponding MAC-CE may include two or more separate TCI state set information, each codepoint of the TCI state field of DCI format 1_1 or 1_2 may activate each separate TCI state set, and up to eight separate TCI state sets may be activated. $C_0$ field 2615 may be a filed indicating what separate TCI states the indicated separate TCI state set includes. For example, when the $C_0$ field has a value of "00", this field may indicate a reserved field. Further, in this field, a value of "01" may refer to indicating one DL TCI state, "10" may refer to indicating one UL TCI state, and "11" may refer to indicating one DL TCI state and one UL TCI state. However, the disclosure is not limited by these specific values. TCI state $ID_{U,0}$ field 2620 and TCI state $ID_{D,0}$ field 2625 may indicate the UL TCI state and the DL TCI state, respectively, which are included and indicated in a 0-th separate TCI state set. If the $C_0$ field 2615 has a value of "01", the TCI state $ID_{D,0}$ field 2625 may indicate the DL TCI state and the TCI state $ID_{U,0}$ field 2620 may be ignored. If the $C_0$ field 2615 has a value of "10", the third octet may be ignored and the TCI state $ID_{U,0}$ field 2620 may indicate the UL TCI state. When the $C_0$ field 2615 has a value of "11", the TCI state $ID_{D,0}$ field 2625 may indicate the DL TCI state and the TCI state $ID_{U,0}$ field 2620 may indicate the UL TCI state.

FIG. 26 may show an example of the MAC-CE used in a case in which the UL TCI state of the separate TCI state uses a different higher layer signaling structure from the DL TCI state of the separate TCI state and the j oint TCI state. Accordingly, the length of the TCI state $ID_{D,0}$ field 2625 may use 7 bits for representing up to 128 TCI states, and the length of the TCI state $ID_{U,0}$ field 2620 may use 6 bits for representing up to 64 TCI states.

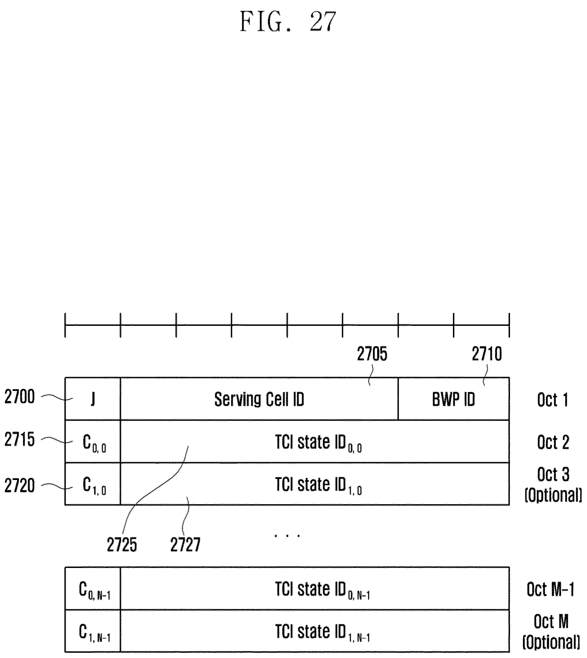

FIG. 27 illustrates a MAC-CE structure for joint and separate TCI state activation and indication in a wireless communication system according to an embodiment of the disclosure. In FIG. 27, a serving cell ID field 2705 and a BWP ID field 2710 may indicate a serving cell ID and a BWP ID, respectively. J field 2700 has a value of 1, the corresponding MAC-CE may indicate the joint TCI state, and if the J field 2700 has a value of 0, the corresponding MAC-CE may indicate the separate TCI state set.

If the corresponding MAC-CE indicates the joint TCI state, every odd-numbered octet (third, fifth, ...) excluding a first octet may be ignored. $C_{0,0}$ field 2715 may indicate whether the corresponding MAC-CE indicates one joint TCI state, or may indicate whether the corresponding MAC-CE includes two or more pieces of TCI state information and activates each TCI state at each codepoint of the TCI state field of DCI format 1_1 or 1_2. The $C_{0,0}$ field 2715 has a value of 1, the corresponding MAC-CE may indicate one joint TCI state, and octets from the third octet may not exist. If $C_{0,0}$ field 2715 has a value of 0, the two or more joint TCI states indicated by the corresponding MAC-CE may correspond to each codepoint of the TCI state field of DCI format 1_1 or 1_2 and may be activated. A TCI state $ID_{0,0}$ may indicate a first joint TCI state.

If the corresponding MAC-CE indicates the separate TCI state set, for example, the $C_{0,0}$ field 2715 may distinguish whether the TCI state indicated by the TCI state $ID_{0,0}$ field 2725 is the DL TCI state or the UL TCI state. If the $C_{0,0}$ field has a value of 1, the TCI state $ID_{0,0}$ field 2725 may indicate the DL TCI state, the DL TCI state may be indicated through the TCI state $ID_{D,0}$ field 2725, and the third octet may exist. In this case, if $C_{1,0}$ field 2720 has a value of 1, the UL TCI state may be indicated by a TCI state $ID_{1,0}$ field 2730, and if $C_{1,0}$ field 2720 has a value of 0, the TCI state $ID1_{,0}$ field 2730 may be ignored. If $C_{0,0}$ field 2715 has a value of 0, the UL TCI state may be indicated by the TCI state $ID_{0,0}$ field 2725 and the third octet may not exist.

FIG. 27 may show an example of the MAC-CE used in a case in which the UL TCI state of the separate TCI state uses the same higher layer signaling structure as the DL TCI state of the separate TCI state and the joint TCI state. Accordingly, the length of the TCI state $ID_{0,0}$ field 2725 and the TCI state $ID_{1,0}$ field 2730 may be 7 bits for representing up to 128 TCI states. In addition, FIG. 27 may show an example of the MAC-CE used in a case in which the UL TCI state of the separate TCI state uses a different higher layer signaling structure from the DL TCI state of the separate TCI state and the joint TCI state. Accordingly, the TCI state $ID_{0,0}$ field 2725 may use 7 bits for representing 6 bits to represent up to 64 UL TCI states and 7 bits to represent up to 128 DL TCI states. If the $C_{0,0}$ field 2715 has a value of 1 and the TCI state $ID_{0,0}$ field 2725 indicates the UL TCI state, the first bit of the TCI state $ID_{0,0}$ field 2725 may be fixed to 0 or 1 and actual bits representing the UL TCI state may correspond to only 6 bits in total from the second bit to the seventh bit.

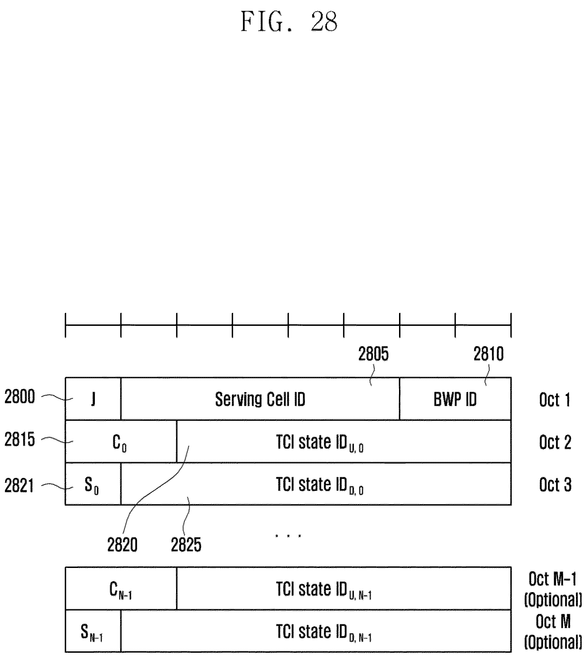

FIG. 28 illustrates another MAC-CE structure for joint and separate TCI state activation and indication in a wireless communication system according to an embodiment of the disclosure. In FIG. 28, a serving cell ID field 2805 and a BWP ID field 2810 may indicate a serving cell ID and a BWP ID, respectively. For example, if J field 2800 has a value of 1, the corresponding MAC-CE may indicate the joint TCI state, and if the J field has a value of 0, the corresponding MAC-CE may indicate the separate TCI state set.

- If the corresponding MAC-CE indicates the joint TCI state, every even-numbered octet (second, fourth, ...) excluding a first octet may be ignored. An $S_0$ field 2821 may indicate whether the corresponding MAC-CE indicates one joint TCI state, and may indicate whether two or more TCI states correspond to respective codepoints of the TCI state field of DCI format 1_1 or 1_2 and activated. If the $S_0$ field 2821 has a value of 1, the corresponding MAC-CE may indicate one joint TCI state, and octets from the third octet may not exist. If the $S_0$ field 2821 has a value of 0, the corresponding MAC-CE may include two or more pieces of joint TCI state information, and activate each joint TCI state at each codepoint of the TCI state field of DCI format 1_1 or 1_2. A TCI state $ID_{D,0}$ may indicate a first joint TCI state.

- If the corresponding MAC-CE indicates the separate TCI state set, $C_0$ field 2815 may be a field indicating what separate TCI states the indicated separate TCI state set includes. For example, when the $C_0$ field 2815 has a value of "00", this field may indicate a reserved field. Further, in this field, a value of "01" may refer to indicating one DL TCI state, "10" may refer to indicating one UL TCI state, and "11" may refer to indicating one DL TCI state and one UL TCI state. These values are merely examples and the disclosure is not limited by these examples. TCI state $ID_{U,0}$ field 2820 and TCI state $ID_{D,0}$ field 2825 may indicate the UL TCI state and the DL TCI state, respectively, which are included and indicated in a 0-th separate TCI state set. If the $C_0$ field 2815 has a value of "01", the TCI state $ID_{D,0}$ field 2825 may indicate the DL TCI state, and the TCI state $ID_{U,0}$ field 2820 may be ignored. If the $C_0$ field 2815 has a value of "10", the TCI state $ID_{U,0}$ field 2820 may indicate the UL TCI state. If the $C_0$ field 2815 has a value of "11", the TCI state $ID_{D,0}$ field 2825 may indicate the DL TCI state and the TCI state $ID_{U,0}$ field 2820 may indicate the UL TCI state. If the $S_0$ field 2821 has a value of 1, the corresponding MAC-CE may indicate one separate TCI state set, and octets from the fourth octet may not exist. If the $S_0$ field 2821 has a value of 0, the corresponding MAC-CE may include two or more pieces of separate TCI state set information, activate each separate TCI state set at each codepoint of the TCI state field of DCI format 1_1 or 1_2, and activate up to 8 separate TCI state sets. For example, if the $S_0$ field 2821 has a value of 0 and $C_1$, ... , $C_{N-1}$ field has a value of "10", this implies that only the UL TCI state is indicated, and thus the fifth, seventh, ... , M-th octets may be ignored. Alternatively, the $S_0$ field 2821 may include information indicating whether there exists an octet for a next separate TCI state set. For example, if $S_n$ field has a value of 1, the next octet may not exist, and if the $S_n$ field has a value of 0, the next octet including $C_{n+1}$ and a TCI state $ID_{U,n+1}$ may exist.

FIG. 28 may show an example of the MAC-CE used in a case in which the UL TCI state of the separate TCI state uses a different higher layer signaling structure from the DL TCI state of the separate TCI state and the joint TCI state. Accordingly, the length of the TCI state $ID_{D,0}$ field 2825 may use 7 bits for representing up to 128 TCI states, and the length of the TCI state $ID_{U,0}$ field 2820 may use 6 bits for representing up to 64 TCI states.

In case that the UE receives the transmission and reception beam-related indication using the joint TCI state scheme or the separate TCI state scheme through higher layer signaling, the UE may perform transmission and reception beam application by receiving the PDSCH including the MAC-CE indicating the joint TCI state or the separate TCI state from the base station. If the MAC-CE includes two or more joint TCI state or separate TCI state sets, the UE may identify that the plurality of joint TCI state or separate TCI state sets indicated by the MAC-CE correspond to respective codepoints of the TCI state field of DCI format 1_1 or 1_2, and activate the indicated joint TCI state or separate TCI state sets, from 3 ms after PUCCH transmission including HARQ-ACK information indicating whether corresponding PDSCH is successfully received or not. Thereafter, the UE may receive DCI format 1_1 or 1_2 and apply one joint TCI state or separate TCI state set indicated by the TCI state field of the corresponding DCI to the uplink transmission and downlink reception beams. Here, DCI format 1_1 or 1_2 may include downlink data channel scheduling information (that is, with DL assignment), or may not include the same (that is, without DL assignment).

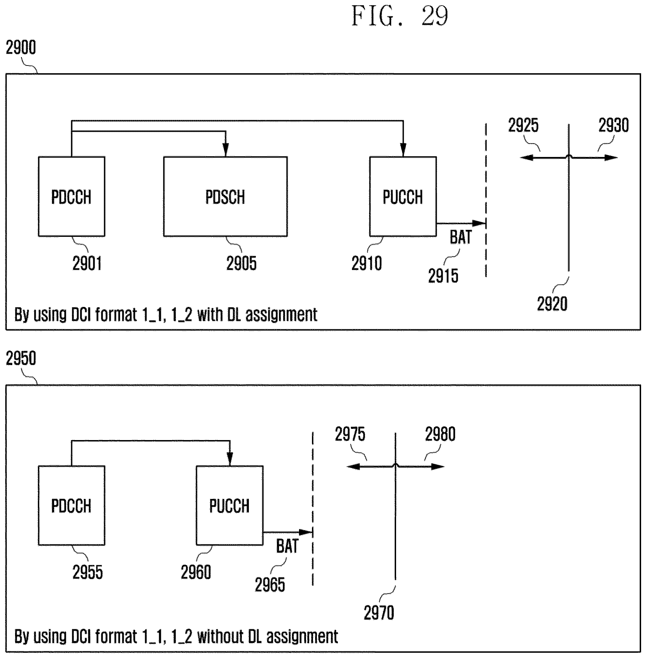

FIG. 29 illustrates a beam application time which may be considered in case of using a unified TCI scheme in a wireless communication system according to an embodiment of the disclosure. As mentioned above, the UE may receive DCI format 1_1 or 1_2 with or without downlink data channel scheduling information (DL assignment) from the base station, and may apply one joint TCI state or separate TCI state set indicated by the TCI state field of the corresponding DCI to the uplink transmission and downlink reception beams.

- DCI format 1_1 or 1_2 with DL assignment (indicated by reference numeral 2900): In case that the UE receives DCI format 1_1 or 1_2 including the downlink data channel scheduling information from the base station (indicated by reference numeral 2901) to indicate one joint TCI state or separate TCI state set based on the unified TC scheme, the UE may receive a PDSCH scheduled based on the received DCI (indicated by reference numeral 2905), and may transmit, to the base station, a PUCCH including HARQ-ACK indicating reception success or failure of the DCI and the PDSCH (indicated by reference numeral 2910). Here, the HARQ-ACK may include success or failure of the DCI and the PDSCH both, the UE may transmit NACK in case of not receiving at least one of the DCI and the PDSCH, and the UE may transmit ACK in case of successfully receiving both the DCI and the PDSCH.

- DCI format 1_1 or 1_2 without the DL assignment (indicated by reference numeral 2950): In case that the UE receives DCI format 1_1 or 1_2 not including the downlink data channel scheduling information from the base station (indicated by reference numeral 2955) to indicate one joint TCI state or separate TCI state set based on the unified TCI scheme, the UE may assume the following for the corresponding DCI:

  ∘ CRC scrambled using CS-RNTI is included.
  ∘ Every bit allocated to fields used as redundancy version (RV) fields have a value of 1.
  ∘ Every bit allocated to fields used as MCS fields have a value of 1.
  ∘ Every bit allocated to fields used as new data indication (NDI) fields have a value of 1.
  ∘ Every bit allocated to a frequency domain resource allocation (FDRA) field has a value of 0 for FDRA type 0, every bit allocated to the FDRA field have a value of 1 for FDRA type 1, and every bit allocated to the FDRA field have a value of 0 for FDRA scheme dynamic Switch.

The UE may transmit, to the base station, a PUCCH including the HARQ-ACK indicating reception success or failure of DCI format 1_1 or 1_2 for which the above details are assumed (indicated by reference numeral 2960).

- With respect to DCI format 1_1 or 1_2 with the DL assignment (indicated by reference numeral 2900) and without the DL assignment 2950, if a new TCI state indicated by the DCI 2901 and the 2955 is already indicated and identical to the TCI state applied to the uplink transmission and downlink reception beams, the UE may maintain the existing TCI state. If the new TCI state is different from the existing TCI state, the UE may determine an application time 2930 or 2980 of the joint TCI state or separate TCI state set indicated from the TCI state field of the DCI after an initial slot 2920 or 2970 after a time corresponding to a beam application time (BAT) 2915 or 2965 after the PUCCH transmission, and may use the previously indicated TCI-state until a previous section 2925 or 2975 of the corresponding slot 2920 or 2970.
- With respect to both DCI format 1_1 or 1_2 with the DL assignment 2900 and without the DL assignment 2950, the BAT may be configured with higher layer signaling based on UE capability report information using a specific number of OFDM symbols. Numerology of the BAT and the first slot after the BAT may be determined based on the smallest numerology among all the cells to which the joint TCI state or separate TCI state set indicated by the DCI is applied.

The UE may apply one joint TCI state indicated by the MAC-CE or the DCI with regard to receiving CORESETs connected to every UE-specific search space, receiving the PDSCH scheduled with the PDCCH transmitted from the corresponding CORESET and transmitting the PUSCH, and transmitting every PUCCH resource.

In case that one separate TCI state set indicated by the MAC-CE or the DCI includes one DL TCI state, the UE may apply the one separate TCI state set to receiving CORESETs connected to every UE-specific search space, and receiving the PDSCH scheduled with the PDCCH transmitted from the corresponding CORESET, and may apply to every PUSCH and PUCCH resource based on the existing UL TCI state indicated.

If one separate TCI state set indicated by the MAC-CE or the DCI includes one UL TCI state, the UE may apply the one separate TCI state set to every PUSCH and PUCCH resource, and may apply, based on the existing DL TCI state indicated, with regard to receiving CORESETs connected to every UE-specific search space, and receiving the PDSCH scheduled with the PDCCH transmitted from the corresponding CORESET.

If one separate TCI state set indicated by the MAC-CE or the DCI includes one DL TCI state and one UL TCI state, the UE may apply the DL TCI state to receiving CORESETs connected to every UE-specific search space, and receiving the PDSCH scheduled with the PDCCH transmitted from the corresponding CORESET, and may apply the UL TCI state to every PUSCH and PUCCH resource.

In the example of the MAC CEs according to the embodiments of FIGS. 20 to 28 described above, at least one of the elements can be combined with each other.

<Second Embodiment: Multi-TCI state indication and activation method based on the unified TCI scheme >

In an embodiment of the disclosure, the multi-TCI state indication and activation method based on the unified TCI scheme is described. The multi-TCI state indication and activation method may indicate expanding the number of indicated joint TCI states to two or more, and expanding DL TCI states and UL TCI states included in one separate TCI state set to up to two or more DL TCI states and UL TCI states. If one separate TCI state set includes up to two DL TCI states and two UL TCI states, the one separate TCI state set may have eight combinations in total of the DL TCI state and the UL TCI state (e.g., (DL, UL)={0,1}, {0,2}, {1,0}, {1,1}, {1,2}, {2,0}, { 2,1}, {2,2}, wherein the number denotes the number of the TCI states).

In case that the UE receives an indication of the multi-TCI state from the base station based on a MAC-CE, the UE may receive from the base station two or more joint TCI states or one separate TCI state set through the corresponding MAC-CE. The base station may schedule the UE to receive a PDSCH including the corresponding MAC-CE through the PDCCH. The UE may determine the uplink transmission beam or transmission filter and the downlink reception beam or reception filter based on the two or more joint TCI states or one separate TCI state set, indicated from 3 ms after PUCCH transmission including HARQ-ACK information indicating whether the PDSCH including the corresponding MAC-CE is successfully received or not.

In case that the UE receives an indication of the multi-TCI state from the base station based on DCI format 1_1 or 1_2, each codepoint of one TCI state field of the corresponding DCI format 1_1 or 1_2 may indicate two or more joint TCI states or two or more separate TCI state sets. The UE may receive a MAC-CE from the base station and activate two or more joint TCI states or two or more separate TCI state sets corresponding to each codepoint of one TCI state field of the corresponding DCI format 1_1 or 1_2. The base station may schedule the UE to receive a PDSCH including the corresponding MAC-CE through the PDCCH. The UE may activate TCI state information included in the MAC-CE from 3 ms after PUCCH transmission including HARQ-ACK information indicating whether the PDSCH including the corresponding MAC-CE is successfully received or not.

In case that the UE is indicated with the multi-TCI state from the base station based on DCI format 1_1 or 1_2, two or more TCI state fields may exist in the corresponding DCI format 1_1 or 1_2, and one of two or more joint TCI states or two or more separate TCI state sets may be indicated based on each TCI state field. Here, the UE may receive MAC-CE from the base station and activate a joint TCI state or separate TCI state set corresponding to each code point of two or more TCI state fields in the corresponding DCI format 1_1 or 1_2. The base station may schedule the UE to receive a PDSCH including the corresponding MAC-CE through the PDCCH. The UE may activate TCI state information included in the MAC-CE from 3 ms after transmission of a PUCCH including HARQ-ACK information indicating whether the PDSCH including the corresponding MAC-CE is successfully received or not. The UE may be configured with presence or absence of one or more additional TCI state fields through higher layer signaling, a bit length of the additional TCI state field may be the same as that of the existing TCI state field, and the length may be adjusted based on higher layer signaling.

The UE may receive a transmission and reception beam-related indication in a unified TCI manner, by using one of the joint TCI state and the separate TCI state configured from the base station. The UE may be configured through higher layer signaling from the base station to use one of the joint TCI state or the separate TCI state. For a separate TCI state indication, the UE may be configured to have a maximum bit length of 4 in the TCI state field in DCI format 1_1 or 1_2 through higher layer signaling.

MAC-CEs used to activate or indicate the multiple joint TCI states and separate TCI states described above may exist for each joint and separate TCI state scheme, one MAC-CE may be used to activate or indicate a TCI state based on either the joint or separate TCI state scheme, and MAC-CEs used in the MAC-CE-based indication scheme and the MAC-CE-based activation scheme may share one MAC-CE structure, or may use individual MAC-CE structures. With reference to drawings described later, various MAC-CE structures for activating and indicating multiple joints or separate TCI states may be considered. In the drawings to be described later, for convenience of explanation, a case in which two TCI states are activated or indicated is considered, but may be similarly applied to cases in which three or more TCI states are activated or indicated.

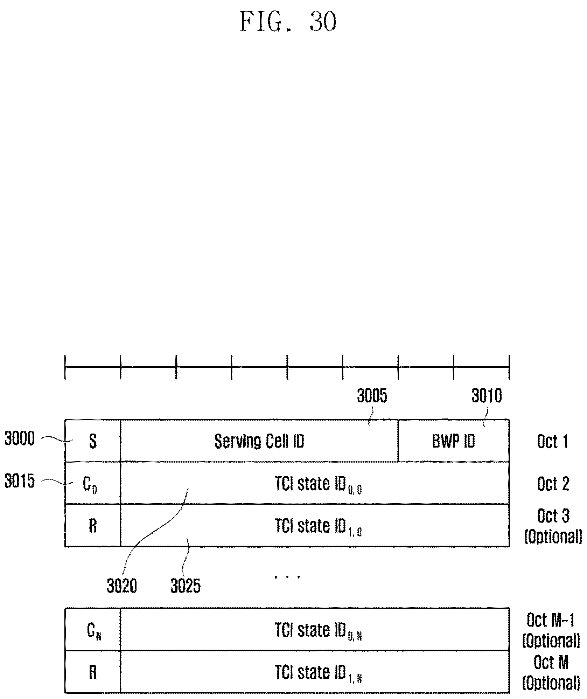

FIG. 30 illustrates a MAC-CE structure for multi-joint TCI state activation and indication in a wireless communication system according to an embodiment of the disclosure. In FIG. 30, a serving cell ID field 3005 and a BWP ID field 3010 may indicate a serving cell ID and a BWP ID, respectively. For example, if S field 3000 has a value of 1, a corresponding MAC-CE may indicate one or two joint TCI states, and have a length only up to a third octet. Here, if $C_0$ field 3015 has a value of 0, the third octet does not exist, and one joint TCI state may be indicated through a TCI state $ID_{0,0}$ field 3020. If the $C_0$ field 3015 has a value of 1, the third octet exists, and two joint TCI states may be indicated by the TCI state $ID_{0,0}$ field 3020 and a TCI state $ID_{1,0}$ field 3025, respectively.

For example, if the S field 3000 has a value of 0, the corresponding MAC-CE may activate one or two joint TCI states corresponding to respective codepoints of the TCI state field of DCI format 1_1 or 1_2, may activate one joint TCI state corresponding to each codepoint of two TCI state fields of DCI format 1_1 or 1_2, and may activate joint TCI states for up to 8 codepoints. In case that one or two joint TCI states are activated for one codepoint of one TCI state field, a TCI state $ID_{0,Y}$ field and a TCI state $ID_{1,Y}$ field may indicate first and second joint TCI states of the two joint TCI states activated at a Y-th codepoint of the TCI state field. In case that one joint TCI state is activated for one codepoint of two TCI state fields, the TCI state $ID_{0,Y}$ field and the TCI state $ID_{1,Y}$ field may indicate each joint TCI state activated at the Y-th codepoint of the first and second TCI state fields.

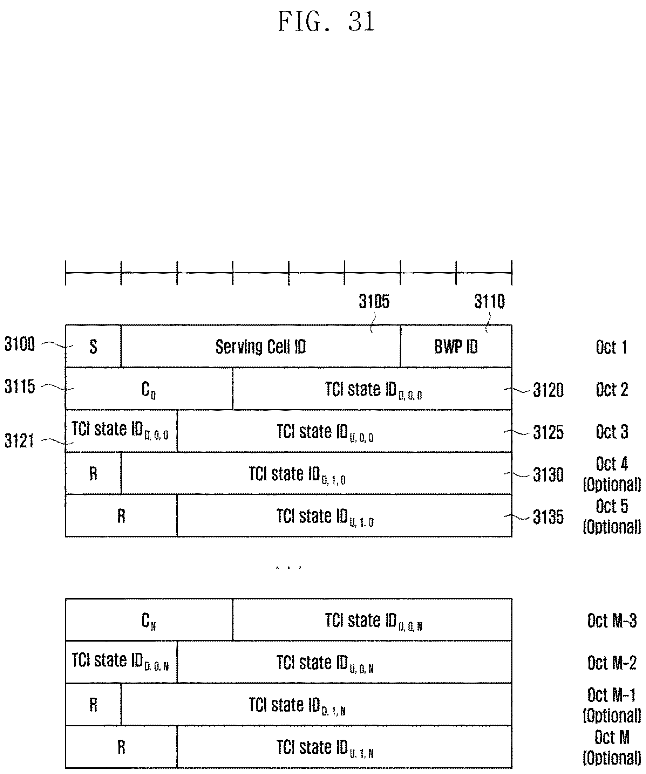

FIG. 31 illustrates a MAC-CE structure for multi-separate TCI state activation and indication in a wireless communication system according to an embodiment of the disclosure. In FIG. 31, a serving cell ID field 3105 and a BWP ID field 3110 may indicate a serving cell ID and a BWP ID, respectively. For example, if the S field 3100 has a value of 1, a corresponding MAC-CE may indicate one separate TCI state set, and may include only up to a fifth octet. If the S field 3100 has a value of 0, the corresponding MAC-CE may include information of multiple separate TCI state sets, and the corresponding MAC-CE may activate one separate TCI state set corresponding to each codepoint of the TCI state field of DCI format 1_1 or 1_2 or one separate TCI state set corresponding to each codepoint of two TCI state fields of DCI format 1_1 or 1_2, and may activate the separate TCI state for up to 8 or 16 codepoints through higher layer signaling as mentioned above.

In the MAC-CE structure of FIG. 31, every four octets from the second octet may correspond to one separate TCI state set. For example, $C_0$ field 3115 may have eight values in total from "000" to "111", which may respectively correspond to eight possible number of cases that one separate set of TCI states may have, as described above.

- When the $C_0$ field has a value of "000", this field may be a field indicating that one separate TCI state set includes one UL TCI state. Further, the TCI state $ID_{D,0,0}$ fields 3120 and 3121 may be ignored, and the TCI state $ID_{U,0,0}$ field 3125 may include one piece of UL TCI state information. In addition, the fourth and fifth octets may be ignored.
- When the $C_0$ field has a value "001", this field may be a field indicating that one separate TCI state set includes two UL TCI states. Further, the TCI state $ID_{D,0,0}$ fields 3120 and 3121 may be ignored, and the TCI state $ID_{U,0,0}$ field 3125 may include information on the first UL TCI state among two UL TCI states. In addition, the fourth octet may be ignored, and a TCI state $ID_{U,1,0}$ field 3135 may include information on the second UL TCI state among the two UL TCI states.
- When the $C_0$ field has a value of "010", this field may be a field indicating that one separate TCI state set includes one DL TCI state. Further, the TCI state $ID_{D,0,0}$ fields 3120 and 3121 may include one piece of DL TCI state information, and the TCI state $ID_{U,0,0}$ field 3125 and the fourth and fifth octets may be ignored.
- When the $C_0$ field has a value of "011", this field may be a field indicating that one separate TCI state set includes one DL TCI state and one UL TCI state. Further, the TCI state $ID_{D,0,0}$ fields 3120 and 3121 may include one piece of DL TCI state information, and the TCI state $ID_{U,0,0}$ field 3125 may include one piece of UL TCI state information. The fourth and fifth octets may be ignored.
- When the $C_0$ field has a value of "100", this field may be a field indicating that one separate TCI state set includes one DL TCI state and two UL TCI states. Further, the TCI state $ID_{D,0,0}$ fields 3120 and 3121 may include one piece of DL TCI state information, and the TCI state $ID_{U,0,0}$ field 3125 may include information on the first UL TCI state among two UL TCI states. In addition, the fourth octet may be ignored, and the TCI state $ID_{U,1,0}$ field 3135 may include information on the second UL TCI state among the two UL TCI states.
- When the $C_0$ field has a value of "101", this field may be a field indicating that one separate TCI state set includes two DL TCI states. Further, the TCI state $ID_{D,0,0}$ fields 3120 and 3121 may include information on the first DL TCI state among two DL TCI states, and the TCI state $ID_{U,0,0}$ field 3125 and the fifth octet may be ignored. The TCI state $ID_{D,1,0}$ field 3130 may include information on the second DL TCI state among two DL TCI states.
- When the $C_0$ field has a value of "110", this field may be a field indicating that one separate TCI state set includes two DL TCI states and one UL TCI state. Further, the TCI state $ID_{D,0,0}$ fields 3120 and 3121 may include information on the first DL TCI state among two DL TCI states, and the TCI state $ID_{U,0,0}$ field 3125 may include one piece of UL TCI state information. In addition, the TCI state $ID_{D,1,0}$ field 3130 may include information on the second DL TCI state among two DL TCI states, and the fifth octet may be ignored.
- When the $C_0$ field has a value of "111", this field may be a field indicating that one separate TCI state set includes two DL TCI states and two UL TCI states. The TCI state $ID_{D,0,0}$ fields 3120 and 3121 may include information on the first DL TCI state among two DL TCI states. The TCI state $ID_{U,0,0}$ field 3125 may include information on the first UL TCI state among two UL TCI states. The TCI state $ID_{D,1,0}$ field 3130 may include information on the second DL TCI state among two DL TCI states. The TCI state $ID_{U,1,0}$ field 3135 may include information on the second UL TCI state among two UL TCI states.

FIG. 31 may illustrate an example of the MAC CE used when the UL TCI state of the separate TCI states uses a different higher layer signaling structure from that of the DL TCI state of the separate TCI states and the joint TCI state, as described above. Accordingly, the UL TCI state requires 6 bits to represent up to 64, and thus the TCI state $ID_{D,0,0}$ to TCI state $ID_{D,1,N}$ fields indicating the DL TCI state may be represented with 7 bits, whereas the TCI state $ID_{U,0,0}$ to TCI state $ID_{U,1,N}$ fields indicating the UL TCI state may be represented with 6 bits.

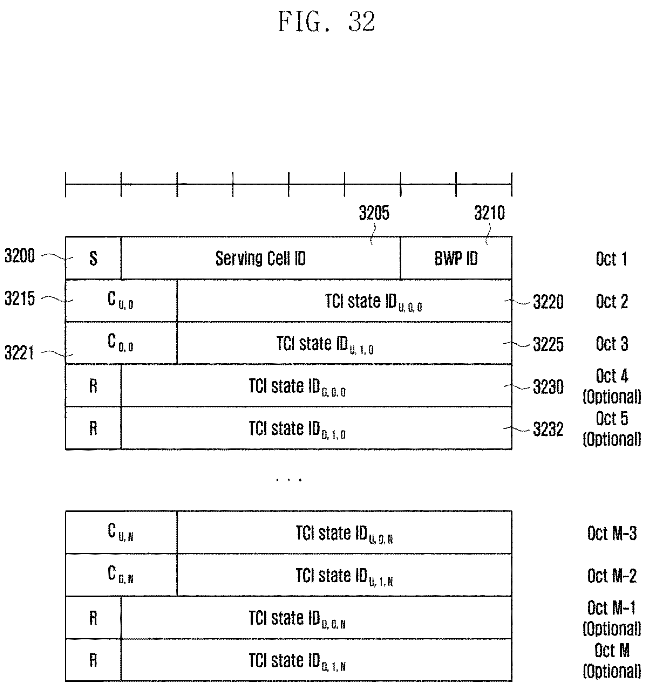

FIG. 32 illustrates yet another MAC-CE structure for multi-separate TCI state activation and indication in a wireless communication system according to an embodiment of the disclosure. In FIG. 32, a serving cell ID field 3205 and a BWP ID field 3210 may indicate a serving cell ID and a BWP ID, respectively. For example, if S field 3200 has a value of 1, a corresponding MAC-CE may indicate one separate TCI state set, and have the length only up to a fifth octet.

For example, if the S field 3200 has a value of 0, the corresponding MAC-CE may include information of multiple separate TCI state sets, and the corresponding MAC-CE may activate one separate TCI state set corresponding to each codepoint of the TCI state field of DCI format 1_1 or 1_2, or activate one separate TCI state set corresponding to each codepoint of two TCI state fields of DCI format 1_1 or 1_2, and may activate the separate TCI state set corresponding to up to 8 or 16 codepoints via higher layer signaling as described above.

In the MAC-CE structure of FIG. 32, every four octets from the second octet may correspond to one separate TCI state set. For example, $C_{U,0}$ field 3215 and $C_{D,0}$ field 3221 may indicate the number of UL TCI states and DL TCI states, respectively, which are included in one separate TCI state set, and each codepoint may have a meaning as follows.

- Since a case in which the $C_{U,0}$ field has a value of "00" may refer to including no UL TCI state, a TCI state $ID_{U,0,0}$ 3220 and a TCI state IDU,1,0 3225 may be ignored.
- Since a case in which the $C_{U,0}$ field has a value of "01" may refer to including one UL TCI state, the TCI state $ID_{U,0,0}$ 3220 may include one piece of UL TCI state information, and the TCI state $ID_{U,1,0}$ 3225 may be ignored.
- Since a case in which the $C_{U,0}$ field has a value of "10" may refer to including two UL TCI states, the TCI state $ID_{U,0,0}$ 3220 may include information on the first UL TCI state among the two UL TCI states, and the TCI state $ID_{U,1,0}$ 3225 may include information on the second UL TCI state among the two UL TCI states.
- Since a case in which the $C_{D,0}$ field has a value of "00" may refer to including no DL TCI state, thus the fourth and fifth octets may be ignored.
- Since a case in which the $C_{D,0}$ field has a value of "01" may refer to including one DL TCI state, a TCI state $ID_{D,0,0}$ 3230 may include one piece of DL TCI state information, and the fifth octet may be ignored.
- Since a case in which the $C_{D,0}$ field has a value of "10" may refer to including two DL TCI states, the TCI state $ID_{D,0,0}$ 3230 may include information on the first DL TCI state among the two DL TCI states, and a TCI state $ID_{D,1,0}$ 3235 may include information on the second DL TCI state among the two DL TCI states.

FIG. 32 may illustrate an example of the MAC CE used when the UL TCI state of the separate TCI states uses a different higher layer signaling structure from that of the DL TCI state of the separate TCI states and the joint TCI state, as described above. Accordingly, the UL TCI state requires 6 bits to represent up to 64, and thus the TCI state $ID_{D,0,0}$ to TCI state $ID_{D,1,N}$ fields indicating the DL TCI state may be represented with 7 bits, whereas the TCI state $ID_{U,0,0}$ to TCI state $ID_{U,1,N}$ fields indicating the UL TCI state may be represented with 6 bits.

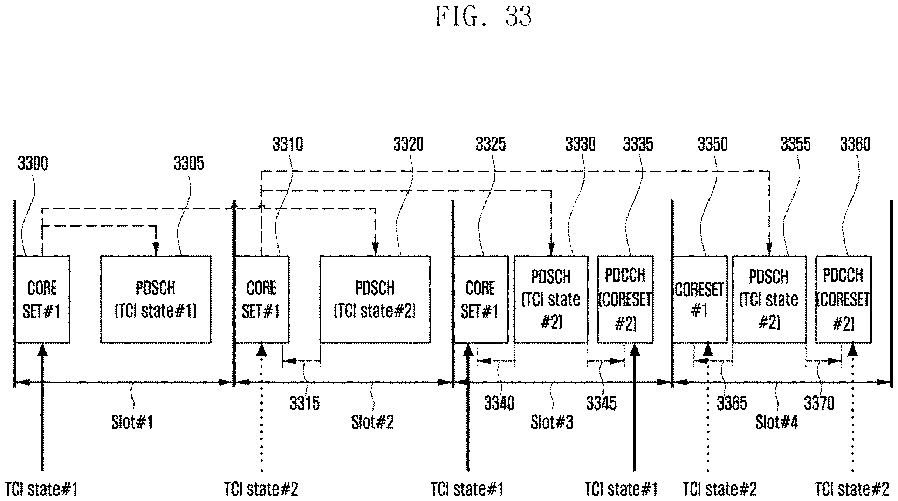

In an example of the MAC CE of FIGS. 33 to 35 described above, it is possible that at least one of its constituent elements is coupled to each other.

<Third Embodiment: Method of determining a TCI state for reception of a downlink control channel when a multi-TCI state is indicated>

In an embodiment of the disclosure, a method of determining a TCI state for receiving a downlink control channel when a multi-TCI state is indicated or activated based on a unified TCI scheme is described. When a LTE is indicated through MAC-CE or DCI to have one joint TCI state or one set of separate TCI states, the UE may perform reception of a downlink control channel by applying the indicated TCI state to all CORESETs connected to a UE-specific search space. When the UE is indicated with multiple joint TCI states or one separate set of TCI states which may include multiple DL or UL TCI states, the UE may group configured CORESETs and apply each of the multiple indicated TCI states to the CORESETs within each group. Various methods in which CORESETs may be grouped will be explained. As used herein, reception of a CORESET may refer to monitoring a PDCCH transmitted from a CORESET and/or reception of DCI over a PDCCH transmitted from a CORESET. In addition, as described below, reception of a CORESET to which specific TCI state(s) are applied may be understood as monitoring a PDCCH or receiving a PDCCH or DCI, to which specific TCI state(s) in the CORESET are applied, and application of specific TCI state(s) may be understood as monitoring a PDCCH to which specific TCI state(s) in the CORESET are applied or receiving a PDCCH or DCI to which specific TCI state(s) in the CORESET are applied.

[Method 3-1] Method of determining a TCI state based on higher layer signaling for each CORESET

According to a disclosure, in case of receiving from a base station, via higher layer signaling for each CORESET, multiple joint TCI states or one separate TCI state set, which may include multiple DL and UL TCI states, the multiple joint TCI states or one separate TCI state set being indicated in a unified TCI manner, the UE may receive a configuration relating to what number-th TCI state among respective TCI states is to be applied to the corresponding CORESET. For example, in case that two TCI states are indicated (i.e., if up to two joint TCI states or one separate TCI state set that may include up to two DL TCI states and two UL TCI states are used for a TCI state indication), higher layer signaling for each CORESET may be enablewhichTCI for example, and a corresponding parameter may have a value of either enable1stTCI or enable2ndTCI. The same method may be applied when three or more joint TCI states or one separate TCI state set, which may include up to three DL TCI states and three UL TCI states, are established.

When CORESETs are configured with enable1stTCI as a value of enablewhichTCI, which is higher layer signaling, the LTE may apply the first joint TCI state among two joint TCI states or the first DL TCI state of a separate TCI state set, which may include two DL TCI states, the two joint TCI states or the separate TCI state set being indicated via MAC-CE or DCI, to the corresponding CORESET and use the same for PDCCH reception. When CORESETs are configured with enable2ndTCI as a value of enablewhichTCI, which is higher layer signaling, the UE may apply the second joint TCI state or the second DL TCI state to the corresponding CORESET and use the same for PDCCH reception.

When the UE has been configured with CORESETs having different values of CORESETPoolIndex, which is higher layer signaling, for a specific cell, the UE may not expect to receive a configuration of the above-described enableWhichTCI, which is higher layer signaling.

When the UE has been configured with sfnSchemeA or sfnSchemeB in relation to the PDCCH reception method for higher layer signaling of a specific bandwidth part, the UE may not expect to receive a configuration of the above-described enableWhichTCI, which is higher layer signaling.

When a value of searchSpaceLinking configured within the higher layer signaling of search space set A is search space set B, and a value of searchSpaceLinking configured within the higher layer signaling of search space set B is search space set A, the UE may determine that the two search spaces A and B are used for multi-TRP-based PDCCH repetitive transmission, and the UE may be configured with different values of enableWhichTCI, which is higher layer signaling, in relation to "CORESET a" connected to the search space set A and "CORESET b" connected to the search space set B.

[Method 3-2] Method of determining a TCI state based on linked search spaces

According to a disclosure, a LTE may receive, from a base station, a configuration of two sets of search spaces explicitly linked via higher layer signaling for multi-TRP-based PDCCH repetitive transmission. When a searchSpace-Linking value configured in the higher layer signaling of search space set A is search space set B, and a searchSpace-Linking value configured in the higher layer signaling of search space set B is search space set A, the UE may determine that the two search space sets are explicitly linked via higher layer signaling. Based on the explicitly linked search space sets as described above, in case of receiving, from the base station, multiple joint TCI states or one separate TCI state set, which may include multiple DL and UL TCI states, the two joint TCI states or the separate TCI state set being indicated in a unified TCI manner, the LTE may determine what number-th TCI state among respective TCI states is to be applied to the corresponding CORESET.

When the UE has received multiple joint TCI states or one separate TCI state set, which may include multiple DL and UL TCI states, the UE may apply each TCI state to CORESETs connected to two search space sets CORESETs, respectively, if there are search space sets explicitly linked via higher layer signaling as described above. For example, the UE may apply a first TCI state to a CORESET connected to a lower-indexed search space set among the two linked search space sets, and apply a second TCI state to a CORESET connected to a higher-indexed search space set among the two linked search space sets. Alternatively, the UE may apply a first TCI state to a lower-indexed CORESET and apply a second TCI state to a higher-indexed CORESET, based on the index of each CORESET connected to each of the two linked search space sets.

For a CORESET connected to a search space, in which no search space explicitly linked via higher layer signaling exists, i.e., a CORESET connected to a search space used for a single PDCCH transmission, the UE may use the first TCI state among the two indicated TCI states to receive a PDCCH.

When there are CORESETs 1 and 2 connected to search space set 2 and search space set 3, respectively, that are explicitly linked via higher layer signaling, and CORESET 2 is connected to search space set 1 with no explicit linking, if the UE has received joint TCI states 1 and 2, the reception may be performed by applying joint TCI states 1 and 2 to CORESET 1 and CORESET 2 connected to explicitly linked search space set 2 and search space set 3, respectively, and applying joint TCI state 1, which is the first TCI state among the two TCI states, to CORESET 2 connected to search space set 1 with no explicit linking. In this case, since joint TCI state 2 should be applied if CORESET 2 is based on linked search spaces, and joint TCI state 1 should be applied if CORESET 2 is based on a search space with no explicit linking, a conflict may occur in the application of TCI state. In this case, for example, the LTE may consider prioritizing the application of TCI state application based on the lower index of the search space set, resulting in the application of joint TCI state 1 based on search space set 1 with no explicit linking. Alternatively, the UE may prioritize the application of TCI state based on the search space set that has explicit linking, resulting in the application of joint TCI state 2.

[Method 3-3] Method of determining a TCI state based on CORESETPoolIndex

According to a disclosure, when the UE has been configured with different CORESETPoolIndex values, the LTE may receive information indicating one joint TCI state or one separate TCI state set, which may include one DL TCI state and/or one UL TCI state, through a PDCCH that may be received from CORESETs configured with CORESETPoolIndex values, respectively, and apply the indicated TCI states to uplink transmissions and downlink receptions corresponding to each CORESETPoolIndex. For example, the UE may receive, via a PDCCH that may be received from a CORESET having a CORESETPoolIndex configured with 0, information indicating one joint TCI state or one separate TCI state set, which may include one DL TCI state and/or one UL TCI state, and may apply the indicated TCI state to all uplink transmissions and downlink receptions associated with a CORESETPoolIndex of 0. The uplink transmission and downlink reception channels or signals associated with a CORESETPoolIndex of 0 may include at least PUSCH, PDSCH, and PUCCH which are scheduled through a CORESET configured with a CORESETPoolIndex value of 0, and a triggered aperiodic CSI-RS or aperiodic SRS.

Furthermore, in relation to a TCI state indication using MAC-CE, the above description may be similarly applied. For example, if a UE indicates that a MAC-CE included within a PDSCH scheduled from a CORESET having a CORESETPoolIndex configured with 0 indicates one joint TCI state or a set of one separate TCI state, which may include one DL TCI state and/or one UL TCI state, the LTE may apply the indicated TCI state for uplink transmissions and downlink receptions associated with CORESETPoolIndex 0 by using the corresponding MAC-CE after the beam application time described above.

The above PDCCH or MAC-CE-based TCI state indication and application for CORESETPoolIndex 0 may be equally applicable for CORESETPoolIndex 1.

For a TCI state indication via a PDCCH corresponding to a specific CORESETPoolIndex described above, the UE may receive a MAC-CE in which the definitions of some of the fields of the MAC-CE structure described above have been modified or added, and may perform TCI state activation for each code point of the TCI state field within DCI format 1_1 or 1_2, or may receive a TCI state indication via the MAC-CE.

- For example, when the S field 2000 of FIG. 20 has a value of 1, one joint TCI state may be indicated via a MAC-CE as described above, the MAC CE may include only up to the second octet, and the R field of the second octet may be a field representing a CORESETPoolIndex, and when the corresponding field has a value of 0, the UE may apply the TCI state indicated by the MAC CE to uplink transmissions and downlink receptions associated with CORESETPoolIndex 0, as described above. The above description is similarly applicable to the case in which CORESETPoolIndex has a value of 1.
- In another example, when the S field 2000 of FIG. 20 has a value of 0, the corresponding MAC-CE may include two or more pieces of joint TCI state information, as described above, and each codepoint of the TCI state field in DCI format 1_1 or 1_2 may activate respective joint TCI states, and up to eight joint TCI states may be activated. In this case, all R fields from the second octet up to the 9th octet may be a field representing CORESETPoolIndex, and when the corresponding field has a value of 0, TCI state activation may be performed for each codepoint of the TCI state field in DCI format 1_1 or 1_2 that may be received from a CORESET with CORESETPoolIndex 0 configured by the corresponding MAC CE as described above. All R fields from the second octet up to the 9th octet may have the same CORESETPoolIndex value, or they may have different values. The above description may be similarly applied to the case in which CORESETPoolIndex has a value of 1.
- In yet another example, instead of a conventional definition of the S field 2000 in FIG. 20, the S field 2000 may be a field representing CORESETPoolIndex. In this case, a function of distinguishing between a TCI state indication via MAC-CE and activation for each codepoint of a TCI state field in DCI, which are possible through the existing S field, is performed through the R field of the second octet. Alternatively, the MAC-CE of FIG. 20 is defined as a MAC-CE for activation for each codepoint of a TCI state field by using two or more joint TCI states, and a MAC-CE for indicating one joint TCI state may be defined separately, for example, as a separate MAC-CE for a TCI state indication through a MAC-CE configured by the first two octets in the MAC-CE structure of FIG. 20.
- In still another example, the R field 2100 of FIG. 21 may be a field representing a CORESETPoolIndex, and when the corresponding field has a value of 0 or 1, the corresponding MAC-CE may activate a TCI state for each codepoint in a TCI state field in a PDCCH that the UE may receive from a CORESET configured with a CORESETPoolIndex of 0 or 1.
- In addition, other MAC-CE structures may also be considered that TCI state activation or indication for each CORESETPoolIndex is performed by modifying or adding definitions of some fields, similar to the method described above.

[Method 3-4] Method of determining a TCI state based on SFN PDCCH configuration

According to a disclosure, in case of receiving, from a base station, multiple joint TCI states or one separate TCI state set, which may include multiple DL and UL TCI states, the multiple joint TCI states or one separate TCI state set being indicated in a unified TCI manner, based on sfnSchemeA or sfnSchemeB, which is higher layer signaling that may be configured in relation to a PDCCH reception scheme for each bandwidth part, the UE may determine what number-th TCI state among respective TCI states is to be applied and what number-th CORESET group among the CORESET groups the corresponding TCI state is to be applied to. When the UE has been configured with the higher layer signaling sfnSchemeA or sfnSchemeB, which may be configured in relation to a PDCCH reception scheme for a bandwidth part, and the LTE receives two TCI states, the LTE may apply both of two TCI states to all CORESETs connected to the LTE-specific search space within the corresponding bandwidth, and may apply the first TCI state among the two TCI states to a CORESET connected to a common search space. When the UE has not been configured with the higher layer signaling sfnSchemeA or sfnSchemeB, which may be configured in relation to a PDCCH reception scheme for a bandwidth part, the UE may apply a method other than the corresponding method [Method 3-4] in the current embodiment.

[Method 3-5] Method of determining a TCI state based on a CORESET index

According to a disclosure, when a LTE groups CORESETs based on a CORESET index receives, from a base station, multiple joint TCI states or one separate TCI state set, which may include multiple DL and UL TCI states, the multiple joint TCI states or one separate TCI state set being indicated in a unified TCI manner, the UE may determine what number-th TCI state among respective TCI states is to be applied and what number-th CORESET group among the CORESET groups the corresponding TCI state is to be applied to.

The UE may be configured with up to four bandwidth parts within a cell, up to three CORESETs may be configured for each bandwidth part, and since a CORESET index is unique within a cell, an index of 0 to 11 of CORESET in a cell is possible. Based on this, for example, if the UE is indicated to apply two TCI states, the UE may, for example, divide the CORESETs into two groups, an even-numbered CORESETs and an odd-numbered CORESETs, and apply the first TCI state to the group including the even-numbered CORESETs and the second TCI state to the group including the odd-numbered CORESETs. Alternatively, for example, the UE may divide each CORESET into three groups based on the remaining value when the index of each CORESET is divided by 3, by considering modulo 3 as contemplated by the above hashing function, and apply one TCI state to each group if three TCI states are indicated to be applied, and apply the first TCI state to a group with the remaining value of 0, 2, and apply the second TCI state to a group with the remaining value of 1 if two TCI states are indicated to be applied.

[Method 3-6] Method of determining a TCI state based on a search space group

According to a disclosure, when a UE groups search space sets and receives, from a base station, multiple joint TCI states or one separate TCI state set, which may include multiple DL and UL TCI states, the multiple joint TCI states or one separate TCI set being indicated in a unified TCI manner, the UE may determine what number-th TCI state among respective TCI states is to be applied and what search space set group to which the CORESET to which the corresponding TCI state is applied is connected to.

Similar to [Method 3-5], the LTE may, for example, divide CORESETs into two groups, such as an even-numbered CORESETs and an odd-numbered CORESETs, based on the index of the search space, and apply the first TCI state to the group including the even-numbered CORESETs and the second TCI state to the group including the odd-numbered CORESETs. When there are CORESETs connected to both search spaces included in the two groups, the first TCI state may be preferentially applied or a TCI state that would be applied to a group including a lower-indexed search space is preferentially applied, or when the sfnSchemeA or sfnSchemeB, which is higher layer signaling, is configured for the corresponding bandwidth part, both the first and second TCI states may be applied. Alternatively, two groups of search spaces may be configured via higher layer signaling. For example, a set of random search spaces may be configured as one group via higher layer signaling, another set of search spaces may be configured as another group via higher layer signaling, and then each of the two indicated TCI states may be applied to CORESETs connected to each group.

[Method 3-7] Method of determining a TCI state to minimize the number of intra-slot beam changes

According to a disclosure, a UE may determine a TCI state of a CORESET to minimize the number of intra-slot beam changes. When the UE receives TCI state activation and indication from the base station based on a unified TCI scheme, the UE may report the number of possible beam or TCI state changes within a slot to a base station through a UE capability report, which may vary for each numerology, cell, FR, normal CP, or extended CP. Additionally, when receiving TCI state activation signaling and indications from a base station based on a unified TCI scheme, the UE may report the minimum time required when changing a beam or TCI state within one slot to the base station through a UE capability report. Here, this report may reuse timeDurationForQCL, which is the existing UE capability report related to beam change time, may reuse a beam application time-related UE capability report required for a beam application time in a unified TCI scheme, or may define and use a new UE capability report separately from the two parameters. This LTE capability report may be reported in terms of the number of OFDM symbols, and may vary for each numerology, cell, FR, normal CP, or extended CP.

When the LTE receives an indication of two TCI states from the base station, the UE may apply the two TCI states to all CORESETs connected to a UE-specific search space. In this case, as described above, the base station may adjust a transmission beam or TCI state for a CORESET to allow the UE to receive one CORESET to which different TCI states are applied in different monitoring sections, so as to enable minimization of the number of beam changes in a slot by considering a beam change time of the UE.

FIG. 33 illustrates a method of determining a TCI state of a downlink control channel to minimize the number of intra-slot beam changes in a wireless communication system according to an embodiment of the disclosure. A UE may assume a situation in which the UE has been indicated with joint TCI states#1 and #2 before slot#1 from the base station. Further, the UE may receive a PDCCH by applying TCI states#1 and #2 to CORESET#1 and CORESET#2, respectively, by considering one of [Method 3-1] to [Method 3-6] described above. The UE uses the applied TCI state at the time of receiving a PDCCH according to a CORESET when there is no PDSCH scheduling in each slot. When PDSCH scheduling exists in each slot, the UE may calculate a beam change time of before the first symbol of the scheduled PDSCH and after the last symbol of the scheduled PDSCH when receiving a PDCCH according to a CORESET and, if the last symbol of the CORESET exists within a beam change time interval from before the first symbol of the scheduled PDSCH or if the first symbol of the CORESET exists within a beam change time interval after the last symbol of the scheduled PDSCH, the LTE may change a beam or TCI state, which will be applied upon reception of the PDCCH from the CORESET, to the beam of the scheduled PDSCH.

- The UE has received scheduling for inter-slot-based TDM PDSCH repetitions (indicated by reference numerals 3305 and 3320) by receiving CORESET#1 3300 from the base station in slot#1 and, since there was no PDSCH scheduling in the corresponding slot at the time of receiving CORESET#1, the UE may receive a PDCCH in CORESET#1 3300 based on the previously applied TCI state#1. The two scheduled PDSCHs 3305 and 3320 may be received from CORESET#1 based on TCI state#1 and TCI state#2, respectively.

- Since there is scheduling for the PDSCH from the base station in slot#2, the UE calculates a beam change time of before a first symbol of the scheduled PDSCH 3320 and after a last symbol of the scheduled PDSCH 3320, and since a last symbol of CORESET#1 3310 exists within a time 3315 preceding by the beam change time before the first symbol of the scheduled PDSCH 3320, the UE may consider that the received beam or TCI state of CORESET#1 3310 will be the same as that of the PDSCH and use TCI state#2 when receiving CORESET#1 3310.

- The UE has received scheduling for inter-slot-based TDM PDSCH repetitions for slot#3 and slot#4 from CORESET#1 3310 of slot#2 (indicated by reference numerals 3330 and 3355), and may receive the two scheduled PDSCHs 3330 and 3355 based on TCI state#1 and TCI state#2, respectively. The UE calculates a beam change time before a first symbol of the scheduled PDSCH 3330 and after a last symbol of the scheduled PDSCH 3330 in slot#3, and determines that a last symbol of CORESET#1 3325 exists within a time 3340 preceding by the beam change time before the first symbol of the scheduled PDSCH 3330, the UE may consider that the received beam or TCI state of CORESET#1 3325 will be the same as that of the PDSCH, and use TCI state#1 when receiving CORESET#1 3325.

- Similarly, since a first symbol of CORESET#2 3335 exists within a time 3345 followed by the beam change time after the last symbol of the scheduled PDSCH 3330, the LTE may consider that the received beam or TCI state of CORESET#2 3335 will be the same as that of the PDSCH and use TCI state#1 when receiving CORESET#2 3335.

- Since there is scheduling for the PDSCH from the base station in slot#4, the UE calculates a beam change time before a first symbol of the scheduled PDSCH 3355 and after a last symbol of the scheduled PDSCH 3355, and since a last symbol of CORESET#1 3350 exists within a time 3365 followed by the beam change time before the first symbol of the scheduled PDSCH 3355, the UE may consider that the received beam or TCI state of CORESET#1 3350 will be the same as that of the PDSCH and use TCI state#2 when receiving CORESET#1 3350.

- Similarly, since a first symbol of CORESET#2 3360 exists within a time 3370 followed by the beam change time after the last symbol of the scheduled PDSCH, the UE may consider that the received beam or TCI state of CORESET#2 3360 will be the same as that of the PDSCH and use TCI state#2 when receiving CORESET#2 3360.

- As described above, there may be a situation where the same CORESET is received using different TCI states for each slot, by considering a PDSCH scheduling situation and a beam change time of each slot, in order to minimize the number of beam switches.

At least one of the 3-1 to 3-7 methods of the third embodiment described above may be used in combination with each other.

<Fourth embodiment: Another method of determining a PDCCH TCI state when multi-TCI state is indicated>

In an embodiment of the disclosure, a method of determining, applying, indicating, or activating a TCI state for each CORESET or some or all CORESETs within a specific group of CORESETs for receiving a downlink control channel (PDCCH) when a single or multiple TCI states are indicated or activated based on a unified TCI scheme is described. The following may be used in combination with the methods of Embodiments 1 through 3 above. Below, reception of a CORESET to which specific TCI state(s) are applied may be understood as reception of a PDCCH or DCI to which specific TCI state(s) in a CORESET are applied, and the application of specific TCI state(s) may be understood as reception of a PDCCH or DCI to which specific TCI state(s) in a CORESET are applied.

A LTE may receive higher layer signaling configuration information from a base station, and the higher layer signaling may be configured for each CORESET, or for a CORESET group including multiple CORESETs. When the base station and the LTE operate based on a unified TCI scheme, and the LTE receives indication or activation of a single or multiple TCI states from the base station through DCI or MAC-CE, the higher layer signaling may include at least one of the following pieces of information about which of the single or multiple TCI states indicated/activated by the base station to the UE through DCI or MAC-CE is to be applied when receiving a CORESET from which a PDCCH may be detected.

- The higher layer signaling described above may refer to allowing application of a first indicated/activated TCI state among the multiple TCI states.
- The higher layer signaling described above may refer to allowing application of a second indicated/activated TCI state among the multiple TCI states.
- The higher layer signaling described above may refer to allowing application of a specific Nth indicated/activated TCI state among the multiple TCI states. A value of N may be configured for the LTE via higher layer signaling from the base station, activated via MAC-CE, dynamically indicated via L1 signaling, notified of via a combination of higher layer signaling and L1 signaling, or fixed by a specification statement.
- The higher layer signaling described above may refer to allowing application of all of multiple TCI states. For example, if the UE has received indication or activation of two joint TCI states or two separate sets of TCI states from the base station, the UE may apply both the two joint TCI states or two separate sets of TCI states to the CORESET or CORESET group for which the higher layer signaling is established. In this case, the UE may expect that, only when the UE has been configured with sfnSchemePDCCH, which is higher layer signaling, from the base station, application of all of the multiple TCI states is enabled through the higher layer signaling described above.

The meanings of the higher layer signaling described above may be used in combination.

- For example, a configuration value of the higher layer signaling described above may be one of three possible values, wherein the first possible value may refer to allowing application of the first indicated/activated TCI state among the multiple TCI states, the second possible value may refer to allowing application of the second indicated/activated TCI state among the multiple TCI states, and the third possible value may refer to allowing application of all of the multiple TCI states. In this case, the third possible value of the higher layer signaling described above may be expected to be configured from the base station only when the LTE has received a configuration of sfnSchemePDCCH, which is higher layer signaling, from the base station.
- In another example, a configuration value of the higher layer signaling described above may be one of two possible values, wherein the first possible value may refer to allowing application of the first indicated/activated TCI state among the multiple TCI states, and the second possible value may refer to allowing application of the second indicated/activated TCI state among the multiple TCI states.

When the UE has not received a configuration of the sfnSchemePDCCH, which is higher layer signaling, from the base station and the UE has received an indication of multiple TCI states from the base station, the LTE may apply the first or second TCI state to a specific CORESET or to all CORESETs within a specific CORESET group, depending on the configuration information of the higher layer signaling described above.

When the UE has received a configuration of the sfnSchemePDCCH, which is higher layer signaling, from the base station and the LTE received an indication of multiple TCI states from the base station, the UE may apply the multiple TCI states to a specific CORESET or all CORESETs within a specific CORESET group regardless of the configuration information of the higher layer signaling described above.

When the UE has received an indication of the sfnSchemePDCCH, which is higher layer signaling, from the base station and the LTE has received an indication of multiple TCI states from the base station, the LTE may, by using information on switching between a single TRP and a multi-TRP indicated by a new field in DCI, if the new field indicates a single-TRP transmission, apply either the first or second TCI state, depending on the configuration information of the higher layer signaling described above, to receive PDCCHs from a specific CORESET or all CORESETs within a specific CORESET group. Further, if the new field indicates a multi-TRP transmission, the LTE may apply multiple TCI states, regardless of the configuration information of the higher layer signaling described above, to use for reception of PDCCHs from a specific set of control resources or from all CORESETs within a specific group of CORESETs. The new field may be a field used for PDSCH, or may be a separate field from the field used for PDSCH.

In all of the above cases, if the UE has received a configuration of the higher layer signaling described above from the base station, and the UE has received an indication of one TCI state from the base station, the UE may use at least one combination of the following.

- The LTE may apply the indicated one TCI state to a specific CORESET or to all CORESETs within a specific CORESET group, regardless of the higher layer signaling configuration information described above (i.e., regardless of whether the configuration information indicates to apply the first, second, or specific Nth TCI state among the indicated multiple TCI states, or to apply all TCI states of the multiple TCI states).
- When the higher layer signaling described above that the UE has received from the base station does not refer to allowing application of all of the multiple TCI states (i.e., indicating to apply the first, second, or specific Nth TCI state among the indicated multiple TCI states), the UE may apply the one TCI state indicated by the base station. When the above-described higher layer signaling, a configuration of which is received by the UE from the base station, indicates to apply all of multiple TCI states, the LTE may ignore one TCI state indicated by the base station without applying the same. In other words, if the higher layer signaling indicates to apply the multiple TCI states only when the UE receives multiple TCI states from the base station, the UE may change multiple TCI states, which will be applied to a specific CORESET or all CORESETs within a specific CORESET group by the higher layer signaling.
- Among values configurable for the higher layer signaling described above, a configuration value referring to allowing application all the multiple TCI states may have two meanings. The first one may refer to allowing application of all the multiple TCI states, and at the same time, may refer to allowing application of one TCI state when one TCI state is indicated (i.e., depending on the number of TCI states indicated, a UE may use one or multiple TCI states to receive a specific CORESET or all CORESETs within a specific CORESET group). The second one may refer to allowing application of all the multiple TCI states, and at the same time, may refer to ignoring application of a TCI state when only one TCI state is indicated (i.e., the UE may determine to apply the indicated TCI state or not, depending on the number of TCI states indicated, and the UE operation may be defined only for the case in which multiple TCI states are indicated).

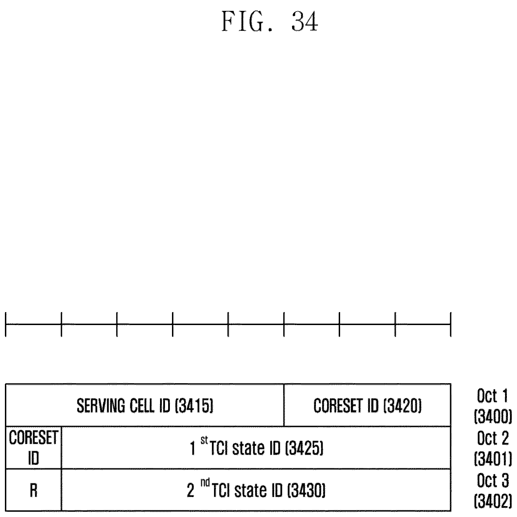

When the higher layer signaling described above is not configured, the UE may not apply the single or multiple TCI states, which have been indicated or activated by the base station via DCI or MAC-CE, during reception of a CORESET or CORESETs within a specific set of CORESETs from which a PDCCH may be detected. In this case, the LTE may activate and/or apply one or two TCI states to receive CORESETs by using information in the MAC-CE notified by the base station during reception of the CORESETs. The MAC-CE that may be used in this case may be the MAC-CE described in FIG. 8 above or the MAC-CE in FIG. 34 below.

- When the LTE has been configured with sfnSchemeA or sfnSchemeB for sfnSchemePDCCH, which is higher layer signaling, the UE may receive the MAC-CEs of FIGS. 9 and 34 from the base station to activate/apply one or more TCI states to a specific CORESET.
- When the UE has not been configured with sfnSchemePDCCH, which is higher layer signaling, the UE may activate/apply one TCI state to a specific CORESET by receiving the MAC-CE of FIG. 9 from the base station.

FIG. 34 illustrates an enhanced PDCCH TCI state activation MAC-CE according to an embodiment of the disclosure. In FIG. 34, a third octet 3402 is added to the basic structure of FIG. 8, and here, in relation to the indicated serving cell ID and CORESET index, a 2nd TCI state ID is further indicated to activate a 1st TCI state ID 3425 and second TCI state ID 3430 indicated via the corresponding MAC-CE.

- The MAC-CE of FIGS. 8 and 34 may operate in a Rel-15/16 TCI state framework, or may operate in a Rel-17 unified TCI state framework. The UE may expect to receive one scheme of the Rel-15/16 TCI state framework or the Rel-17 unified TCI state framework, with respect to all cells in a specific band, from the base station via higher layer signaling. In other words, the UE may be configured with tci-StatesToAddModList, which is higher layer signaling, or may be configured with dl-OrJoint-TCIStateList-r17 and/or ul-TCI-StateList-r17 from the base station. When the LTE is configured with the tci-StatesToAddModList from the base station, the LTE may assume that one or more TCI states indicated via the MAC-CE of FIGS. 8 and 34 are indicated from among the TCI states configured in the tci-StatesToAddModList, which is higher layer signaling. When the UE is configured with dl-OrJoint-TCIStateList-r17 and/or ul-TCI-StateList-r17 from the base station, the UE may assume that the one or more TCI states indicated via MAC-CE in FIGS. 8 and 34 are indicated from among the TCI states configured in the dl-OrJoint-TCIStateList-r17, which is higher layer signaling.

- When the LTE is configured with the tci-StatesToAddModList, simultaneousTCI-UpdateList1-r16, and simultaneousTCI-UpdateList2-r16, which are higher layer signaling, from the base station and, if the Serving Cell ID indicated via the corresponding MAC-CE is included in the simultaneousTCI-UpdateList1-r16 or simultaneousTCI-UpdateList2-r16, which is higher layer signaling, or in the list information such as cells or BWPs for simultaneously updating TCIs, the UE simultaneously applies the 1st TCI state ID and 2nd TCI state ID indicated by the MAC-CE to the CORESET index indicated by the corresponding MAC-CE even in relation to cells corresponding to other serving cell IDs included in simultaneousTCI-UpdateList1-r16 or simultaneousTCI-UpdateList2-r16. For example, when the serving cell IDs included in simultaneousTCI-UpdateList1-r16 are 1 to 4, and the serving cell ID, CORESET index, 1st TCI state ID, and 2nd TCI state ID indicated by the base station via the corresponding MAC-CE are 2, 1, 0, and 1, respectively, the UE simultaneously activates TCI state IDs 0 and 1 for CORESET#1 existing in serving cells 1, 3, and 4 through the corresponding MAC-CE.

- When the LTE is configured with the dl-OrJoint-TCIStateList-r17 and/or ul-TCI-StateList-r17, which are higher layer signaling, from the base station, and is configured with the simultaneousU-TCI-UpdateList1-r17, simultaneousU-TCI-UpdateList2-r17, simultaneousU-TCI-UpdateList3-r17, and simultaneousU-TCI-UpdateList4-r17, and if the Serving Cell ID indicated via the corresponding MAC-CE is included in the simultaneousU-TCI-UpdateList1-r17, simultaneousU-TCI-UpdateList2-r17, simultaneousU-TCI-UpdateList3-r17, or simultaneousU-TCI-UpdateList4-r17, which are higher layer signaling, or in the list information of the cells for simultaneously updating TCIs, the UE simultaneously applies the 1st TCI state ID and 2nd TCI state ID indicated by the corresponding MAC-CE to the CORESET index indicated by the corresponding MAC-CE even in relation to the other serving cell IDs included in simultaneousU-TCI-UpdateList1-r17, simultaneousU-TCI-UpdateList2-r17, simultaneousU-TCI-UpdateList3-r17 or simultaneousU-TCI-UpdateList4-r17. Each simultaneousU-TCI-UpdateList may be list information of cells to update TCIs simultaneously for a joint TCI or a separate TCI. One or more pieces of list information of cells for joint TCIs or a separate TCI may be configured for each TCI.

In relation to the above-described higher layer signaling allowing application of a TCI state when multiple TCI states are indicated from the base station, the UE may associate a CORESET, for which the corresponding higher layer signaling is configured, or all CORESETs within a CORESET group, for which the corresponding higher layer signaling is configured, with a UE-specific search space or a Type 3 common search space. In other words, the higher layer signaling described above may not be configured for CORESETs associated with Types 0, 0A, 1, and 2. Alternatively, through the above-described higher layer signaling, only information enabling application of a specific single TCI state may be configured for CORESETs associated with Types 0, 0A, 1, and 2. In other words, it is not possible to configure higher layer signaling allowing application of multiple TCI states. Furthermore, the UE may not expect, from the base station, the above-described higher layer signaling to be configured for the 0th CORESET or a specific CORESET group including the 0th CORESET. Alternatively, the UE may be configured with only information enabling application of a specific single TCI state for the 0th CORESET or a specific CORESET group including the 0th CORESET through the above-described higher layer signaling from the base station. In other words, it is not possible to configure higher layer signaling allowing application of multiple TCI states.

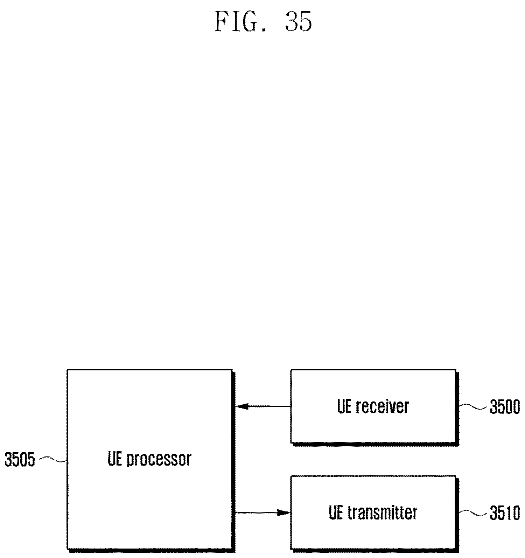

FIG. 35 illustrates the structure of a UE in a wireless communication system according to an embodiment of the disclosure.

Referring to FIG. 35, the LTE may include a transceiver, which refers to a LTE receiver 3500 and a UE transmitter 3510 as a whole, a memory (not illustrated), and a UE processor 3505 (or UE controller or processor). The UE transmitter and receiver 3500 and 3510, the memory, and the UE processor 3505 may operate according to the above-described communication methods of the UE. Components of the UE are not limited to the above-described example. For example, the UE may include a larger or smaller number of components than the above-described components. Furthermore, the transceiver, the memory, and the processor may be implemented as a single chip.

The transceiver may transmit/receive signals with the base station. The signals may include control information and data. To this end, the transceiver may include an RF transmitter configured to up-convert and amplify the frequency of transmitted signals, an RF receiver configured to low-noise-amplify received signals and down-convert the frequency thereof, and the like. This is only an embodiment of the transceiver, and the components of the transceiver are not limited to the RF transmitter and the RF receiver.

In addition, the transceiver may receive signals through a radio channel, output the same to the processor, and transmit signals output from the processor through the radio channel.

The memory may store programs and data necessary for operations of the UE. In addition, the memory may store control information or data included in signals transmitted/received by the UE. The memory may include storage media such as a ROM, a RAM, a hard disk, a CD-ROM, and a DVD, or a combination of storage media. In addition, the UE may include multiple memories.

In addition, the processor may control a series of processes so that the UE can operate according to the above-described embodiments. For example, the processor may control components of the LTE so as to receive DCI configured in two layers such that multiple PDSCHs are received simultaneously. The UE may include multiple processors, and the processors may perform the LTE's component control operations by executing programs stored in the memory.

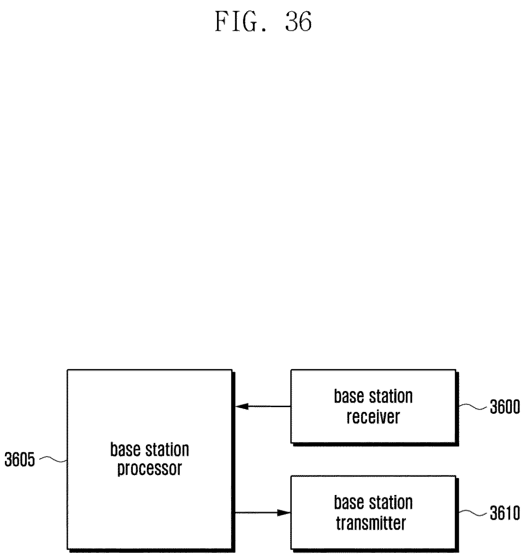

FIG. 36 illustrates the structure of a base station in a wireless communication system according to an embodiment of the disclosure.

Referring to FIG. 36, the base station may include a transceiver, which refers to a base station receiver 3600 and a base station transmitter 3610 as a whole, a memory (not illustrated), and a base station processor 3605 (or base station controller or processor). The base station receiver and transmitter 3600 and 3610, the memory, and the base station processor 3605 may operate according to the above-described communication methods of the base station. Components of the base station are not limited to the above-described example. For example, the base station may include a larger or smaller number of components than the above-described components. Furthermore, the transceiver, the memory, and the processor may be implemented as a single chip.

The transceiver may transmit/receive signals with the UE. The signals may include control information and data. To this end, the transceiver may include an RF transmitter configured to up-convert and amplify the frequency of transmitted signals, an RF receiver configured to low-noise-amplify received signals and down-convert the frequency thereof, and the like. This is only an embodiment of the transceiver, and the components of the transceiver are not limited to the RF transmitter and the RF receiver.

In addition, the transceiver may receive signals through a radio channel, output the same to the processor, and transmit signals output from the processor through the radio channel.

The memory may store programs and data necessary for operations of the base station. In addition, the memory may store control information or data included in signals transmitted/received by the base station. The memory may include storage media such as a ROM, a RAM, a hard disk, a CD-ROM, and a DVD, or a combination of storage media. In addition, the base station may include multiple memories.

The processor may control a series of processes so that the base station can operate according to the above-described embodiments of the disclosure. For example, the processor may control components of the base station so as to configure DCI configured in two layers including allocation information regarding multiple PDSCHs and to transmit the same. The base station may include multiple processors, and the processors may perform the base station's component control operations by executing programs stored in the memory.

Methods disclosed in the claims and/or methods according to the embodiments described in the specification of the disclosure may be implemented by hardware, software, or a combination of hardware and software.

When the methods are implemented by software, a computer-readable storage medium for storing one or more programs (software modules) may be provided. The one or more programs stored in the computer-readable storage medium may be configured for execution by one or more processors within the electronic device. The at least one program may include instructions that cause the electronic device to perform the methods according to various embodiments of the disclosure as defined by the appended claims and/or disclosed herein.

These programs (software modules or software) may be stored in nonvolatile memories including a random access memory and a flash memory, a read only memory (ROM), an electrically erasable programmable read only memory (EEPROM), a magnetic disc storage device, a compact disc-ROM (CD-ROM), digital versatile discs (DVDs), or other type optical storage devices, or a magnetic cassette. Alternatively, any combination of some or all of them may form a memory in which the program is stored. Furthermore, a plurality of such memories may be included in the electronic device.

Moreover, the programs may be stored in an attachable storage device which may access the electronic device through communication networks such as the Internet, Intranet, Local Area Network (LAN), Wide LAN (WLAN), and Storage Area Network (SAN) or a combination thereof. Such a storage device may access the electronic device via an external port. Furthermore, a separate storage device on the communication network may access a portable electronic device.

In the above-described detailed embodiments of the disclosure, an element included in the disclosure is expressed in the singular or the plural according to presented detailed embodiments. However, the singular form or plural form is selected appropriately to the presented situation for the convenience of description, and the disclosure is not limited by elements expressed in the singular or the plural. Therefore, either an element expressed in the plural may also include a single element or an element expressed in the singular may also include multiple elements.

The embodiments of the disclosure described and shown in the specification and the drawings are merely specific examples that have been presented to easily explain the technical contents of embodiments of the disclosure and help understanding of embodiments of the disclosure, and are not intended to limit the scope of embodiments of the disclosure. That is, it will be apparent to those skilled in the art that other variants based on the technical idea of the disclosure may be implemented. Furthermore, the above respective embodiments may be employed in combination, as necessary. For example, one embodiment of the disclosure may be partially combined with other embodiments to operate a base station and a terminal. As an example, embodiment 1 and 2 of the disclosure may be combined with each other to operate a base station and a terminal. Moreover, although the above embodiments have been described based on the FDD LTE systems, other variants based on the technical idea of the embodiments may also be implemented in other systems such as TDD LTE, 5G, or NR systems.

In the drawings in which methods of the disclosure are described, the order of the description does not always correspond to the order in which steps of each method are performed, and the order relationship between the steps may be changed or the steps may be performed in parallel.

Alternatively, in the drawings in which methods of the disclosure are described, some elements may be omitted and only some elements may be included therein without departing from the essential spirit and scope of the disclosure.

Furthermore, in methods of the disclosure, some or all of the contents of each embodiment may be combined without departing from the essential spirit and scope of the disclosure.

Various embodiments of the disclosure have been described above. The above description of the disclosure has been given by way of example, and embodiments of the disclosure are not limited to the embodiments disclosed herein. Those skilled in the art will appreciate that other specific modifications and changes may be easily made to the disclosure without departing from the technical idea or essential features of the disclosure. The scope of the disclosure is defined by the appended claims, rather than the above detailed description, and the scope of the disclosure should be construed to include all changes or modifications derived from the meaning and scope of the claims and equivalents thereof.

**Claims**

1. A method performed by a terminal in a communication system, the method comprising:

   receiving signaling indicating multiple unified transmission configuration indication (TCI) states from a base station;
   receiving, from the base station via higher layer signaling, information indicating that one TCI state among the multiple unified TCI states for a control resource set (CORESET) is applied;
   based on the information, identifying which unified TCI state is applied to a specific CORESET;
   receiving a physical downlink control channel (PDCCH) from the specific CORESET based on the applied unified TCI state; and
   transmitting and receiving data based on downlink control information (DCI), which has been received on the PDCCH based on the applied unified TCI state.

2. The method of claim 1, wherein the information is configured for a CORESET or a CORESET group including one or more CORESETs.

3. The method of claim 1, wherein the multiple unified TCI states are configured for the terminal by higher layer signaling and/or DCI.

4. The method of claim 1, wherein the information further indicates that all of the multiple unified TCI states are applied to the specific CORESET.

5. A method performed by a base station in a communication system, the method comprising:

   transmitting signaling indicating multiple unified transmission configuration indication (TCI) states to a terminal; and
   transmitting, to the terminal via higher layer signaling, information indicating that one TCI state among the multiple unified TCI states for a control resource set (CORESET) is applied,
   wherein, based on the information, which unified TCI state is applied to a specific CORESET is identified,
   wherein, based on the applied unified TCI state, a physical downlink control channel (PDCCH) is received from the specific CORESET, and
   wherein data is transmitted and received based on downlink control information (DCI), which has been received on the PDCCH based on the applied unified TCI state.

6. The method of claim 5, wherein the information is configured for a CORESET or a CORESET group including one or more CORESETs.

**7.** The method of claim 5, wherein the multiple unified TCI states are configured for the terminal by higher layer signaling and/or DCI.

**8.** The method of claim 5, wherein the information further indicates that all of the multiple unified TCI states are applied to the specific CORESET.

**9.** A terminal in a communication system, the terminal comprising:

a transceiver; and
a controller configured to perform control to
receive signaling indicating multiple unified transmission configuration indication (TCI) states from a base station,
receive, from the base station via higher layer signaling, information indicating that one TCI state among the multiple unified TCI states for a control resource set (CORESET) is applied,
based on the information, identify which unified TCI state is applied to a specific CORESET,
receive a physical downlink control channel (PDCCH) from the specific CORESET based on the applied unified TCI state, and
transmit and receive data based on downlink control information (DCI), which has been received on the PDCCH based on the applied unified TCI state.

**10.** The terminal of claim 9, wherein the information is configured for a CORESET or a CORESET group including one or more CORESETs.

**11.** The terminal of claim 9, wherein the multiple unified TCI states are configured for the terminal by higher layer signaling and/or DCI.

**12.** The terminal of claim 9, wherein the information further indicates that all of the multiple unified TCI states are applied to the specific CORESET.

**13.** A base station in a communication system, the base station comprising:

a transceiver; and
a controller configured to perform control to
transmit signaling indicating multiple unified transmission configuration indication (TCI) states to a terminal, and
transmit, to the terminal via higher layer signaling, information indicating that one TCI state among the multiple unified TCI states for a control resource set (CORESET) is applied,
wherein, based on the information, which unified TCI state is applied to a specific CORESET is identified,
wherein, based on the applied unified TCI state, a physical downlink control channel (PDCCH) is received from the specific CORESET, and
wherein data is transmitted and received based on downlink control information (DCI), which has been received on the PDCCH based on the applied unified TCI state.

**14.** The base station of claim 13, wherein the information is configured for a CORESET or a CORESET group including one or more CORESETs.

**15.** The base station of claim 13, wherein the information further indicates that all of the multiple unified TCI states are applied to the specific CORESET.

# FIG. 1

One subframe [110]

$N_{symb}^{subframe,\mu}$ OFDM symbols

1 OFDM symbols [102]

1 subcarrier [103]

$K = N_{RB,x}^{max,\mu} N_{sc}^{RB} - 1$

$N_{RB}^{\mu} N_{sc}^{RB}$ subcarriers

Resource block $N_{sc}^{RB}$ subcarriers [104]

Resource element [k,l] [101]

Frequency

$K = 0$

$\bar{l} = 0$

$\bar{l} = 14 \cdot 2^{\mu} - 1$

Time

# FIG. 2

# FIG. 3

# FIG. 4

# FIG. 5

1 symbol
(501)

DMRS
(505)

1 PRB
(502)

CCE
(504)

REG
(503)

FIG. 6

# FIG. 7

RRC configured TCI states (700)

| TCI #0 (705) | TCI #1 (710) | TCI #2 (715) | ... | TCI #N (720) |

A list of TCI states for a CORESET (725)

| TCI #a (730) | TCI #b (735) | ... | TCI #n (740) |

TCI indication via MAC CE (745)

FIG. 8

| Serving Cell ID (815) | CORESET ID (820) | Oct 1 (800) |
| CORE SET ID | TCI state ID (825) | Oct 2 (805) |

# FIG. 9

FIG. 10

FIG. 11

EP 4 444 006 A1

# FIG. 12

S
(1200)

L (1205)

| 0 | 1 | 2 | 3 | 4 | 5 | 6 | 7 | 8 | 9 | 10 | 11 | 12 | 13 |

OFDM symbol

$$\text{Slot} \left\lfloor n \cdot \frac{2^{\mu_{PDSCH}}}{2^{\mu_{PDCCH}}} \right\rfloor + K_0 \quad (1210)$$

# FIG. 13

[1300]

$\mu_{PDCCH} = 1$

PDCCH

Slot n — Slot n + 1 — · · ·

$\mu_{PDSCH} = 1$

PDSCH

· · ·

Slot n + $K_0$

[1305]

$\mu_{PDCCH} = 1$

PDCCH

Slot n — Slot n + 1 — · · ·

$\mu_{PDSCH} = 2$

PDSCH

Slot $\left\lfloor n \cdot \dfrac{2^{\mu_{PDSCH}}}{2^{\mu_{PDCCH}}} \right\rfloor$

· · ·

Slot $\left\lfloor n \cdot \dfrac{2^{\mu_{PDSCH}}}{2^{\mu_{PDCCH}}} \right\rfloor + K_0$

FIG. 14A

RRC configured TCI states

1400

TCI #0 | TCI #1 | TCI #2 | TCI #3 | · · · | TCI #M-1

MAC-CE activated TCI states for PDSCH

1420

TCI #0' | TCI #1' | TCI #2' | · · · | TCI #K-1

MAC CE based beam indication

TCI state for PDSCH

1440

TCI #I — DCI based beam selection

# FIG. 14B

**MAC-CE structure**

| CORESET Pool ID | Serving Cell ID | | | | | BWP ID | | |
|---|---|---|---|---|---|---|---|---|
| | $T_7$ | $T_6$ | $T_5$ | $T_4$ | $T_3$ | $T_2$ | $T_1$ | $T_0$ |
| | $T_{15}$ | $T_{14}$ | $T_{13}$ | $T_{12}$ | $T_{11}$ | $T_{10}$ | $T_9$ | $T_8$ |

1455 → Oct 1

1450 — Oct 2, Oct 3

. . .

| $T_{(N-2)\times8+7}$ | $T_{(N-2)\times8+6}$ | $T_{(N-2)\times8+5}$ | $T_{(N-2)\times8+4}$ | $T_{(N-2)\times8+3}$ | $T_{(N-2)\times8+2}$ | $T_{(N-2)\times8+1}$ | $T_{(N-2)\times8}$ |
|---|---|---|---|---|---|---|---|

Oct N

# FIG. 15

slot

Actual repetition (1503)

| D | D | D | S | U | D | D | S | U | U | D | D | D | S | U | D | D | S | U | U |
|---|---|---|---|---|---|---|---|---|---|---|---|---|---|---|---|---|---|---|---|
|   |   |   |   | 14 |   |   | 5 | 5 | 14 |   |   |   |   | 14 |   |   | 5 | 5 | 14 |

nominal repetition (1501):

| 1 | 2 | 3 | 4 | 5 | 6 | 7 | 8 | 9 | 10 | 11 | 12 | 13 | 14 | 15 | 16 |
|---|---|---|---|---|---|---|---|---|----|----|----|----|----|----|----|

Invalid symbol pattern (1502):

| 0 | 0 | 0 | 0 | 0 | 1 | 1 | 1 | 1 | 1 | 1 | 1 | 1 | 1 |
|---|---|---|---|---|---|---|---|---|---|---|---|---|---|

Frequency

Time

EP 4 444 006 A1

# FIG. 16

EP 4 444 006 A1

FIG. 17

## FIG. 18

| Control information for TRP #0 | — | DCI #0 |
| Control information for TRP #1 | — | DCI #1 |
| ⋮ | | ⋮ |
| Control information for TRP #(N-1) | — | DCI #(N-1) |

Case #1 (1800)

| Control information for TRP #0 | — | DCI #0 |
| Control information for TRP #1 | — | sDCI #0 |
| ⋮ | | ⋮ |
| Control information for TRP #(N-1) | — | sDCI #(N-2) |

Case #2 (1805)

| Control information for TRP #0 | — | DCI |
| Control information for TRP #1 | — | sDCI |
| ⋮ | | |
| Control information for TRP #(N-1) | | |

Case #3 (1810)

| Control information for TRP #0 | | |
| Control information for TRP #1 | — | Long DCI |
| ⋮ | | ⋮ |
| Control information for TRP #(N-1) | | |

Case #4 (1815)

EP 4 444 006 A1

# FIG. 19

| | | | |
|---|---|---|---|
| R | Serving Cell ID | BWP ID | Oct 1 |
| $C_0$ | TCI state $ID_{0,1}$ | | Oct 2 |
| R | TCI state $ID_{0,2}$ | | Oct 3 (Optional) |

1905 → $C_0$
1910 → R
1915

. . .

| | | |
|---|---|---|
| $C_N$ | TCI state $ID_{N,1}$ | Oct M-1 |
| R | TCI state $ID_{N,2}$ | Oct M (Optional) |

FIG. 20

| S | Serving Cell ID | BWP ID | Oct 1 |
|---|---|---|---|
| R | TCI state ID$_0$ | | Oct 2 |
| R | TCI state ID$_1$ | | Oct 3 (Optional) |

. . .

| R | TCI state ID$_{N-1}$ | | Oct N (Optional) |

2000, 2005, 2010, 2015, 2025

# FIG. 21

| | | | | | | 2105 | | 2110 | | |
|---|---|---|---|---|---|---|---|---|---|---|

| 2100 | S | Serving Cell ID | | | | | | BWP ID | | Oct 1 |
|---|---|---|---|---|---|---|---|---|---|---|
| 2115 | $T_7$ | $T_6$ | $T_5$ | $T_4$ | $T_3$ | $T_2$ | $T_1$ | $T_0$ | | Oct 2 |
| | $T_{15}$ | $T_{14}$ | $T_{13}$ | $T_{12}$ | $T_{11}$ | $T_{10}$ | $T_9$ | $T_8$ | | Oct 3 |

· · ·

| $T_{(N-2)\times 8+7}$ | $T_{(N-2)\times 8+6}$ | $T_{(N-2)\times 8+5}$ | $T_{(N-2)\times 8+4}$ | $T_{(N-2)\times 8+3}$ | $T_{(N-2)\times 8+2}$ | $T_{(N-2)\times 8+1}$ | $T_{(N-2)\times 8}$ | Oct N |
|---|---|---|---|---|---|---|---|---|

# FIG. 22

| S | Serving Cell ID | | BWP ID | Oct 1 |
|---|---|---|---|---|
| R | TCI state ID$_0$ | | | Oct 2 (Optional) |
| T$_7$ | T$_6$ | T$_5$ | T$_4$ | T$_3$ | T$_2$ | T$_1$ | T$_0$ | Oct 3 (Optional) |
| T$_{15}$ | T$_{14}$ | T$_{13}$ | T$_{12}$ | T$_{11}$ | T$_{10}$ | T$_9$ | T$_8$ | Oct 4 (Optional) |

. . .

| T$_{(N-2)x8+7}$ | T$_{(N-2)x8+6}$ | T$_{(N-2)x8+5}$ | T$_{(N-2)x8+4}$ | T$_{(N-2)x8+3}$ | T$_{(N-2)x8+2}$ | T$_{(N-2)x8+1}$ | T$_{(N-2)x8}$ | Oct N+1 (Optional) |

# FIG. 23

# FIG. 24

| 2400 | S | Serving Cell ID | | BWP ID | Oct 1 |
|---|---|---|---|---|---|
| 2415 | $C_{D,0}$ | TCI state $ID_{D,0}$ | | | Oct 2 |
| 2420 | $C_{U,0}$ | TCI state $ID_{U,0}$ | | | Oct 3 |

2405   2410

2425   2430

. . .

| $C_{D,N-1}$ | TCI state $ID_{D,N-1}$ | Oct M-1 (Optional) |
|---|---|---|
| $C_{U,N-1}$ | TCI state $ID_{U,N-1}$ | Oct M (Optional) |

# FIG. 25

| | | | |
|---|---|---|---|
| 2500 → | S | Serving Cell ID 〜2505 | BWP ID 〜2510 | Oct 1 |
| 2515 → | $C_{0,0}$ | TCI state $ID_{0,0}$ | | Oct 2 |
| 2520 → | $C_{1,0}$ | TCI state $ID_{1,0}$ | | Oct 3 |

2525   2530   . . .

| | | |
|---|---|---|
| $C_{0,N-1}$ | TCI state $ID_{0,N-1}$ | Oct M-1 (Optional) |
| $C_{1,N-1}$ | TCI state $ID_{1,N-1}$ | Oct M (Optional) |

# FIG. 26

| | | | | | | | | |
|---|---|---|---|---|---|---|---|---|

| | | | 2605 | 2610 |
|---|---|---|---|---|

2600 — | S | Serving Cell ID | BWP ID | Oct 1

2615 — | $C_0$ | TCI state $ID_{U,0}$ | Oct 2

2621 — | R | TCI state $ID_{D,0}$ | Oct 3 (Optional)

2620    2625

. . .

| $C_{N-1}$ | TCI state $ID_{U,N-1}$ | Oct M-1 (Optional)

| R | TCI state $ID_{D,N-1}$ | Oct M (Optional)

# FIG. 27

| J | Serving Cell ID | | BWP ID | Oct 1 |
|---|---|---|---|---|
| $C_{0,0}$ | TCI state $ID_{0,0}$ | | | Oct 2 |
| $C_{1,0}$ | TCI state $ID_{1,0}$ | | | Oct 3 (Optional) |

2705  2710

2700  2715  2720

2725  2727

. . .

| $C_{0,N-1}$ | TCI state $ID_{0,N-1}$ | Oct M-1 |
|---|---|---|
| $C_{1,N-1}$ | TCI state $ID_{1,N-1}$ | Oct M (Optional) |

# FIG. 28

# FIG. 29

By using DCI format 1_1, 1_2 with DL assignment

By using DCI format 1_1, 1_2 without DL assignment

EP 4 444 006 A1

# FIG. 30

| | | | |
|---|---|---|---|
| S | Serving Cell ID | BWP ID | Oct 1 |
| $C_0$ | TCI state $ID_{0,0}$ | | Oct 2 |
| R | TCI state $ID_{1,0}$ | | Oct 3 (Optional) |

. . .

| | | |
|---|---|---|
| $C_N$ | TCI state $ID_{0,N}$ | Oct M-1 (Optional) |
| R | TCI state $ID_{1,N}$ | Oct M (Optional) |

3000, 3005, 3010, 3015, 3020, 3025

# FIG. 31

| | | | | |
|---|---|---|---|---|
| S | Serving Cell ID | | BWP ID | Oct 1 |
| $C_0$ | | TCI state ID$_{D,0,0}$ | | Oct 2 |
| TCI state ID$_{D,0,0}$ | TCI state ID$_{U,0,0}$ | | | Oct 3 |
| R | TCI state ID$_{D,1,0}$ | | | Oct 4 (Optional) |
| R | TCI state ID$_{U,1,0}$ | | | Oct 5 (Optional) |

3100, 3105, 3110, 3115, 3120, 3121, 3125, 3130, 3135

. . .

| | | | |
|---|---|---|---|
| $C_N$ | TCI state ID$_{D,0,N}$ | | Oct M-3 |
| TCI state ID$_{D,0,N}$ | TCI state ID$_{U,0,N}$ | | Oct M-2 |
| R | TCI state ID$_{D,1,N}$ | | Oct M-1 (Optional) |
| R | TCI state ID$_{U,1,N}$ | | Oct M (Optional) |

# FIG. 32

| | | | |
|---|---|---|---|
| S | Serving Cell ID | BWP ID | Oct 1 |
| $C_{U,0}$ | $TCI\ state\ ID_{U,0,0}$ | | Oct 2 |
| $C_{D,0}$ | $TCI\ state\ ID_{U,1,0}$ | | Oct 3 |
| R | $TCI\ state\ ID_{D,0,0}$ | | Oct 4 (Optional) |
| R | $TCI\ state\ ID_{D,1,0}$ | | Oct 5 (Optional) |

3200 — 3205 — 3210 — 3215 — 3220 — 3221 — 3225 — 3230 — 3232

. . .

| | | |
|---|---|---|
| $C_{U,N}$ | $TCI\ state\ ID_{U,0,N}$ | Oct M-3 |
| $C_{D,N}$ | $TCI\ state\ ID_{U,1,N}$ | Oct M-2 |
| R | $TCI\ state\ ID_{D,0,N}$ | Oct M-1 (Optional) |
| R | $TCI\ state\ ID_{D,1,N}$ | Oct M (Optional) |

FIG. 33

# FIG. 34

| SERVING CELL ID (3415) | | CORESET ID (3420) | Oct 1 (3400) |
|---|---|---|---|
| CORESET ID | 1 $^{st}$ TCI state ID (3425) | | Oct 2 (3401) |
| R | 2 $^{nd}$ TCI state ID (3430) | | Oct 3 (3402) |

# FIG. 35

3505 — UE processor

UE receiver — 3500

UE transmitter — 3510

FIG. 36

<table>
<tr><td colspan="2" align="center"><b>INTERNATIONAL SEARCH REPORT</b></td><td colspan="2">International application No.<br><br><b>PCT/KR2022/019805</b></td></tr>
</table>

| A. | CLASSIFICATION OF SUBJECT MATTER |
|---|---|

**H04W 72/04**(2009.01)i

According to International Patent Classification (IPC) or to both national classification and IPC

| B. | FIELDS SEARCHED |
|---|---|

Minimum documentation searched (classification system followed by classification symbols)

H04W 72/04(2009.01); H04B 7/06(2006.01); H04B 7/08(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: multiple TCI states, CORESET, TCI, mappling, high layer signaling, PDCCH, PDSCH

| C. | DOCUMENTS CONSIDERED TO BE RELEVANT |
|---|---|

| Category* | Citation of document, with indication, where appropriate, of the relevant passages | Relevant to claim No. |
|---|---|---|
| A | MEDIATEK INC. Support of Inter-cell Beam Management and Multi-TRP Operations. R2-2110976, 3GPP TSG-RAN WG2 Meeting #116-e. 22 October 2021.<br>See sections 2-2.2.3; and figure 4. | 1-15 |
| A | SAMSUNG. MAC Running CR for Rel-17 feMIMO. R2-2111662, 3GPP TSG-RAN2 Meeting #116-e. 02 December 2021.<br>See sections 5.18.5 and 6.1.3.YY. | 1-15 |
| A | NOKIA. Introduction of further enhancements on MIMO for NR. R1-2112949, 3GPP TSG-RAN WG1 Meeting #107-e. 08 December 2021.<br>See section 5.1.5. | 1-15 |
| A | CATT. Remaining issues on Rel-17 HST-SFN deployment. R1-2111225, 3GPP TSG-RAN WG1 Meeting #107-e. 06 November 2021.<br>See sections 3-3.3. | 1-15 |
| A | WO 2021-162431 A1 (SAMSUNG ELECTRONICS CO., LTD.) 19 August 2021 (2021-08-19)<br>See paragraphs [0195]-[0206]; and figure 10. | 1-15 |

☐ Further documents are listed in the continuation of Box C.    ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **17 March 2023** | **20 March 2023** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

## INTERNATIONAL SEARCH REPORT
### Information on patent family members

International application No.

**PCT/KR2022/019805**

| Patent document cited in search report | | | Publication date (day/month/year) | Patent family member(s) | | | Publication date (day/month/year) |
|---|---|---|---|---|---|---|---|
| WO | 2021-162431 | A1 | 19 August 2021 | KR | 10-2021-0103882 | A | 24 August 2021 |